# EUROPÄISCHE PATENTANMELDUNG

(11) **EP 3 875 292 A1**
(43) Veröffentlichungstag der Anmeldung: **08.09.2021**
(21) Anmeldenummer: 21171254.2
(22) Anmeldetag: 31.01.2018
(51) Int. Cl.: B60D 1/62, B60D 1/54, B60D 1/06

(54) **ANHÄNGEKUPPLUNG**

(30) Priorität: 08.02.2017 DE 102017102505
(62) Teilanmeldung aus: 18154423.0
(71) Anmelder: ACPS Automotive GmbH, 74379 Ingersheim (DE)
(72) Erfinder: Recker, Dirk, 71696 Möglingen (DE); Gentner, Wolfgang, 71711 Steinheim (DE)
(74) Vertreter: Hoeger, Stellrecht & Partner Patentanwälte mbB

(57) **Zusammenfassung**

Um eine Anhängekupplung umfassend eine fahrzeugfest an einem Heckbereich einer Fahrzeugkarosserie montierbare Schwenklagereinheit und ein an der Schwenklagereinheit um mindestens eine Schwenkachse verschwenkbar gelagertes Schwenkelement, mit welchem ein eine Kupplungskugel tragender Kugelhals fest verbunden ist, der durch das Verschwenken des Schwenkelements um die mindestens eine Schwenkachse relativ zur Schwenklagereinheit zwischen zwei Endstellungen verschwenkbar ist, von denen eine eine Arbeitsstellung ist, und von denen eine andere eine Ruhestellung ist, derart zu verbessern, dass eine möglichst einfache und eindeutige Erfassung der Lage des Schwenkelements möglich ist, wird vorgeschlagen, dass zur Erfassung mindestens einer Lage des Schwenkelements relativ zur Schwenklagereinheit bezüglich der mindestens einen Schwenkachse ein Sensorsystem vorgesehen ist, welches die Lagen des Schwenkelements relativ zu der fahrzeugfesten Schwenklagereinheit erfasst und eine für die jeweilige Lage des Schwenkelements repräsentative Stellungsinformation erzeugt.

## Beschreibung

Die Erfindung betrifft eine Anhängekupplung umfassend eine fahrzeugfest an einem Heckbereich einer Fahrzeugkarosserie montierbare Schwenklagereinheit und ein an der Schwenklagereinheit um mindestens eine Schwenkachse verschwenkbar gelagertes Schwenkelement, mit welchem ein eine Kupplungskugel tragender Kugelhals fest verbunden ist, der durch Verschwenken des Schwenkelements um die mindestens eine Schwenkachse relativ zur Schwenklagereinheit zwischen zwei Endstellungen verschwenkbar ist, von denen eine eine Arbeitsstellung ist, in welcher der Kugelhals sich im Wesentlichen in einer vertikalen Längsmittelebene der Anhängekupplung erstreckt, die insbesondere im an der Fahrzeugkarosserie montierten Zustand mit der vertikalen Längsmittelebene der Fahrzeugkarosserie zusammenfällt, und von denen eine andere eine Ruhestellung ist, in welcher sich der Kugelhals quer zu der vertikalen Längsmittelebene erstreckt.

Derartige Anhängekupplungen sind aus dem Stand der Technik bekannt.

Bei derartigen Anhängekupplungen erfolgt üblicherweise eine Erfassung der Endstellung über einen der Endstellung oder einen einer in der Endstellung wirksamen Schwenkblockiereinrichtung zugeordneten Tastschalter.

Diese Lösungen haben den Nachteil, dass in einigen Betriebszuständen eine eindeutige Erfassung der Lage des Schwenkelements mit dem Kugelhals nicht möglich ist.

Der Erfindung liegt daher die Aufgabe zugrunde, eine Anhängekupplung der eingangs beschriebenen Art derart zu verbessern, dass eine möglichst einfache und eindeutige Erfassung der Lage des Schwenkelements möglich ist. Diese Aufgabe wird bei einer Anhängekupplung der eingangs beschriebenen Art erfindungsgemäß dadurch gelöst, dass zur Erfassung mindestens einer Lage des Schwenkelements relativ zur Schwenklagereinheit bezüglich der mindestens einen Schwenkachse ein Sensorsystem vorgesehen ist, welches die Lagen des Schwenkelements relativ zu der fahrzeugfesten Schwenklagereinheit erfasst und eine für die jeweilige Lage des Schwenkelements repräsentative Stellungsinformation erzeugt.

Der Vorteil der erfindungsgemäßen Lösung ist darin zu sehen, dass nunmehr die Möglichkeit besteht, mit dem Sensorsystem die Lagen eindeutig und unmittelbar zu erfassen, ohne dass eine indirekte Erfassung der Lage notwendig ist.

Die erfindungsgemäße Lösung ist dabei nicht auf das Erfassen einer Schwenkbewegung um eine einzige Schwenkachse beschränkt, sondern ermöglicht es auch durch das Sensorsystem Schwenkbewegungen um mehrere Schwenkachsen zu erfassen.

Somit ist unter dem Begriff "Lage des Schwenkelements" im einfachsten Fall eine Drehlage um eine Schwenkachse zu verstehen.

In komplexeren Fällen erfolgt eine Durchführung von Schwenkbewegungen um mehrere Schwenkachsen - aufeinanderfolgend und/oder gleichzeitig - und somit ist unter der "Lage des Schwenkelements" die Summe oder die Überlagerung von mehreren Drehlagen um die jeweiligen Schwenkachsen zu verstehen.

Insbesondere ist dabei bei der erfindungsgemäßen Anhängekupplung vorgesehen, dass das Sensorsystem mindestens einen die Arbeitsstellung und die Ruhestellung umfassenden Lagenbereich des Schwenkelements erfasst. Mit dieser erfindungsgemäßen Lösung besteht zumindest die Möglichkeit, nicht nur die Lage des Schwenkelements direkt in der Arbeitsstellung oder direkt in der Ruhestellung zu erfassen, sondern in einem die Arbeitsstellung und die Ruhestellung umfassenden Lagenbereich und somit in einem Schwenkwinkelbereich, der es ermöglicht, auch Abweichungen von der jeweiligen Endstellung zu erfassen.

Beispielsweise ist es mit dieser Lösung möglich, zu erkennen, ob die jeweilige Endstellung tatsächlich erreicht ist oder aufgrund einer Störung das Schwenkelement kurz vor der Endstellung steht oder auch zu erfassen, ob ein Schwenkelement sich aus der jeweiligen Endstellung durch eine geringfügige Schwenkbewegung entfernt hat.

Vorzugsweise ist bei der erfindungsgemäßen Lösung vorgesehen, dass der die jeweilige Endstellung umfassende Lagenbereich die Endlagestellung und einen bis zu dieser Endstellung reichenden Schwenkwinkelbereich umfasst, der eine Winkelausdehnung von bis maximal 10°, vorzugsweise eine Winkelausdehnung von mindestens 10° bis maximal 20° und noch besser eine Winkelausdehnung von mindestens 15° bis maximal 30° aufweist.

Besonders vorteilhaft lässt sich die erfindungsgemäße Lösung jedoch dann einsetzen, wenn das Sensorsystem die Lagen von zwischen der Arbeitsstellung und der Ruhestellung liegenden Zwischenstellungen des Schwenkelements erfasst, so dass auch die Möglichkeit besteht, das Durchlaufen von derartigen Zwischenstellungen, die zwischen der Arbeitsstellung und der Ruhestellung liegen, zu überprüfen.

Besonders optimal ist die erfindungsgemäße Lösung dann, wenn das Sensorsystem die Lagen des Schwenkelements während des Verschwenkens von der Arbeitsstellung bis zur Ruhestellung und umgekehrt erfasst.

Bei der Erfassung der Lagen wäre es grundsätzlich im Rahmen der erfindungsgemäßen Lösung ausreichend, die Lagen in einem gewissen Lagenraster und nicht durchgängig oder kontinuierlich zu erfassen.

Vorzugsweise ist vorgesehen, dass das Sensorsystem die Lagen mit einer Winkelauflösung von besser als 0,5° (Winkelgrad) noch besser 0,2° (Winkelgrad) und vorzugsweise 0,1° (Winkelgrad) erfasst.

Hinsichtlich der Bestimmung der Stellunginformationen, die Aussagen darüber liefern, welche der Endstellungen erreicht ist oder welche Zwischenstellung relativ zu den Endstellungen erreicht ist, beispielsweise welcher Winkelabstand zu einer oder beiden Endstellungen besteht, ist vorzugsweise vorgesehen, dass das Sensorsystem eine Auswerteeinheit umfasst, welche die von der Sensoreinheit erfassten Lagen des Schwenkelements mit Referenzwerten, insbesondere mit durch Lernvorgänge ermittelte und dann abgespeicherten Referenzwerten, vergleicht und daraus die Stellungsinformationen für das Schwenkelement ermittelt.

Beispielsweise umfassen in diesem Zusammenhang die Referenzwerte Winkelinformationen über die Lagen der Endstellungen und somit ausgehend von den Endstellungen Informationen betreffend die Winkelabstände der jeweils erfassten Zwischenstellungen von den Endstellungen.

Somit ist die Auswerteeinheit in der Lage, die die Arbeitsstellung und die Ruhestellung eindeutig anzeigenden Stellungsinformationen zu erzeugen.

Das Erkennen des Spiels in einer der Endstellungen kann über einen Vergleich der Stellungsinformationen auf Referenzwerten erfolgen.

Eine besonders vorteilhafte Lösung sieht vor, dass das Erkennen des Spiels - insbesondere im Fahrbetrieb - über eine Variationsmusteranalyse erfolgt, bei welcher Variationen der Stellungsinformationen ausgewertet werden, wobei eine Auswertung einer Variationsbandbreite und/oder einer Lage der Variationen relativ zu einem exakten Wert für die Endstellung analysiert wird.

Insbesondere zur Überprüfung eines möglicherweise in den Endstellungen auftretenden Spiels ist vorzugsweise vorgesehen, dass die Auswerteeinheit eine Abweichung von einer Endstellung durch eine Variationsmusteranalyse erfasst, bei welcher insbesondere ein als Referenz abgespeichertes Variationsmuster mit einem durch die Stellungsinformationen erhaltenen Variationsmuster verglichen wird.

Ferner ist die Auswerteeinheit somit auch in der Lage, die die zwischen den Endstellungen liegenden Zwischenstellungen eindeutig anzeigenden Stellungsinformationen zu erzeugen.

Eine besonders vorteilhafte Lösung sieht vor, dass die Anhängekupplung mindestens eine motorische Antriebseinheit für die Ausführung der Schwenkbewegung und eine mit der Auswerteeinheit zusammenwirkende und die Stellungsinformationen heranziehende Schwenksteuerung zum Ansteuern der mindestens einen Antriebseinheit umfasst und dass die Schwenksteuerung unter Berücksichtigung der Stellungsinformationen die Antriebseinheit steuert.

Der Vorteil dieser Lösung ist darin zu sehen, dass einerseits die Möglichkeit besteht, durch die mindestens eine motorische Antriebseinheit die Schwenkbewegung motorisch angetrieben auszuführen und dieses motorische Antreiben über die Schwenksteuerung zu steuern, die aufgrund der von der Auswerteeinheit zur Verfügung gestellten Stellungsinformation in der Lage ist, die einzelnen Schwenkstellungen zu identifizieren und entsprechend den erreichten Schwenkstellungen die weitere Schwenkbewegung entsprechend der durchgeführten oder durchzuführenden Schwenkbewegung zu steuern und/oder Schwenkgeschwindigkeiten zu erfassen, so dass dadurch insbesondere die für ein Kraftfahrzeug erforderlichen Sicherheitsanforderungen durch die Schwenksteuerung selbsttätig durchgeführt werden können.

Beispielsweise sieht die erfindungsgemäße Lösung vor, dass die Schwenksteuerung einen Schwenkbetriebsmodus aufweist, in welchem ein Verschwenken des Schwenkelements mit dem Kugelhals von einer der Endstellungen zur anderen Endstellung erfolgt.

Insbesondere arbeitet die Schwenksteuerung dabei so, dass sie ein Anschlagen des Kugelhalses an einem Fremdobjekt erkennt und den Antrieb zum Verschwenken des Kugelhalses in dieser Schwenkstellung anhält oder den Kugelhals mit dem Antrieb in die Endstellung zurückbewegt, von welcher die Schwenkbewegung ausgegangen ist.

Vorzugsweise ist in einem derartigen Schwenkbetriebsmodus vorgesehen, dass die Schwenksteuerung einen die Schwenkbewegung antreibenden Antriebsmotor der mindestens einen Antriebseinheit bei Erreichen der jeweiligen Endstellung als Abschluss eines Einfahrvorgangs in diese Endstellung abschaltet.

Der Vorteil dieser Lösung ist darin zu sehen, dass im Gegensatz zu den bisherigen Lösungen, bei welchen ein Abschalten des die Schwenkbewegung antreibenden Antriebsmotors aufgrund des Motorstroms erfolgt, nunmehr das tatsächliche Erreichen der jeweiligen Endstellung festgestellt und dazu herangezogen werden kann, den Antriebsmotor abzuschalten.

Dies hat im Gegensatz zur Überwachung des Motorstroms des Antriebsmotors zur Abschaltung zur Folge, dass definitiv das Erreichen der Endstellung erkannt werden kann und somit Störungen, die beispielsweise zu einer Blockierung vor Erreichen der Endstellung führen, nicht zum Abschalten des Antriebsmotors führen können.

Eine weitere vorteilhafte Lösung sieht vor, dass die Schwenksteuerung im Schwenkbetriebsmodus im Verlauf des Verschwenkens des Schwenkelements von einer Endstellung zur anderen Endstellung die Antriebseinheit so ansteuert, dass diese das Schwenkelement mit einer vorgegebenen konstanten Geschwindigkeit oder mit entsprechend einem Bewegungsprofil, beispielsweise einem abgespeicherten Bewegungsprofil, vorgegebenen Geschwindigkeiten verschwenkt.

Die Stellungsinformationen können somit von der Schwenksteuerung dazu herangezogen werden, die Antriebssteuerung so anzusteuern, dass diese im einfachsten Fall das Schwenkelement mit der vorgegebenen konstanten Geschwindigkeit dreht, die dadurch geregelt werden kann, dass die Stellungsinformationen über die tatsächliche Lage des Schwenkelements zur Verfügung stehen.

Noch vorteilhafter ist die Lösung, bei welcher die Schwenksteuerung die Antriebseinheit so ansteuert, dass diese das Schwenkelement und den Kugelhals in den unterschiedlichen Schwenkstellungen mit entsprechenden optimierten Geschwindigkeiten bewegt.

Beispielsweise ist es in diesem Falle möglich, die Geschwindigkeit beim Herausfahren aus einer Endstellung bis zur maximalen Geschwindigkeit zu steigern und vor Erreichen der anderen Endstellung wieder so zu reduzieren, dass das Schwenkelement und der Kugelhals nicht mit zu hoher Geschwindigkeit die üblicherweise durch einen Anschlag definierte andere Endstellung erreichen, sondern mit einer derart reduzierten Geschwindigkeit, die ein zu starkes Anschlagen an dem jeweiligen Anschlag für die Endstellung verhindert.

Eine weitere vorteilhafte Ausführungsform der erfindungsgemäßen Lösung sieht vor, dass die Schwenksteuerung durch Vergleich der Stellungsinformation des Schwenkelements mit einem Drehbewegungssignal des Antriebsmotors der mindestens einen Antriebseinheit die Schwenkbewegung und/oder eine Blockierung oder Deblockierung der Schwenkbewegung überwacht.

Der Vorteil dieser Lösung ist darin zu sehen, dass damit eine Korrelation zwischen dem Antriebsmotor und der tatsächlich ausgeführten Funktion hergestellt werden kann.

Insbesondere ist dabei vorgesehen, dass die Schwenksteuerung durch Vergleich der Stellungsinformation des Schwenkelements mit dem Drehbewegungssignal des Antriebsmotors eine Bewegungsrelation ermittelt und mit abgespeicherten Referenzwerten für die Bewegungsrelation vergleicht.

Beispielsweise ist es dabei möglich, dass die Schwenksteuerung bei einem Abweichen von der ermittelten Bewegungsrelation von der vorgegebenen Bewegungsrelation ein Störungssignal erzeugt.

Darüber hinaus sieht eine weitere vorteilhafte Lösung vor, dass die Schwenksteuerung in einem Haltebetriebsmodus betreibbar ist, in welchem die jeweilige Endstellung, insbesondere die Arbeitsstellung oder die Ruhestellung des Schwenkelements, mittels der Schwenksteuerung aufrechterhalten wird. Der Vorteil dieser Lösung ist darin zu sehen, dass damit die Möglichkeit besteht, zu überprüfen ob das Schwenkelement und der Kugelhals beispielsweise in der Arbeitsstellung verbleiben oder aufgrund von Spiel oder anderen Vorgängen die Tendenz haben, die Arbeitsstellung zu verlassen.

Eine derartige Information ist äußerst sicherheitsrelevant und somit durch die erfindungsgemäße Lösung in vorteilhafter Weise erhältlich.

Insbesondere ist hierbei vorgesehen, dass, insbesondere bei noch nicht erfolgter Blockierung, die Schwenksteuerung bei Erhalt der Stellungsinformation, dass die jeweilige Endstellung verlassen wurde, die Antriebseinheit im Sinne eines Verschwenkens in die jeweilige, soeben verlassene Endstellung ansteuert.

Dadurch besteht die Möglichkeit, die jeweilige Endstellung, insbesondere die Arbeitsstellung, sicher aufrechtzuerhalten und somit zuverlässig einen unsicheren Betriebszustand zu vermeiden.

Im Zusammenhang mit der bisherigen Erläuterung der erfindungsgemäßen Anhängekupplung wurde nicht näher ausgeführt, ob und wie eine Blockierung einer Endstellung des Schwenkelements und des Kugelhalses, insbesondere der Arbeitsstellung und der Ruhestellung, erfolgen soll.

Aus diesem Grund sieht eine besonders vorteilhafte Lösung vor, dass die Anhängekupplung eine Schwenkblockiereinrichtung umfasst, dass die Schwenkblockiereinrichtung durch eine Antriebseinheit von einer Blockierstellung in eine Freilaufstellung und umgekehrt bewegbar ist und dass die mit der Auswerteeinheit zusammenwirkende und die Stellungsinformationen heranziehende Schwenksteuerung zur Ansteuerung der Antriebseinheit unter Berücksichtigung der Stellungsinformationen vorgesehen ist.

Somit besteht mit der erfindungsgemäßen Schwenksteuerung auch gleichzeitig die Möglichkeit, die Antriebseinheit der Schwenkblockiereinrichtung anzusteuern, um diese zwischen ihrer Blockierstellung, in welcher eine Blockierung der Schwenkbewegung des Schwenkelements und des Kugelhalses erfolgt, und einer Freilaufstellung, in welcher eine freie Drehbarkeit des Schwenkelements und des Kugelhalses um die Schwenkachse möglich ist, und umgekehrt zu überführen.

Vorzugsweise ist hierbei vorgesehen, dass die Schwenksteuerung in einem Schwenkbetriebsmodus die Antriebseinheit so ansteuert, dass die Schwenkblockiereinrichtung von der Freilaufstellung in die Blockierstellung dann übergeht, wenn die jeweilige Endstellung als Abschluss eines Einfahrvorgangs in diese Endstellung erreicht wird.

Das heißt, dass dadurch mittels der Schwenksteuerung ein selbständiges Überführen der Schwenkblockiereinrichtung von der Freilaufstellung in die Blockierstellung und umgekehrt erfolgt und somit ein Erreichen der jeweiligen Endstellung über die Stellungsinformationen erfasst wird, so dass dann die Blockierung der Schwenkbewegung erfolgt.

Diese Lösung hat gegenüber einer Lösung, bei welcher ein Abschalten des jeweiligen Antriebsmotors für die Durchführung der Schwenkbewegung über das Erfassen der Stromaufnahme erfolgt, den Vorteil, dass durch die Stellungsinformationen definitiv die Information über das Erreichen der jeweiligen Endstellung vorliegt, so dass dadurch auch eine Ansteuerung der Antriebseinheit für die Schwenkblockiereinrichtung zum Übergang von der Freilaufstellung in die Blockierstellung erfolgen kann und somit ein sicherer Betriebszustand in der Endstellung durch Blockierung der Schwenkbewegung zuverlässig erreicht wird.

Weiterhin arbeitet vorzugsweise die Schwenksteuerung so, dass diese in einem Schwenkbetriebsmodus die Schwenkblockiereinrichtung so lange in der Freilaufstellung hält, bis das Schwenkelement eine der Endstellungen erreicht hat.

Eine weitere vorteilhafte Lösung sieht vor, dass die Schwenksteuerung in einem Haltebetriebsmodus bei Erhalt der Stellungsinformation, dass in der jeweiligen Endstellung ein Spiel vorliegt, die Antriebseinheit für die Schwenkblockiereinrichtung derart ansteuert, dass die Schwenkblockiereinrichtung in Richtung ihrer Blockierstellung in der jeweiligen Endstellung angetrieben wird.

Bei dieser Lösung besteht somit die Möglichkeit, beispielsweise beim Auftreten eines Spiels oder einer Lockerung der Blockierung des Schwenkelements und des Kugelhalses, insbesondere in der Arbeitsstellung, dieses Spiel oder die Lockerung der Blockierung zu erkennen und durch erneutes Antreiben der Schwenkblockiereinrichtung diese wiederum in einen das Spiel beseitigenden Blockierzustand zu überführen.

Eine weitere vorteilhafte Lösung sieht vor, dass die Anhängekupplung eine Schwenkblockiereinrichtung zur Fixierung des Kugelhalses in den Endstellungen umfasst und dass die Schwenkblockiereinrichtung durch eine Antriebseinheit von einer Blockierstellung in eine Freigabestellung und von der Freigabestellung in eine Blockierbereitschaftsstellung überführbar ist und dass die mit der Auswerteeinheit zusammenwirkende und die Stellungsinformationen heranziehende Schwenksteuerung zur Ansteuerung der Antriebseinheit unter Berücksichtigung der Stellungsinformationen vorgesehen ist.

Eine derartige Lösung ist insbesondere für all die Fälle vorgesehen, in welchen der Betätigungskörper durch einen elastischen Kraftspeicher von der Freigabestellung in Richtung der Blockierstellung beaufschlagt ist und durch den elastischen Kraftspeicher in der Blockierstellung ständig beaufschlagt bleibt. In diesem Fall dient die Antriebseinheit dazu, den Betätigungskörper von der Blockierstellung entgegengesetzt zur Kraftwirkung des elastischen Kraftspeichers in die Freigabestellung zu bewegen. Sobald die Wirkung der Schwenkblockiereinrichtung aufgehoben ist, kann der Kugelhals bewegt werden und bei Erreichen der Endstellung erfolgt ein Bewegen des Betätigungskörpers der Schwenkblockiereinrichtung durch den elastischen Kraftspeicher, wobei die Antriebseinheit in eine Bereitschaftsstellung übergeht, in welcher sie den Übergang von der Freigabestellung in die Blockierstellung durch Bewegen des Betätigungskörpers mittels des elastischen Kraftspeichers zulässt.

Besonders bevorzugt ist eine Lösung, bei welcher die Schwenksteuerung in einem Bewegungsbetriebsmodus während der Bewegung des Kugelhalses zwischen den Endstellungen die Schwenkblockiereinrichtung in die Blockierbereitschaftsstellung bewegt, aus welcher die Schwenkblockiereinrichtung selbsttätig in die Blockierstellung übergeht, insbesondere dadurch, dass der elastische Kraftspeicher auf den Betätigungskörper wirkt.

Eine weitere Vorteilhafte Lösung sieht vor, dass die Schwenksteuerung eine Hemmvorrichtung der Schwenkblockiereinrichtung ansteuert.

Eine derartige Hemmvorrichtung dient dazu, einzelne Schwenkzustände der Schwenkblockiereinrichtung aufrechtzuerhalten, insbesondere dann, wenn das Antreiben der Schwenkbewegung und der Schwenkblockiereinrichtung über ein Planetengetriebe erfolgt, was über eine Antriebseinheit angetrieben ist und zwei Abtriebe aufweist, wobei mit je einem Abtrieb des Planetengetriebes die Schwenkblockiereinrichtung angetrieben wird und mit dem anderen Abtrieb des Planetengetriebes ein Antreiben der Schwenkbewegung erfolgt.

In diesem Fall dient die Hemmvorrichtung dazu, einen Wechsel zwischen dem Antreiben der Schwenkbewegung und dem Antreiben der Schwenkblockiereinrichtung oder umgekehrt, durch die Hemmung eines der Abtriebe, beispielsweise durch Hemmung der Schwenkbewegung, einzuleiten. Hinsichtlich der Ausbildung der Sensorsysteme wurden im Zusammenhang mit den bisherigen Beschreibungen der einzelnen Ausführungsbeispiele keine detaillierten Angaben gemacht.

So sieht eine vorteilhafte Lösung vor, dass das Sensorsystem einen an der Schwenklagereinheit gehaltenen oder mit dem Schwenkelement oder dem Kugelhals mitverschwenkbaren Sensorkopf aufweist, der eine mit dem Schwenkelement oder dem Kugelhals mitschwenkbare beziehungsweise an der Schwenklagereinheit fest angeordnete Positionsstruktur abtastet.

Die Positionsstruktur ist vorzugsweise so ausgebildet, dass sie sich längs eines um die mindestens eine Schwenkachse verlaufenden Kreisbogensegments erstreckt, das dann beim Verschwenken des Schwenkelements mit dem Kugelhals relativ zu dem Sensorkopf bewegbar ist.

Dabei kann beispielsweise die Positionsstruktur eine lokal begrenzte Struktur sein, das heißt eine Struktur, die sich lediglich über einen definierten Lagenbereich, beispielsweise einen einer Endstellung zugeordneten Lagenbereich erstreckt.

Besonders vorteilhaft ist es jedoch, wenn die Positionsstruktur eine fortlaufende Struktur ist, das heißt insbesondere eine Struktur, die sich über den gesamten Lagenbereich von einer Endstellung zur anderen Endstellung erstreckt.

Vorzugsweise ist dabei auch vorgesehen, dass die fortlaufende Struktur von dem Sensorkopf bei der Bewegung des Schwenkelements von der einen Endstellung zur anderen Endstellung erfasst wird, so dass mittels der Positionsstruktur die Möglichkeit besteht, sowohl die Endstellungen als auch Zwischenstellungen zu erfassen.

Hinsichtlich der Ausbildung des Sensorkopfes und der Positionsstruktur oder des diesen zugrundeliegenden Messprinzips sind die unterschiedlichsten Möglichkeiten denkbar.

Grundsätzlich wäre die Möglichkeit denkbar, dass die Positionsstruktur eine optische Struktur ist, die von dem Sensorkopf optisch abgetastet wird, um die Lagen zu erfassen.

Eine derartige optische Struktur hat jedoch den Nachteil, dass diese verschmutzungsanfällig ist.

Aus diesem Grund sieht eine vorteilhafte Lösung vor, dass die Positionsstruktur als magnetfeldbeeinflussende Struktur ausgebildet ist und dass der Sensorkopf Veränderungen eines magnetischen Feldes detektiert, die dadurch erfolgen, dass dieser die in Richtung der Relativbewegung variierende magnetfeldbeeinflussende Struktur abtastet.

In diesem Fall ist beispielsweise der Sensorkopf ein magnetisch vorgespannter, das heißt selbst ein magnetfelderzeugender Sensorkopf, dessen Magnetfeld dann durch die Relativbewegung zu der magnetfeldbeeinflussenden Struktur Variationen erfährt und diese Variationen des Magnetfeldes werden dann von einem Magnetfeldsensor des Sensorkopfes detektiert.

Alternativ dazu ist es aber auch denkbar, eine magnetisch variierende Positionsstruktur vorzusehen, die ein als Magnetfeldsensor ausgebildeter Sensorkopf abtastet.

Alternativ oder ergänzend zum Vorsehen eines Sensorkopfes mit einer Positionsstruktur sieht eine weitere Ausführungsform eines erfindungsgemäßen Sensorsystems vor, dass das Sensorsystem einen mit dem Schwenkelement oder dem Kugelhals mitschwenkbar angeordneten ersten Sensor und eine mit dem ersten Sensor verbundene Auswerteeinheit umfasst, welche zur Bestimmung der Lage des Schwenkelements oder des Kugelhalses Sensorsignale des ersten Sensors mit der jeweiligen Lage zugeordneten Referenzwerten vergleicht und dadurch die Stellungsinformationen für das Schwenkelement erzeugt.

Eine andere vorteilhafte Lösung sieht vor, dass das Sensorsystem einen ersten mit dem Schwenkelement oder dem Kugelhals mitschwenkbar angeordneten Sensor und einen zweiten an der Schwenklagereinheit fest angeordneten Sensor umfasst und dass das Sensorsystem eine mit dem ersten Sensor und dem zweiten Sensor verbundene Auswerteeinheit umfasst, die Differenzwerte der Sensoren erfasst und zur Bestimmung der Lage des Schwenkelements mit abgespeicherten, der jeweiligen Lage zugeordneten Referenzwerten für die Differenzwerte vergleicht und dadurch Stellungsinformationen für das Schwenkelement erzeugt.

Insbesondere sind ein derartiger erster Sensor und gegebenenfalls ein derartiger zweiter Sensor als ihre Ausrichtungen und/oder Bewegungen im Raum erfassende Sensoren ausgebildet, die insbesondere kein an der Anhängekupplung vorzusehendes Referenzelement für die Erfassung der Ausrichtungen und/oder Bewegungen im Raum benötigen.

Die Verwendung derartiger Sensoren hat den Vorteil, dass sich damit in einfacher Weise komplexe Bewegungen, wie insbesondere mehrachsige gleichzeitig erfolgende und/oder aufeinanderfolgende Bewegungen in einfacher Weise erfassen lassen.

Derartige Sensoren könnten beispielsweise sich am Erdmagnetfeld orientierende Sensoren sein.

Der erste Sensor und der zweite Sensor für die vorstehend beschriebenen Lösungen sind vorzugsweise als Neigungssensoren ausgebildet, so dass es bereits zu einer groben Erkennung der Drehstellung ausreichend ist, wenn der erste Sensor mit dem Schwenkelement und/oder dem Kugelhals mitschwenkt und somit eine Schwenkbewegung zwischen der Arbeitsstellung und der Ruhestellung aufgrund der sich verändernden Neigung detektiert.

Da jedoch derartige Neigungssensoren Neigungen relativ zur Schwerkraftrichtung erfassen, ist es besonders vorteilhaft, wenn der erste Sensor und ein zweiter Sensor vorgesehen sind und Differenzwerte zwischen den Sensorsignalen gebildet werden, da in diesem Fall die Neigung der Schwenklagereinheit durch den zweiten Sensor erfasst werden kann und somit die relative Veränderung der Neigung des ersten Sensors zur Schwenklagereinheit erfassbar ist, die ein relativ genaues Maß für die jeweilige Lage des Schwenkelements mit dem Kugelhals relativ zur Schwenklagereinheit ergibt.

Besonders günstig ist es, wenn der erste Sensor und der zweite Sensor als Neigungssensoren betreibbare, Bewegungen im Raum detektierende Sensoren, beispielsweise Beschleunigungssensoren, sind.

Vorzugsweise können die Sensoren dabei so ausgebildet sein, dass sie Neigungen um mindestens eine Neigungsachse erfassen.

Besonders vorteilhaft ist es, wenn die Sensoren Neigungswerte in Bezug auf eine Schwerkraftrichtung als Referenz erfassen.

Dabei werden von der Auswerteeinheit insbesondere zur Bestimmung der Stellungsinformation des Schwenkelements Neigungsdifferenzwerte erfasst, die aus Neigungswerten als Messwerte der Sensoren gebildet werden.

Zur Berechnung der Neigungsdifferenz ist vorzugsweise vorgesehen, dass die Auswerteeinheit in mindestens einer der Endstellungen eine Neigungsdifferenz zwischen einer Neigung des ersten Sensors und einer Neigung des zweiten Sensors erfasst.

Des Weiteren ist es ebenfalls möglich, dass zur Bestimmung der Stellungsinformationen des Schwenkelements basierend auf der ermittelten Neigungsdifferenz ein Verlauf der Neigungswerte des ersten Sensors bei einer Schwenkbewegung von einer Endstellung zur anderen Endstellung ermittelt wird, wobei allerdings in diesem Fall die Anordnung des ersten Sensors relativ zur Schwenkachse und die Anordnung des zweiten Sensors relativ zur Schwenkachse zu berücksichtigen ist, um die Bewegung des kartesischen Koordinatensystems des ersten Sensors um die Schwenkachse relativ zum zweiten Sensor geometrisch bei der Ermittlung der Lagendifferenz zu berücksichtigen.

Eine besonders günstige Lösung sieht vor, dass bei dem ersten Sensor seine für die Neigungserfassung relevante Z-Achse und eine weitere Achse seines kartesischen Koordinatensystems in einer senkrecht zur Schwenkachse verlaufenden Schwenkebene liegen, so dass die Schwenkbewegung nur eine Neigungsänderung in der durch die Z-Achse und die weitere Achse aufgespannten Ebene zur Folge hat.

Ferner ist vorzugsweise vorgesehen, dass bei dem zweiten Sensor seine für die Neigungserfassung relevante Z-Achse und eine weitere Achse seines kartesischen Koordinatensystems parallel zur Schwenkebene ausgerichtet sind, so dass in einfacher Weise die Bestimmung von Neigungsdifferenzwerten möglich ist.

Darüber hinaus sieht eine weitere vorteilhafte Lösung vor, dass die Auswerteeinheit mit mindestens einem der Sensoren, insbesondere dem ersten Sensor, Beschleunigungen erfasst.

Eine derartige Erfassung von Beschleunigungen dient ebenfalls dazu, die Kinematik der Schwenkbewegung zu ermitteln, wobei die Beschleunigungen ergänzend zu den Neigungen oder als alleiniges Maß für die Bewegung ermittelt werden können.

Besonders günstig ist es in diesem Fall, wenn die Auswerteeinheit mit beiden Sensoren Beschleunigungen erfasst.

Eine zweckmäßige Lösung sieht beispielsweise vor, dass die Auswerteeinheit mit dem ersten Sensor Beschleunigungen in einer zur Schwenkachse senkrechten Schwenkebene erfasst, um in einfacher Weise die Dynamik der Schwenkbewegung um die Schwenkachse zu erfassen.

Beispielsweise ist es hierbei denkbar, wenn die Auswerteeinheit Beschleunigungen quer zu einer vertikalen Längsmittelebene und/oder Beschleunigungen parallel zu der vertikalen Längsmittelebene erfasst.

Ferner ist vorzugsweise vorgesehen, dass die Auswerteeinheit Beschleunigungen in horizontaler Richtung und/oder in vertikaler Richtung erfasst.

Die Beschleunigungen lassen sich zur Vervollständigung und/oder Verbesserung der Informationen zu den Neigungen insbesondere durch eine zeitliche Verlaufsmusteranalyse, das heißt eine Analyse der Beschleunigungswerte über der Zeitachse auswerten, um Informationen über den Verlauf der Schwenkbewegung zu erhalten.

Besonders günstig ist es ferner, wenn der Schwenksteuerung eine Visualisierungseinheit zur Anzeige von Betriebsmodi und/oder Betriebszuständen und/oder Störungen zugeordnet ist, so dass dann eine Bedienungsperson die unterschiedlichen Modi und Zustände einfach erkennen kann.

Die vorstehende Beschreibung erfindungsgemäßer Lösungen umfasst somit insbesondere die durch die nachfolgenden durchnummerierten Ausführungsformen definierten verschiedenen Merkmalskombinationen:
1. Anhängekupplung (AK) umfassend eine fahrzeugfest an einem Heckbereich einer Fahrzeugkarosserie montierbare Schwenklagereinheit (20) und ein an der Schwenklagereinheit (20) um mindestens eine Schwenkachse (22) verschwenkbar gelagertes Schwenkelement (14), mit welchem ein eine Kupplungskugel (18) tragender Kugelhals (10) fest verbunden ist, der durch das Verschwenken des Schwenkelements (14) um die mindestens eine Schwenkachse (22) relativ zur Schwenklagereinheit (20) zwischen zwei Endstellungen verschwenkbar ist, von denen eine eine Arbeitsstellung (A) ist, in welcher der Kugelhals (10) sich im Wesentlichen in einer vertikalen Längsmittelebene (LM) der Anhängekupplung (AK) erstreckt, die insbesondere im an der Fahrzeugkarosserie montierten Zustand mit der vertikalen Längsmittelebene (LM) der Fahrzeugkarosserie zusammenfällt, und von denen eine andere eine Ruhestellung (R) ist, in welcher sich der Kugelhals (10) quer zu der vertikalen Längsmittelebene (LM) erstreckt, dadurch gekennzeichnet, dass zur Erfassung mindestens einer Lage des Schwenkelements (14) relativ zur Schwenklagereinheit (20) bezüglich der mindestens einen Schwenkachse (22) ein Sensorsystem (130, 330) vorgesehen ist, welches die Lagen des Schwenkelements (14) relativ zu der fahrzeugfesten Schwenklagereinheit (20) erfasst und eine für die jeweilige Lage des Schwenkelements (14) repräsentative Stellungsinformation (DSI) erzeugt.
2. Anhängekupplung nach Ausführungsform 1, dadurch gekennzeichnet, dass das Sensorsystem (130, 330) mindestens einen die Arbeitsstellung (A) und die Ruhestellung (R) umfassenden Lagenbereich des Schwenkelements (14) erfasst.
3. Anhängekupplung nach Ausführungsform 2, dadurch gekennzeichnet, dass das Sensorsystem (130, 330) die Lagen von zwischen der Arbeitsstellung (A) und der Ruhestellung (R) liegenden Zwischenstellungen des Schwenkelements (14) erfasst.
4. Anhängekupplung nach einer der voranstehenden Ausführungsformen, dadurch gekennzeichnet, dass das Sensorsystem (130, 330) die Lagen des Schwenkelements (14) während des Verschwenkens von der Arbeitsstellung (A) bis zur Ruhestellung (R) und umgekehrt erfasst.
5. Anhängekupplung nach einer der voranstehenden Ausführungsformen, dadurch gekennzeichnet, dass das Sensorsystem (130, 330) die Lagen mit einer Winkelauflösung von besser als 0,5° (Winkelgrad) erfasst.
6. Anhängekupplung nach einer der voranstehenden Ausführungsformen, dadurch gekennzeichnet, dass das Sensorsystem (130, 330) eine Auswerteeinheit (128, 138) umfasst, welche die von der Sensoreinheit (130, 330) erfassten Lagen des Schwenkelements (14) mit Referenzlagen vergleicht und daraus die Stellungsinformationen (DSI) für das Schwenkelement (14) ermittelt.
7. Anhängekupplung nach Ausführungsform 6, dadurch gekennzeichnet, dass die Auswerteeinheit (128, 138) die die Arbeitsstellung (A) und die Ruhestellung (R) des Schwenkelements (14) eindeutig anzeigenden Stellungsinformationen (DSI) erzeugt.
8. Anhängekupplung nach Ausführungsform 6 oder 7, dadurch gekennzeichnet, dass die Auswerteeinheit (128, 138) die die zwischen den Endstellungen liegenden Zwischenstellungen des Schwenkelements (14) eindeutig anzeigenden Stellungsinformationen (DSI) erzeugt.
9. Anhängekupplung nach einer der voranstehenden Ausführungsformen, dadurch gekennzeichnet, dass die Anhängekupplung (AK) mindestens eine motorische Antriebseinheit (110, 190) für die Ausführung der Schwenkbewegung und eine mit der Auswerteeinheit (128, 138) zusammenwirkende und die Stellungsinformation (DSI) heranziehende Schwenksteuerung (132, 342) zum Ansteuern der mindestens einen Antriebseinheit (110, 190) umfasst und dass die Schwenksteuerung (128, 138) unter Berücksichtigung der Stellungsinformationen (DSI) die Antriebseinheit (110, 190) steuert.
10. Anhängekupplung nach Ausführungsform 9, dadurch gekennzeichnet, dass die Schwenksteuerung (132, 342) einen Schwenkbetriebsmodus (SBM) aufweist, in welchem ein Verschwenken des Schwenkelements (14) von einer der Endstellungen zur anderen der Endstellungen erfolgt.
11. Anhängekupplung nach Ausführungsform 10, dadurch gekennzeichnet, dass die Schwenksteuerung (132, 342) im Schwenkbetriebsmodus (SBM) einen die Schwenkbewegung antreibenden Antriebsmotor (122) der mindestens einen Antriebseinheit (120) bei Erreichen der jeweiligen Endstellung als Abschluss eines Einfahrvorgangs in diese Endstellung abschaltet.
12. Anhängekupplung nach einer der voranstehenden Ausführungsformen, dadurch gekennzeichnet, dass die Schwenksteuerung (132, 342) im Schwenkbetriebsmodus (SBM) im Verlauf des Verschwenkens des Schwenkelements (14) von einer Endstellung zur anderen Endstellung die Antriebseinheit (120) so ansteuert, dass diese das Schwenkelement (14) mit einer konstanten vorgegebenen Geschwindigkeit oder entsprechend einem Bewegungsprofil vorgegebenen Geschwindigkeiten verschwenkt.
13. Anhängekupplung nach einer der voranstehenden Ausführungsformen, dadurch gekennzeichnet, dass die Schwenksteuerung (342) durch Vergleich der Stellungsinformationen (DSI) des Schwenkelements (14) mit einem Drehbewegungssignal (DBS) des Antriebsmotors (192) der mindestens einen Antriebseinheit (190) die Schwenkbewegung und/oder eine Blockierung oder Deblockierung der Schwenkbewegung überwacht.
14. Anhängekupplung nach Ausführungsform 13, dadurch gekennzeichnet, dass die Schwenksteuerung (342) durch Vergleich der Stellungsinformationen (DSI) des Schwenkelements (14) mit dem Drehbewegungssignal (DBS) des Antriebsmotors (192) eine Bewegungsrelation ermittelt und mit abgespeicherten Referenzwerten für die Bewegungsrelation vergleicht.
15. Anhängekupplung nach Ausführungsform 14, dadurch gekennzeichnet, dass die Schwenksteuerung (342) bei einem Abweichen von der ermittelten Bewegungsrelation von der vorgegebenen Bewegungsrelation ein Störungssignal erzeugt.
16. Anhängekupplung nach einer der Ausführungsformen 9 bis 15, dadurch gekennzeichnet, dass die Schwenksteuerung (132, 342) in einem Haltebetriebsmodus (HBM) betreibbar ist, in welchem die jeweilige Endstellung, insbesondere die Arbeitsstellung (A) oder die Ruhestellung (R), des Schwenkelements (14) aufrechterhalten mittels der Schwenksteuerung (132, 342) wird.
17. Anhängekupplung nach Ausführungsform 16, dadurch gekennzeichnet, dass die Schwenksteuerung (132) bei Erhalt der Stellungsinformation (DSI), dass die jeweilige Endstellung verlassen wurde, die Antriebseinheit (190) im Sinne eines Verschwenkens in die jeweilige soeben verlassene Endstellung ansteuert.
18. Anhängekupplung nach einer der voranstehenden Ausführungsformen, dadurch gekennzeichnet, dass die Anhängekupplung (AK) eine Schwenkblockiereinrichtung (50) umfasst, dass die Schwenkblockiereinrichtung (50) durch eine Antriebseinheit (110) von einer Blockierstellung in eine Freilaufstellung und umgekehrt bewegbar ist und dass die mit der Auswerteeinheit (128, 338) zusammenwirkende und die Stellungsinformationen (DSI) heranziehende Schwenksteuerung (132, 342) zur Ansteuerung der Antriebseinheit (110, 190) unter Berücksichtigung der Stellungsinformationen (DSI) vorgesehen ist.
19. Anhängekupplung nach Ausführungsform 18, dadurch gekennzeichnet, dass die Schwenksteuerung (132, 342) in einem Schwenkbetriebsmodus (SBM) die Antriebseinheit (110, 190) so ansteuert, dass die Schwenkblockiereinrichtung (50) von der Freilaufstellung in die Blockierstellung dann übergeht, wenn die jeweilige Endstellung als Abschluss eines Einfahrvorgangs in diese Endstellung erreicht wird.
20. Anhängekupplung nach einer der voranstehenden Ausführungsformen, dadurch gekennzeichnet, dass die Schwenksteuerung (132, 342) in einem Schwenkbetriebsmodus (SBM) die Schwenkblockiereinrichtung (50) so lange in der Freilaufstellung hält, bis das Schwenkelement (14) eine der Endstellungen erreicht hat.
21. Anhängekupplung nach Ausführungsform 18 oder 19, dadurch gekennzeichnet, dass die Schwenksteuerung (132, 342) in einem Haltebetriebsmodus (HBM) bei Erhalt der Stellungsinformation (DSI), dass in der jeweiligen Endstellung ein Spiel vorliegt, die Antriebseinheit (110, 190) für die Schwenkblockiereinrichtung (50) derart ansteuert, dass die Schwenkblockiereinrichtung (50) in Richtung ihrer Blockierstellung in der jeweiligen Endstellung angetrieben wird.
22. Anhängekupplung nach einer der Ausführungsformen 1 bis 18, dadurch gekennzeichnet, dass die Anhängekupplung eine Schwenkblockiereinrichtung (50') zur Fixierung des Kugelhalses (10) in den Endstellungen (A, R) umfasst und dass die Schwenkblockiereinrichtung (50') durch eine Antriebseinheit (110) von einer Blockierstellung in eine Freigabestellung und von der Freigabestellung in eine Blockierbereitschaftsstellung überführbar ist und dass die mit der Auswerteeinheit (338) zusammenwirkende und die Stellungsinformationen (SI) heranziehende Schwenksteuerung (132) zur Ansteuerung der Antriebseinheit (110) unter Berücksichtigung der Stellungsinformationen (SI) vorgesehen ist.
23. Anhängekupplung nach Ausführungsform 22, dadurch gekennzeichnet, dass die Schwenksteuerung (342) in einem Bewegungsbetriebsmodus während der Bewegung des Kugelhalses (10) zwischen den Endstellungen (A, R) die Schwenkblockiereinrichtung (50') in die Blockierbereitschaftsstellung bewegt, aus welcher die Schwenkblockiereinrichtung (50) selbsttätig in die Blockierstellung übergeht.
24. Anhängekupplung nach einer der voranstehenden Ausführungsformen, dadurch gekennzeichnet, dass die Schwenksteuerung (342) eine Hemmvorrichtung (400) der Schwenkblockiereinrichtung (50) ansteuert.
25. Anhängekupplung nach einer der voranstehenden Ausführungsformen, dadurch gekennzeichnet, dass das Sensorsystem (130) einen an der Schwenklagereinheit (20) gehaltenen oder mit dem Schwenkelement (14) oder dem Kugelhals (10) mitverschwenkbaren Sensorkopf (124) aufweist, der eine mit dem Schwenkelement (14) oder dem Kugelhals (10) mitschwenkbare beziehungsweise an der Schwenklagereinheit (20) fest angeordnete Positionsstruktur (126) abtastet.
26. Anhängekupplung nach Ausführungsform 25, dadurch gekennzeichnet, dass die Positionsstruktur (126) sich längs eines um die mindestens eine Schwenkachse (22) verlaufenden Kreisbogensegments erstreckt.
27. Anhängekupplung nach Ausführungsform 25 oder 26, dadurch gekennzeichnet, dass die Positionsstruktur (126) eine lokal begrenzte Struktur ist.
28. Anhängekupplung nach einer der Ausführungsformen 25 bis 27, dadurch gekennzeichnet, dass die Positionsstruktur (126) eine fortlaufende Struktur ist.
29. Anhängekupplung nach Ausführungsform 28, dadurch gekennzeichnet, dass die fortlaufende Struktur (126) von dem Sensorkopf (124) bei der Bewegung des Schwenkelements (14) von der einen Endstellung bis zur anderen Endstellung erfasst wird.
30. Anhängekupplung nach einer der Ausführungsformen 25 bis 29, dadurch gekennzeichnet, dass die Positionsstruktur (126) als magnetfeldbeeinflussende Struktur ausgebildet ist, und der Sensorkopf (124) Veränderungen eines magnetischen Feldes detektiert.
31. Anhängekupplung nach einer der Ausführungsformen 1 bis 24, dadurch gekennzeichnet, dass das Sensorsystem (330) einen mit dem Schwenkelement (14) oder dem Kugelhals (10) mitschwenkbar angeordneten ersten Sensor (332) und eine mit dem ersten Sensor (332) verbundene Auswerteeinheit (338) umfasst, welche zur Bestimmung der Lage des Schwenkelements (14) oder des Kugelhalses (10) Sensorsignale des ersten Sensors (332) mit der jeweiligen Lage zugeordneten Referenzwerten vergleicht und dadurch die Stellungsinformationen (DSI) für das Schwenkelement (14) erzeugt.
32. Anhängekupplung nach einer der Ausführungsformen 1 bis 24, dadurch gekennzeichnet, dass das Sensorsystem (330) einen ersten, mit dem Schwenkelement (14) oder dem Kugelhals (10) mitschwenkbar angeordneten Sensor (332) und einen zweiten an der Schwenklagereinheit (20) fest angeordneten Sensor (334) umfasst und dass das Sensorsystem (330) eine mit dem ersten Sensor (332) und dem zweiten Sensor (334) verbundene Auswerteeinheit (338) umfasst, die Differenzwerte der Sensoren (332, 334) erfasst und zur Bestimmung der Lage des Schwenkelements (14) mit abgespeicherten, der jeweiligen Lage zugeordneten Referenzwerten für die Differenzwerte vergleicht und dadurch die Stellungsinformation (DSI) für das Schwenkelement (14) erzeugt.
33. Anhängekupplung nach Ausführungsform 31 oder 32, dadurch gekennzeichnet, dass der erste Sensor (332) und der zweite Sensor (334) Neigungssensoren sind.
34. Anhängekupplung nach einer der Ausführungsformen 31 bis 33, dadurch gekennzeichnet, dass der erste Sensor (332) und der zweite Sensor (334) als Neigungssensoren betreibbare, Bewegungen im Raum detektierende Sensoren, beispielsweise Beschleunigungssensoren, sind.
35. Anhängekupplung nach einer der Ausführungsformen 31 bis 34, dadurch gekennzeichnet, dass der erste und/oder der zweite Sensor (332, 334) Neigungen um mindestens eine Neigungsachse erfassen.
36. Anhängekupplung nach Ausführungsform 35, dadurch gekennzeichnet, dass die Sensoren (332, 334) Neigungswerte (N1, N2) in Bezug auf eine Schwerkraftrichtung (SR) als Referenz erfassen.
37. Anhängekupplung nach einer der Ausführungsformen 31 bis 36, dadurch gekennzeichnet, dass die Auswerteeinheit (338) zur Bestimmung der Stellungsinformationen des Schwenkelements (14) Neigungsdifferenzwerte (D) erfasst, die aus Neigungswerten (N1, N2) als Messwerte der Sensoren (332, 334) gebildet sind.
38. Anhängekupplung nach einer der Ausführungsformen 31 bis 37, dadurch gekennzeichnet, dass die Auswerteeinheit (338) in mindestens einer der Endstellungen eine Neigungsdifferenz zwischen einer Neigung des ersten Sensors (332) und einer Neigung des zweiten Sensors (334) erfasst.
39. Anhängekupplung nach einer der Ausführungsformen 31 bis 38, dadurch gekennzeichnet, dass zur Bestimmung der Stellungsinformationen (DSF) des Schwenkelements (14) basierend auf der ermittelten Neigungsdifferenz der Verlauf der Neigungswerte des ersten Sensors (332) bei einer Schwenkbewegung von einer Endstellung zur anderen Endstellung ermittelt wird.
40. Anhängekupplung nach einer der Ausführungsformen 31 bis 39, dadurch gekennzeichnet, dass bei dem ersten Sensor (332) seine für die Neigungserfassung relevante Z-Achse (Z) und seine weitere Achse (Y) seines kartesischen Koordinatensystems in einer senkrecht zur Schwenkachse (22) verlaufenden Schwenkebene (SE) liegen.
41. Anhängekupplung nach Ausführungsform 40, dadurch gekennzeichnet, dass bei dem zweiten Sensor (334) seine für die Neigungserfassung relevante Z-Achse (Z) und seine dem ersten Sensor entsprechende weitere Achse (Y) seines kartesischen Koordinatensystems parallel zur Schwenkebene (SE) ausgerichtet sind.
42. Anhängekupplung nach einer der voranstehenden Ausführungsformen 31 bis 41, dadurch gekennzeichnet, dass die Auswerteeinheit (338) mit mindestens einem der Sensoren (332, 334), insbesondere mit dem ersten Sensor (332), Beschleunigungen erfasst.
43. Anhängekupplung nach Ausführungsform 42, dadurch gekennzeichnet, dass die Auswerteeinheit (338) mit beiden Sensoren (332, 334) Beschleunigungen erfasst.
44. Anhängekupplung nach Ausführungsform 42 oder 43, dadurch gekennzeichnet, dass die Auswerteeinheit (338) mit dem ersten Sensor (332) Beschleunigungen in einer zur Schwenkachse (22) senkrechten Schwenkebene (SE) erfasst.
45. Anhängekupplung nach einer der Ausführungsformen 9 bis 44, dadurch gekennzeichnet, dass der Schwenksteuerung (132, 342) eine Visualisierungseinheit (136, 346) zur Anzeige von Betriebsmodi und/oder Betriebszuständen und/oder Störungen zugeordnet ist.

Weitere Merkmale und Vorteile der Erfindung sind Gegenstand der nachfolgenden Beschreibung sowie der zeichnerischen Darstellung einiger Ausführungsbeispiele.
- Fig. 1: eine Rückansicht eines Kraftfahrzeugs mit einer erfindungsgemäßen Anhängekupplung;
- Fig. 2: eine Draufsicht auf ein erstes Ausführungsbeispiel einer erfindungsgemäßen Anhängekupplung mit Blick in Fahrtrichtung auf die an einem Fahrzeugheck montierte Anhängekupplung, wobei die Anhängekupplung in ihrer Arbeitsstellung steht;
- Fig. 3: eine Ansicht entsprechend Fig. 2 der in der Ruhestellung stehenden Anhängekupplung;

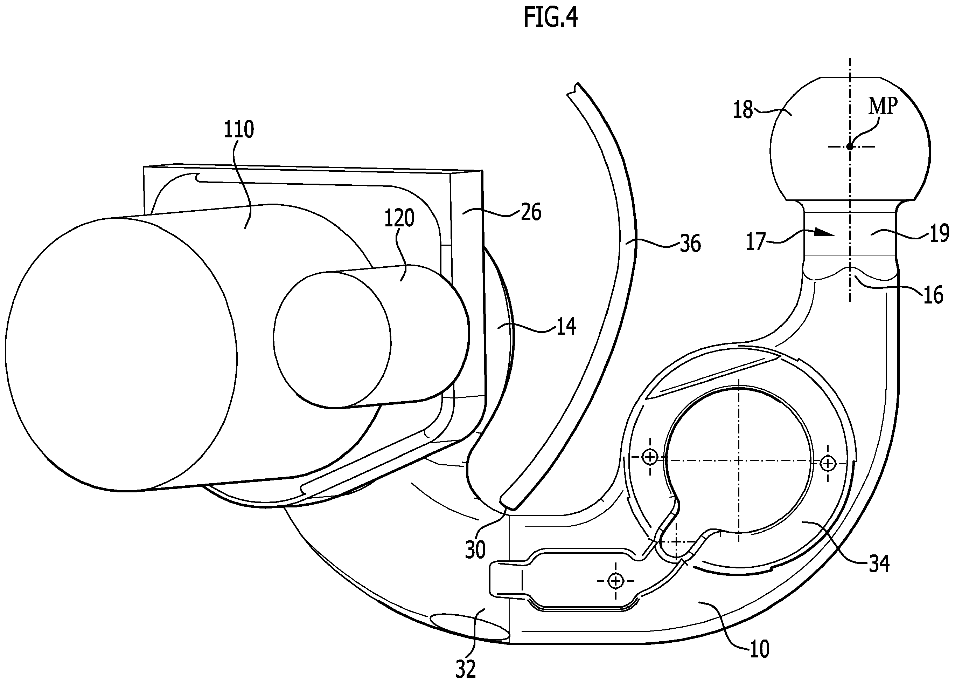

- Fig. 4: eine Ansicht in Richtung des Pfeils A in Fig. 2;
- Fig. 5: einen Teilschnitt längs einer durch die Schwenkachse sowie einen der Drehblockierkörper hindurchverlaufenden Schnittebene in einer Blockierstellung der Drehblockierelemente und einer aktiven Stellung eines Betätigungskörpers;
- Fig. 6: einen Schnitt längs Linie 5-5 in Fig. 5;
- Fig. 7: eine Darstellung ähnlich Fig. 5 bei in Freilaufstellung stehendem Drehblockierkörper und in inaktiver Stellung stehendem Betätigungskörper;
- Fig. 8: einen Schnitt entsprechend Fig. 6 bei der Stellung der Drehblockierkörper und des Betätigungskörpers in Fig. 7;
- Fig. 9: einen vergrößerten Schnitt entsprechend Fig. 6 bei drehfester Blockierung des Schwenkelements mittels der Drehblockierkörper;
- Fig. 10: eine ausschnittsweise vergrößerte Darstellung des Drehblockierelements 54b;
- Fig. 11: eine ausschnittsweise vergrößerte Darstellung des Drehblockierelements 54c;
- Fig. 12: eine ausschnittsweise vergrößerte Darstellung des Drehblockierelements 54a;
- Fig. 13: eine perspektivische Darstellung eines beim ersten Ausführungsbeispiel vorgesehenen Sensorsystems;
- Fig. 14: eine schematische Darstellung des Zusammenwirkens des Sensorsystems mit einer Schwenksteuerung und einer Ablaufsteuerung;
- Fig. 15: einen Teilschnitt ähnlich Fig. 5 durch ein zweites Ausführungsbeispiel einer erfindungsgemäßen Anhängekupplung;
- Fig. 16: einen Teilschnitt ähnlich Fig. 7 durch das zweite Ausführungsbeispiel;
- Fig. 17: eine schematische Darstellung des Zusammenwirkens des Sensorsystems mit einer Schwenksteuerung und einer Ablaufsteuerung ähnlich Fig. 14 bei dem zweiten Ausführungsbeispiel;
- Fig. 18: einen Teilschnitt ähnlich Fig. 5 durch ein drittes Ausführungsbeispiel einer erfindungsgemäßen Anhängekupplung bei in einer ersten Drehblockierstellung stehendem Betätigungskörper und Drehblockierkörper;
- Fig. 19: einen Teilschnitt ähnlich Fig. 7 durch das dritte Ausführungsbeispiel der erfindungsgemäßen Anhängekupplung bei in Freilaufstellung stehendem Betätigungskörper und Drehblockierkörper vor einer Schwenkbewegung des Schwenkelements;
- Fig. 20: einen Teilschnitt ähnlich Fig. 19 durch das dritte Ausführungsbeispiel der erfindungsgemäßen Anhängekupplung nach einer Schwenkbewegung des Schwenkelements von einer Arbeitsstellung in eine Ruhestellung;
- Fig. 21: einen Teilschnitt ähnlich Fig. 5 durch das dritte Ausführungsbeispiel der erfindungsgemäßen Anhängekupplung bei in einer zweiten Drehblockierstellung stehendem Betätigungskörper und Drehblockierkörper;
- Fig. 22: eine vergrößerte Schnittdarstellung im Bereich einer Schwenkblockiereinrichtung und von Hemmvorrichtungen entsprechend dem Zustand in Fig. 18;
- Fig. 23: eine Schnittdarstellung ähnlich Fig. 22 entsprechend dem Zustand in Fig. 19;
- Fig. 24: eine Schnittdarstellung ähnlich Fig. 22 entsprechend dem Zustand in Fig. 20;
- Fig. 25: eine Schnittdarstellung ähnlich Fig. 21 entsprechend dem Zustand in Fig. 20;
- Fig. 26: eine Ansicht ähnlich Fig. 2 des dritten Ausführungsbeispiels einer erfindungsgemäßen Anhängekupplung mit einem Sensorsystem;
- Fig. 27: eine Ansicht ähnlich Fig. 3 des dritten Ausführungsbeispiels der erfindungsgemäßen Anhängekupplung mit dem Sensorsystem;
- Fig. 28: eine schematische Darstellung der Ausrichtung der Sensoren des Sensorsystems des dritten Ausführungsbeispiels;
- Fig. 29: eine schematische Darstellung des Sensorsystems mit einer Schwenksteuerung und einer Ablaufsteuerung;
- Fig. 30: einen Teilschnitt ähnlich Fig. 5 durch ein viertes Ausführungsbeispiel einer erfindungsgemäßen Anhängekupplung bei in einer ersten Drehblockierstellung stehendem Betätigungskörper und Drehblockierkörper mit einer Hemmvorrichtung;
- Fig. 31: einen Teilschnitt ähnlich Fig. 6 durch das vierte Ausführungsbeispiel der erfindungsgemäßen Anhängekupplung bei in Freilauf stehendem Betätigungskörper und Drehblockierkörper vor einer Schwenkbewegung des Schwenkelements bei Wirkungseintritt der Hemmvorrichtung;
- Fig. 32: einen Teilschnitt durch das vierte Ausführungsbeispiel der erfindungsgemäßen Anhängekupplung im Verlauf der Schwenkbewegung bei in Freilauf stehendem Betätigungskörper und Drehblockierkörper und voll wirksamer Hemmvorrichtung;
- Fig. 33: einen Teilschnitt ähnlich Fig. 18 durch das vierte Ausführungsbeispiel nach einer Schwenkbewegung des Schwenkelements von einer Arbeitsstellung in eine Ruhestellung und
- Fig. 34: eine schematische Darstellung des Sensorsystems mit einer Schwenksteuerung und einer Ablaufsteuerung.

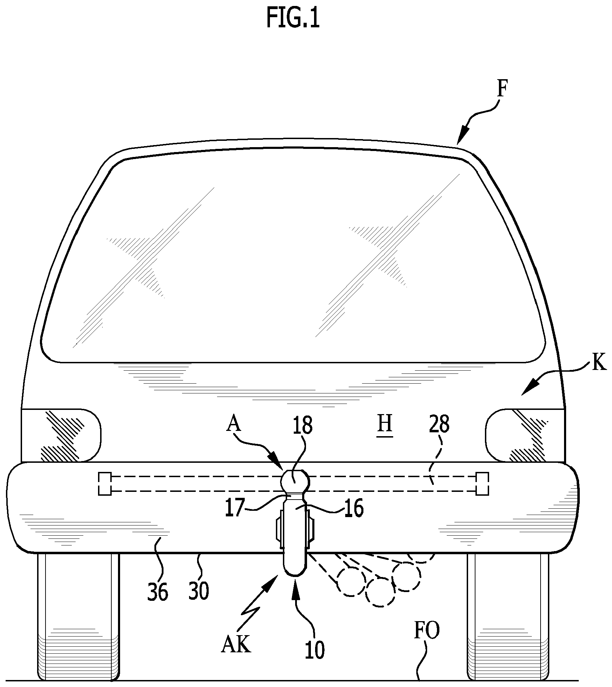

Ein in Fig. 1 dargestelltes Kraftfahrzeug F, insbesondere ein Personenkraftfahrzeug, weist eine Fahrzeugkarosserie K auf, an deren Heckbereich H eine erfindungsgemäße Anhängekupplung AK montiert ist.

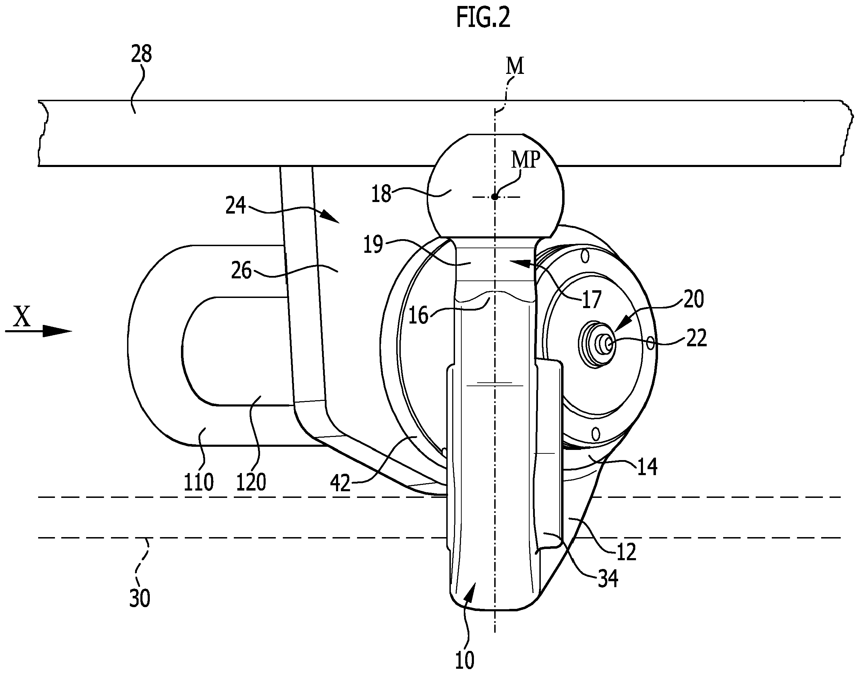

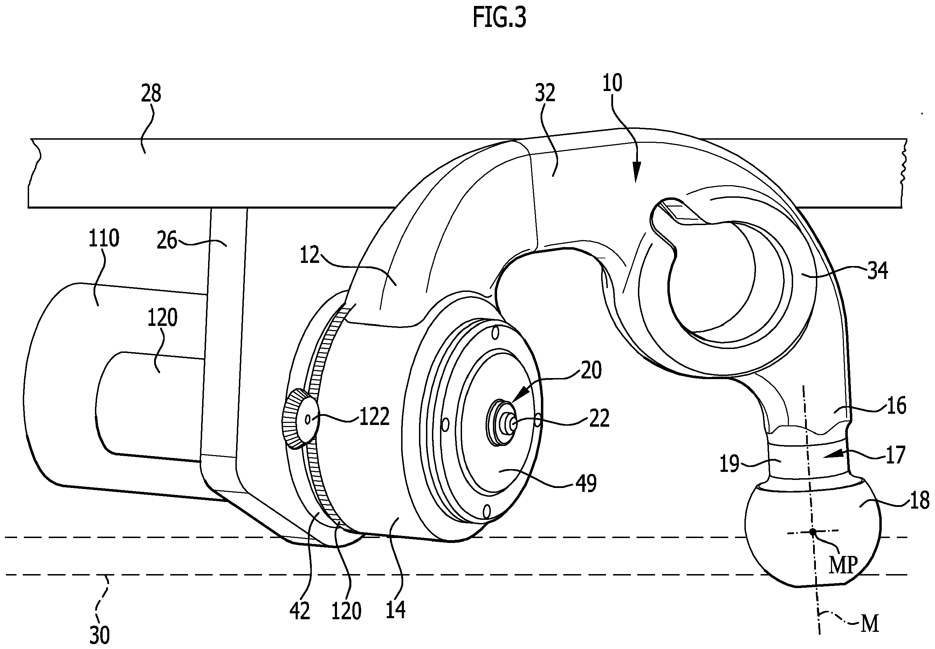

Ein erstes Ausführungsbeispiel einer erfindungsgemäßen Anhängekupplung, dargestellt in Fig. 1 und 2 in einer Arbeitsstellung A und in Fig. 3 in einer Ruhestellung R, umfasst einen als Ganzes mit 10 bezeichneten Kugelhals, welcher mit einem ersten Ende 12 an einem Schwenkelement 14 gehalten ist und an einem zweiten Ende 16 eine als Ganzes mit 18 bezeichnete Kupplungskugel trägt, an welcher eine Zugkugelkupplung eines Anhängers fixierbar ist, wobei zwischen dem Ende 16 des Kugelhalses 10 und der Kupplungskugel 18 ein Kugelansatz 17 vorgesehen ist, dessen zu einer Mittelachse M, die durch den Mittelpunkt MP der Kupplungskugel 18 hindurch verläuft, zylindrische Mantelflächen 19 einen bezogen auf die Mittelachse M geringeren Radius aufweisen als der Kugelhals 10 am Ende 16 und als die Kupplungskugel 18.

Insbesondere liegt die Mittelachse M in der Arbeitsstellung A in einer vertikalen Längsmittelebene LM des Kraftfahrzeugs F und der Anhängekupplung 10.

Das Schwenkelement 14 ist durch eine als Ganzes mit 20 bezeichnete Schwenklagereinheit um eine Schwenkachse 22 relativ zu einem fahrzeugfesten Träger 24 schwenkbar gelagert, wobei der Träger 24 vorzugsweise eine die Schwenklagereinheit 20 haltende Tragplatte 26 aufweist, welche sich vorzugsweise in einer zur Schwenkachse 22 senkrechten Ebene erstreckt und einen fahrzeugfesten Querträger 28, welcher in bekannter Weise am Heck H der Fahrzeugkarosserie K befestigbar ist, und zwar so, dass die Schwenklagereinheit 20 und der Träger 24 auf einer einer Fahrbahnoberfläche FO abgewandten Seite einer Unterkante 30 einer Stoßfängereinheit 36 liegen, und durch die Stoßfängereinheit 36 abgedeckt sind (Fig. 1 und 3).

In der in Fig. 1 und 2 dargestellten Arbeitsstellung A untergreift der Kugelhals 10 mit einem sich an das erste Ende 12 anschließenden Abschnitt 32 die Unterkante 30 der Stoßfängereinheit 36, so dass das zweite Ende 16 und die Kupplungskugel 18 mitsamt einer Steckdosenaufnahme 34 auf einer der Fahrzeugkarosserie abgewandten Seite der hinteren Stoßfängereinheit 36 stehen, während in der Ruhestellung R sowohl die Schwenklagereinheit 20 als auch der gesamte Kugelhals 10 mitsamt der Kupplungskugel 18 von der hinteren Stoßfängereinheit 36 gegen Sicht von hinten abgedeckt sind.

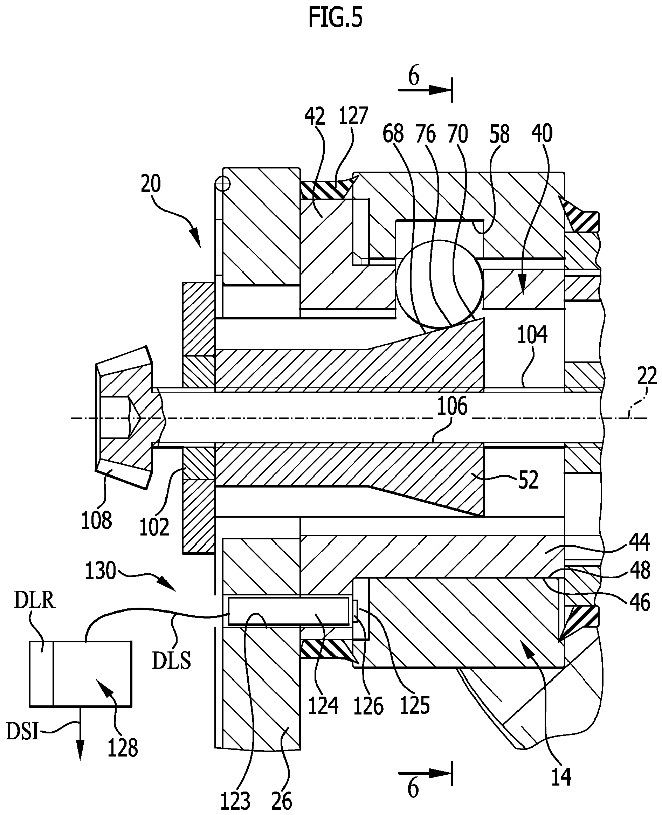

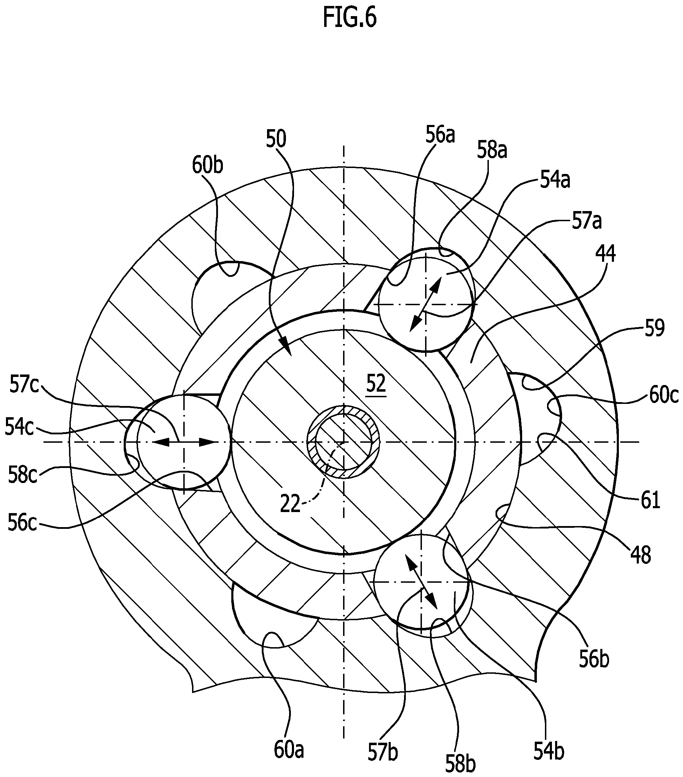

Die Schwenklagereinheit 20 umfasst, wie in Fig. 5 und 6 dargestellt, einen Führungskörper 40, welcher mit einem Flansch 42 fest mit der Tragplatte 26 verbunden ist eine sich ausgehend von dem Flansch 42 von der Tragplatte 26 weg erstreckende Führungshülse 44, auf welcher das Schwenkelement 14 drehbar gelagert ist, und einen fest mit der Führungshülse 44 verbundenen und auf einer dem Flansch 42 gegenüberliegenden Seite der Führungshülse 44 angeordneten Abschlussdeckel 49. Hierzu umfasst die Führungshülse 44 eine zylindrische Außenmantelfläche 46, auf welcher das Schwenkelement 14 mit einer zylindrischen Innenfläche 48 aufliegt und dadurch um die Schwenkachse 22 eine Drehführung erfährt, so dass das Schwenkelement 14 derart relativ zum Führungskörper 40 drehbar ist, dass der Kugelhals 10 von der Arbeitsstellung A in die Ruhestellung R und umgekehrt verschwenkbar ist.

Der Führungskörper 40 bildet somit durch seine feste Verbindung mit der Trägerplatte 26 und dem Träger 24 die fahrzeugfeste Drehlagerung für das Schwenkelement 14.

Zur Fixierung des Schwenkelements 14 in der Arbeitsstellung A und der Ruhestellung R ist die Schwenklagereinheit 20 mit einer als Ganzes mit 50 bezeichneten Schwenkblockiereinrichtung versehen, welche einen Betätigungskörper 52, mehrere durch den Betätigungskörper 52 beaufschlagbare Drehblockierkörper 54, welche in Führungsaufnahmen 56 der Führungshülse 44 in einer im Wesentlichen radial zur Schwenkachse 22 verlaufenden Führungsrichtung 57 bewegbar geführt sind, sowie sich ausgehend von der Innenfläche 48 des Schwenkelements 14 in dieses hineinerstreckende erste Aufnahmen 58 und zweite Aufnahmen 60 aufweist, mit denen die Drehblockierkörper 54 in der Arbeitsstellung A bzw. in der Ruhestellung R in Eingriff bringbar sind, wobei die Aufnahmen 58, 60 in radialer Richtung zur Schwenkachse 22 zunehmend einen geringeren Abstand voneinander aufweisende Wandflächen 59, 61 haben.

Umfasst beispielsweise die Schwenkblockiereinrichtung 50, wie im Zusammenhang mit Fig. 5 und Fig. 6 beim ersten Ausführungsbeispiel dargestellt, einen Satz von drei Drehblockierkörpern 54a, 54b und 54c, so weist die Führungshülse 44 einen Satz von drei Führungsaufnahmen 56a, 56b und 56c auf, in welchen die Drehblockierkörper 54a, 54b und 54c in der im Wesentlichen radial zur Schwenkachse 22 verlaufenden Führungsrichtung 57 verschiebbar geführt sind, und das Schwenkelement 14 ist mit einem Satz von ersten Aufnahmen 58a, 58b und 58c versehen, mit welchen die Drehblockierkörper 54a, 54b und 54c in der Arbeitsstellung A in Eingriff bringbar sind und mit einem Satz von zweiten Aufnahmen 60a, 60b und 60c versehen, mit welchen die Drehblockierkörper 54a, 54b und 54c in der Ruhestellung R in Eingriff bringbar sind.

Zum geeigneten Bewegen und Positionieren der Drehblockierkörper 54 in der Führungsrichtung 57 ist der Betätigungskörper 52 mit Rückzugsaufnahmen 62 versehen, die im einfachsten Fall durch eine gegenüber dem Führungskörper 40 radial zur Schwenkachse 22 zurückgesetzte zylindrische Fläche 63 des Betätigungskörpers gebildet ist, und mit sich an die Rückzugsaufnahmen 62 in axialer Richtung 64 anschließenden Druckflächen 66, welche im einfachsten Fall als eine sich ausgehend von der Zylinderfläche 63 radial zur Schwenkachse 22 konisch erweiternde Konusfläche 67 gebildet sind. Die Drehblockierkörper 54 liegen in ihrer Freilaufstellung im Bereich der Rückzugsaufnahmen 62, das heißt der Zylinderfläche 63 des Betätigungskörpers 52 auf und sind damit in radialer Richtung zur Schwenkachse 22 so weit in den Führungskörper 40 hineinbewegt, dass sie nicht mehr über die Außenmantelfläche 46 der Führungshülse 44 überstehen.

Mittels der Druckflächen 66 sind die Drehblockierkörper 54 mit zunehmender Verschiebung des Betätigungskörpers 52 in axialer Richtung 64 radial zur Führungshülse 44 so weit nach außen bewegbar, bis sie in einer ersten Drehblockierstellung stehen, in welcher die Drehblockierkörper 54 in ihrer Führungsrichtung 57 so weit nach außen geschoben sind, dass sie entweder in die Aufnahmen 58 oder die Aufnahmen 60 des Schwenkelements 14 eingreifen und somit dieses relativ zur Führungshülse 44 festlegen.

Bei den beschriebenen Ausführungsbeispielen sind der Einfachheit halber die Druckflächen 66 als Konusflächen 67 dargestellt. Anstelle eines Konus kann jedoch jeder sich zunehmen und kontinuierlich radial zur Schwenkachse 22 erweiternde Körper vorgesehen sein, welcher in der Lage ist, beim Verschieben des Betätigungskörpers 52 in der axialen Richtung 64 die Drehblockierkörper 54 in ihren Führungsrichtungen 57 zu bewegen.

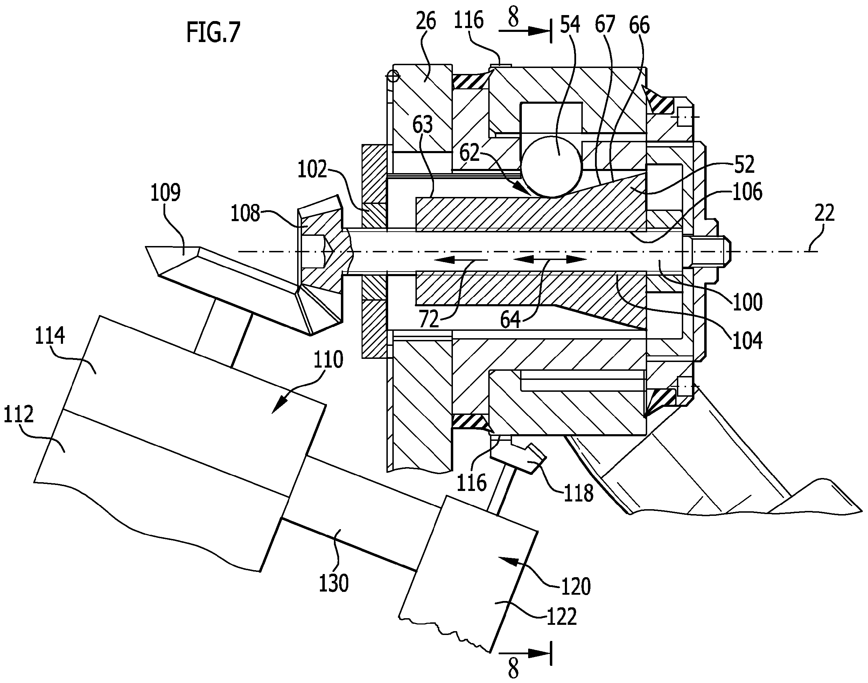

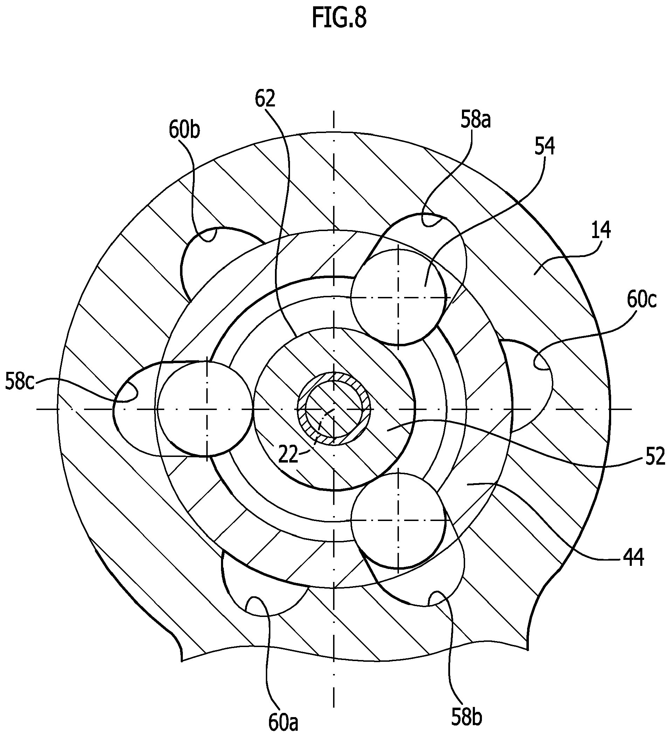

Um die Drehblockierkörper 54 entweder in ihrer Drehblockierstellung durch Beaufschlagen derselben mit den Druckflächen 66 zu halten oder in der Freilaufstellung auf der Rückzugsaufnahme 62 aufliegen zu lassen, ist der Betätigungskörper 52 in der axialen Richtung 64 parallel zur Schwenkachse 22, insbesondere koaxial zu dieser, verschiebbar, und zwar so, dass entweder die Rückzugsaufnahme 62 dem jeweiligen Drehblockierkörper 54 zugewandt ist und diesem, wie in Fig. 7 und 8 dargestellt, in seiner aktiven Stellung die Möglichkeit gibt, in die Führungshülse 44 in Richtung der Rückzugsaufnahme 62 in radialer Richtung zur Schwenkachse 22 hin einzutauchen und den jeweiligen Drehblockierkörpern 54 die Möglichkeit zu eröffnen, die ersten Aufnahmen 58 oder die zweiten Aufnahmen 60 hinsichtlich einer Drehung mitsamt dem Schwenkelement 14 um die Schwenkachse 22 frei zu geben, so dass das Schwenkelement 14 mit dem Kugelhals 10 relativ zur Führungshülse 44 ungehindert und frei drehbar ist, wie in Fig. 7 und 8 dargestellt, wobei in diesem Fall die Drehblockierkörper 54 sich nicht über die Außenmantelfläche 46 der Führungshülse 44 hinaus erstrecken.

Eine Verschiebung des Betätigungskörpers 52 bei auf der jeweiligen Rückzugsaufnahme 62 sitzendem Drehblockierkörper 54 in der Richtung 72 auf die Tragplatte 26 zu bewirkt, dass der jeweilige Drehblockierkörper 54 aus der Rückzugsaufnahme 62 heraus bewegt wird und durch die Druckfläche 66 in seiner Führungsrichtung 57 radial zur Schwenkachse 22 nach außen bewegt wird, somit seine erste Drehblockierstellung erreicht und dabei entweder in die jeweilige erste Aufnahme 58 oder in die jeweilige zweite Aufnahme 60 eintaucht und damit die freie Drehbarkeit des Schwenkelements 14 unterbindet.

Der Betätigungskörper 52 lässt sich in der Richtung 72 in der axialen Richtung 64 so bewegen, dass auf die Drehblockierkörper 54 zunächst Anfangsbereiche 68 der Druckflächen 66 wirken und dann immer weiter radial gegenüber der Schwenkachse 22 außenliegende Bereiche der jeweiligen Druckflächen 66 auf die Drehblockierkörper 54 wirken und diese somit zunehmend, beispielsweise in der Arbeitsstellung A des Kugelhalses 10, in die ersten Aufnahmen 58a, 58b und 58c hineindrücken, wie dies in Fig. 5 und 6 dargestellt ist, um somit eine im Wesentlichen spielfreie Fixierung des Schwenkelements 14 relativ zum Führungskörper 40, in diesem Fall zur Führungshülse 44, zu erreichen.

In dieser Drehblockierstellung der Drehblockierkörper 54 steht der Betätigungskörper 52 in seiner blockieraktiven Stellung so, dass die Drehblockierkörper 54, wie in Fig. 5 und 6 dargestellt, ungefähr auf Zwischenbereichen 76, die zwischen den Anfangsbereichen 68 und den größten radialen Abstand zur Schwenkachse 22 aufweisenden Endbereichen 70 der Druckflächen 66 liegen.

Eine spielfreie Verriegelung des Schwenkelements 14 durch die in ihrer Drehblockierstellung stehenden Drehblockierkörper 54 lässt sich besonders günstig dann erreichen, wenn die Drehblockierkörper 54 und die Aufnahmen 58 und 60 so gestaltet sind, dass bei zunehmendem Eintauchen eines der Drehblockierkörper 54 in eine der Aufnahmen 58 oder 60 und Anliegen der Drehblockierkörper 54 an einer Seite der Aufnahmen 58 und 60 jeder der Drehblockierkörper 54 mit der wechselwirkenden Aufnahme 58 oder 60 eine Verdrehung des Schwenkelements 14 bewirkt, wobei insgesamt der Satz von Drehblockierkörpern 54a bis 54c zur spielfreien Fixierung des Schwenkelements 14 mit in entgegengesetzten Richtungen wirkenden Drehmomenten 90, 92 auf die Gesamtheit der Aufnahmen 58 oder 60 einwirkt.

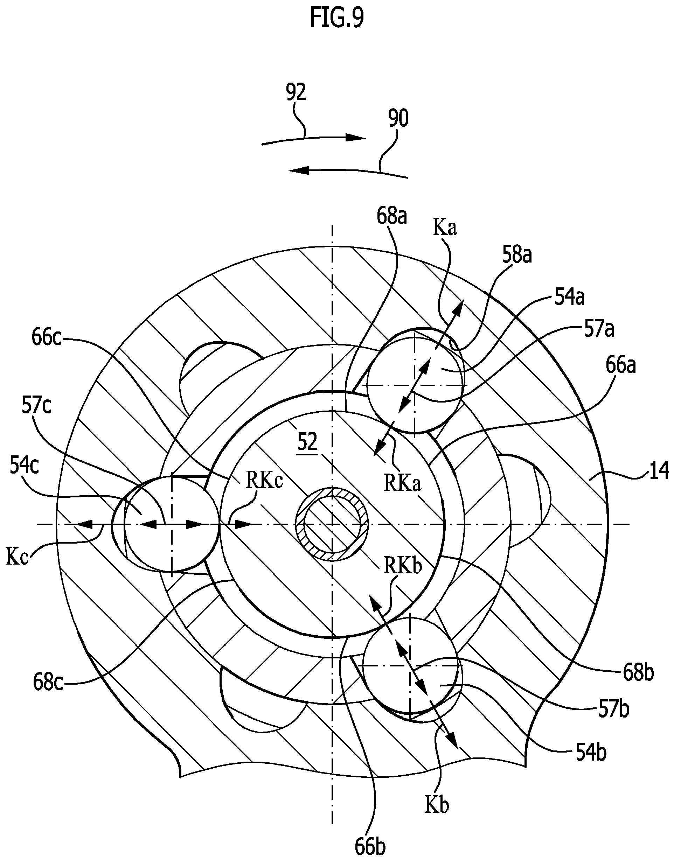

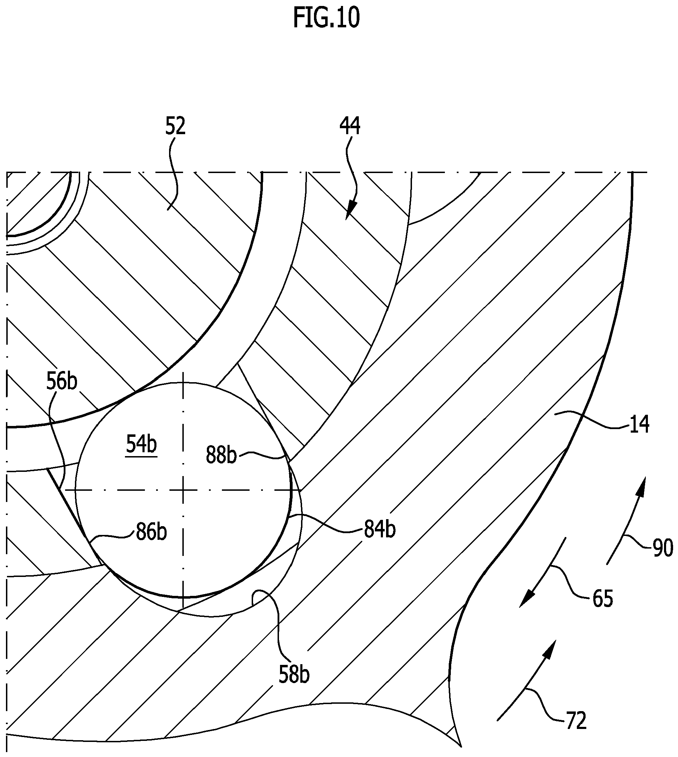

Wie beispielsweise in Fig. 9 bis 12 dargestellt, liegt der Drehblockierkörper 54b mit seiner Mantelfläche 84b nur auf einer Seite 86b der Führungsaufnahme 56b an, beispielsweise der in Umlaufrichtung 65 liegenden Seite, und stützt sich mit einem gegenüberliegenden Bereich seiner Mantelfläche 84b auf einer entgegengesetzt zur Umlaufrichtung 65 liegenden Seite 88b der Aufnahme 58b ab, wobei eine zunehmende Bewegung des Drehblockierkörpers 54 in radialer Richtung zur Schwenkachse 22 zu einem entgegengesetzt zur Umlaufrichtung 65 wirkenden Drehmoment 90 führt, welches auf das Schwenkelement 14 wirkt.

Ferner liegt der Drehblockierkörper 54c mit seiner Mantelfläche 84c an einer entgegengesetzt zur Umlaufrichtung 65 liegenden Seite 86c der Führungsaufnahme 56c an und wirkt mit einem gegenüberliegenden Bereich der Mantelfläche 84c auf eine Seite 89c der ersten Aufnahme 58c, wodurch ein in Umlaufrichtung 65 wirkendes Drehmoment 92 entsteht, welches auf den Schwenkelement 14 wirkt.

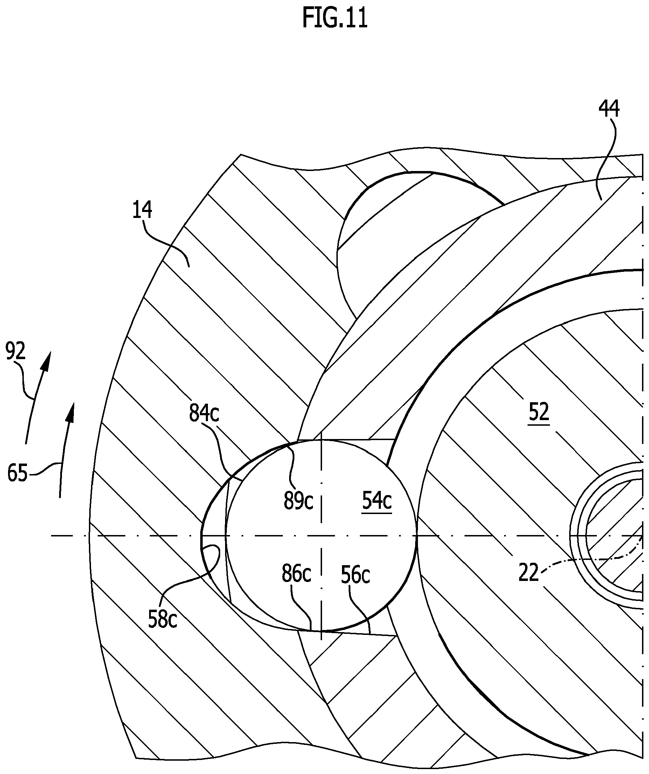

Somit wirken die durch die Drehblockierkörper 54b und 54c erzeugten Drehmomente 90 und 92 wie in Fig. 11 dargestellt, entgegengesetzt zueinander und erlauben eine spielfreie Festlegung des Schwenkelements 14 relativ zum Führungskörper 40, insbesondere zur Führungshülse 44 desselben, da durch die jeweils einseitige Anlage der Drehblockierkörper 54 einerseits in der Führungsaufnahme 56 und andererseits in der ersten Aufnahme 58 das Spiel zwischen der Führungsaufnahme 56 und dem Drehblockierkörper 54 sowie der ersten Aufnahme 58 im Bereich beider Drehblockierkörper 54b und 54c eliminiert wird.

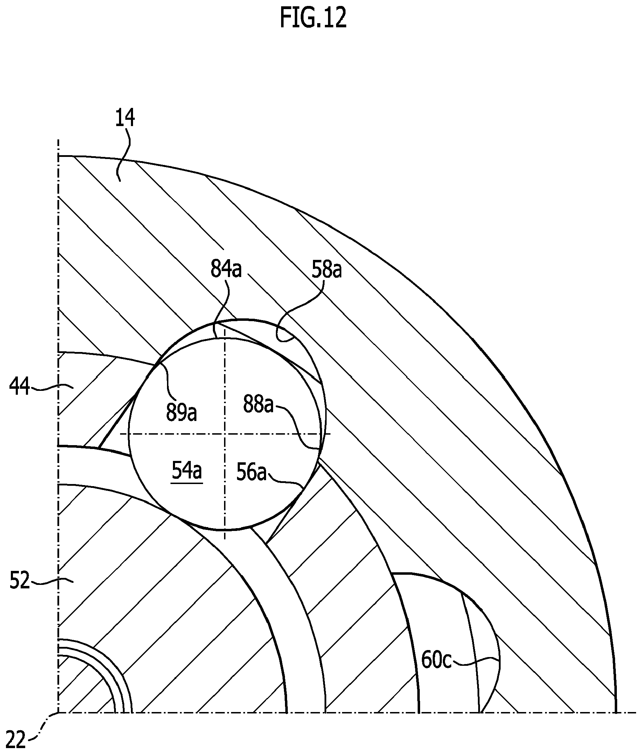

Ferner ist, wie in Fig. 12 dargestellt, beim Drehblockierkörper 54a vorgesehen, dass dieser mit seiner Mantelfläche 84a sowohl an der in Umlaufrichtung 65 liegenden Seite 88a als auch an der entgegengesetzt zu dieser Seite liegenden Seite 89a der ersten Aufnahme 58a anliegt, und somit je nach Fertigungstoleranz im Bereich der Führungsaufnahme 56a und der entsprechenden Aufnahme 58a und je nach Belastung des Kugelhalses 10 im Anhängerbetrieb in der Regel zu einem der beiden Drehmomente 90 und 92 beiträgt und somit in der Regel dazu dient, zusätzlich zu dem aufgrund der Belastung des Kugelhalses 10 belasteten Drehblockierkörper 54b oder 54c noch Last aufzunehmen, es kann aber auch ein Zustand auftreten, in dem der Drehblockierkörper 54a zu keinem der beiden Drehmomente 90 und 92 beitragen kann.

Um dem Betätigungskörper 52 die Möglichkeit zu eröffnen, jeweils jeden der drei Drehblockierkörper 54 optimal zu beaufschlagen, ist vorgesehen, dass in der aktiven Stellung eine Zentrierung des Betätigungskörpers 52 entsprechend der Lage der Drehblockierkörper 54 erfolgt, so dass sich der Betätigungskörper 52 relativ zur Schwenkachse 22 bewegen und entsprechend der durch Fertigungstoleranzen bedingten Lage der Drehblockierkörper 54 innerhalb des Führungskörpers 40 selbstzentrieren kann, wobei die Selbstzentrierung des Betätigungskörpers 52 geringfügig von einer koaxialen Anordnung zur geometrischen Schwenkachse 22 abweichen kann.

Aufgrund der Selbstzentrierung wirken die Drehblockierkörper 54a, 54b und 54c in der jeweiligen Führungsrichtung 57a, 57b und 57c mit ungefähr gleich großen Kräften Ka, Kb und Kc auf die Aufnahmen 58a, 58b und 58c oder 60a, 60b und 60c, so dass auch die auf den Betätigungskörper 52 wirkenden Reaktionskräfte RKa, RKb und RKc ungefähr gleich groß sind.

Bei dem dargestellten Ausführungsbeispiel der erfindungsgemäßen Lösung sind die Drehblockierkörper 54 in den Führungsaufnahmen 56 in gleichen Winkelabständen um die Schwenkachse 22 herum angeordnet, so dass die durch die Selbstzentrierung ungefähr gleich großen Reaktionskräfte RKa, RKb, RKc auf einen der Drehblockierkörper 54a, 54b, 54c sich zu gleichen Teilen auf die anderen Drehblockierkörper 54b und 54c, 54a und 54c sowie 54a und 54b auswirken und sich somit insgesamt aufheben, so dass der Betätigungskörper 52 im Kräftegleichgewicht steht und keine zusätzliche Abstützung benötigt.

Im dargestellten Ausführungsbeispiel sind die Drehblockierkörper 54, wie in den Fig. 5, 7 und 9 dargestellt, als Kugeln ausgebildet. Es besteht aber auch die Möglichkeit, die Drehblockierkörper beispielsweise als Rollen auszubilden.

Zum Bewegen des Betätigungskörpers 52 in der axialen Richtung 64 sitzt dieser auf einer als Ganzes mit 100 bezeichneten Gewindespindel, die an der Tragplatte 26 beispielsweise über ein Axial-/Radiallager 102 in der axialen Richtung 64 unverschieblich gelagert ist.

Diese Gewindespindel 100 greift mit einem Außengewinde 104 in ein Innengewinde 106 des Betätigungskörpers 52 ein, der somit gleichzeitig eine Spindelmutter zu der Gewindespindel 100 darstellt. Es besteht die Möglichkeit, die Selbstzentrierung des Betätigungskörpers 52 durch ausreichend großes Spiel zwischen dem Außengewinde 104 und dem Innengewinde 106 zu erreichen.

Durch Drehen der Gewindespindel 100 lässt sich somit der Betätigungskörper 52 in der axialen Richtung 64 verschieben.

Vorzugsweise ist das Axial-/Radiallager 102 so ausgebildet, dass es die Gewindespindel 100 nicht streng koaxial zur Schwenkachse 22 führt, sondern eine Ausweichbewegung der Gewindespindel 100 quer zur Schwenkachse 22 zulässt, um die bereits beschriebene Selbstzentrierung des Betätigungskörpers 52 in der Führungshülse 44 zu ermöglichen.

Ein Antreiben der Gewindespindel 100 erfolgt über ein auf einer dem Betätigungskörper 52 gegenüberliegenden Seite der Tragplatte 26 sitzendes Antriebsrad 108, welches mit einem Antriebsrad 109 einer Blockierantriebseinheit 110 in Eingriff steht, wobei die Blockierantriebseinheit 110 beispielsweise einen Elektromotor 112 mit einem Untersetzungsgetriebe 114 umfasst.

Zum Verschwenken des Schwenkelements 14 ist dieses beispielsweise mit einer externen Verzahnung 116 versehen, in welche ein Antriebsrad 118 einer Schwenkantriebseinheit 120 eingreift, die ebenfalls einen Elektromotor 122 aufweist.

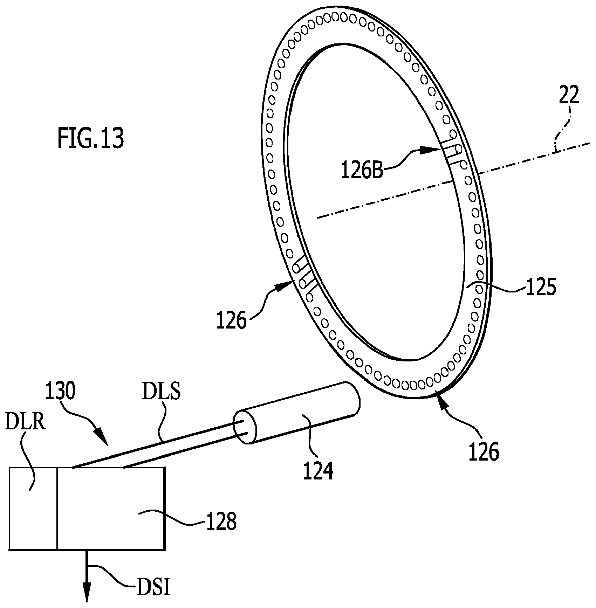

Zur Erfassung der einzelnen Drehlagen des Schwenkelements 14 bezüglich der Schwenkachse 22 ist, wie in Fig. 5 dargestellt, in einer die Tragplatte 26 und den Flansch 42 durchsetzenden Bohrung 123 ein Sensorkopf 124 drehfest relativ zur Schwenklagereinheit 20 angeordnet, welcher Drehlagen einer Positionsstruktur 126 erfasst, die drehfest mit dem Schwenkelement 14 verbunden ist und beispielsweise in einem Ringkörper 125 ausgebildet ist, der drehfest mit dem Schwenkelement 14 verbunden und auf einer dem Sensorkopf 124 zugewandten Seite des Schwenkelements 14 angeordnet ist (Fig. 13).

Die Positionsstruktur 126 ist insbesondere so ausgebildet, dass der Sensorkopf 124 in der Lage ist, die einzelnen Relativpositionen eindeutig zu erfassen, was beispielsweise durch eine Positionsstruktur 126 mit zumindest stellenweise, beispielsweise im Bereich der Endlagenstellungen vorgesehenen Strukturen mit mehrfacher Periodizität erfolgt, wie schematisch in Fig. 13 durch die Positionsstrukturen 126A im Bereich der Arbeitsstellung und 126B im Bereich der Ruhestellung angedeutet.

Vorzugsweise liegen dabei der Sensorkopf 124 und die Positionsstruktur 126 und somit auch der Ringkörper 125 radial bezüglich der Schwenkachse 22 innerhalb einer Außendichtung 127, die einen dichten Abschluss zwischen dem Schwenkelement 14 und der Schwenklagereinheit 20 bewirkt, so dass insbesondere der Sensorkopf 124 und die auf dem Ringkörper 125 angeordnete Positionsstruktur 126 gegen äußere Einflüsse, wie beispielsweise Wasser und Schmutz, geschützt angeordnet sind (Fig. 5).

Der Sensorkopf 124 ist vorzugsweise ein magnetfelddetektierender Sensorkopf, insbesondere ein durch einen Permanentmagnet vorgespannter magnetfelddetektierender Sensorkopf, welcher die Positionsstruktur 126 abtastet, welche beispielsweise alternierende unterschiedlich stark magnetfeldbeeinflussende Bereiche umfasst.

Beispielsweise hat der Sensorkopf 124 zusammen mit der Positionsstruktur 126 eine Winkelauflösung von weniger als 2° bezüglich einer Drehung um die Schwenkachse 22.

Der Sensorkopf 124 erzeugt somit im Zusammenwirken mit der Positionsstruktur 126 Drehlagensignale DLS, die einer Auswerteeinheit 128 übermittelt werden (Fig. 13).

Die Auswerteeinheit 128 erzeugt aus den von dem Sensorkopf 124 generierten Drehlagensignalen DLS Stellungsinformationen DSI, und zwar durch Vergleich der Drehlagensignale DLS mit abgespeicherten Drehlagenreferenzwerten DLR unter Berücksichtigung der absoluten Lage der Arbeitsstellung und der Ruhestellung R.

Somit bilden der nichtschwenkend an der Schwenklagereinheit 20 angeordnete Sensorkopf 124 mit der Positionsstruktur 126, die sich mit dem Schwenkelement 14 um die Schwenkachse 22 mitdreht, und die Auswerteeinheit 128 ein als Ganzes mit 130 bezeichnetes Sensorsystem, welches die Drehlagen des Schwenkelements 14 mit dem Kugelhals 10 relativ zur Schwenkachse 22 anzeigende Stellungsinformationen DSI zur Verfügung stellt.

Vorzugsweise erstreckt sich die Positionsstruktur 126 mit dem Ringkörper 125 als umlaufende Struktur um die Schwenkachse 22 zumindest über einen derartigen Winkelbereich, dass der Sensorkopf 124 während des gesamten Schwenkvorgangs von der einen Endstellung zur anderen Endstellung, das heißt von der Arbeitsstellung A zur Ruhestellung R oder von der Ruhestellung R zur Arbeitsstellung A, die Positionsstruktur 126 abtasten kann, so dass die Positionsstruktur 126 sowohl Drehlagensignale DLS in den beiden Endstellungen, das heißt der Ruhestellung R und der Arbeitsstellung A, als auch in allen Zwischenstellungen zwischen diesen liefert.

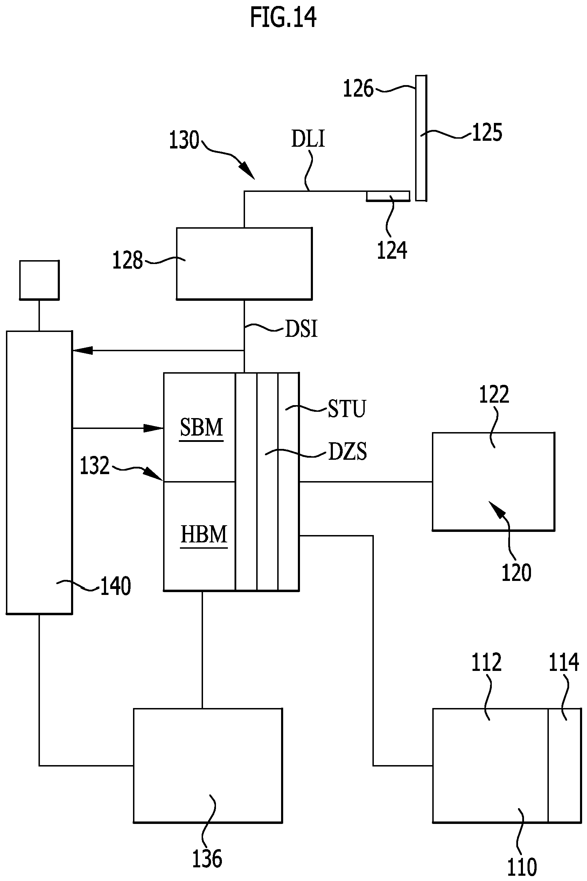

Vorzugsweise wirkt das Sensorsystem 130 mit einer als Ganzes mit 132 bezeichneten Schwenksteuerung zusammen, welche die Schwenkantriebseinheit 120, insbesondere den Elektromotor 122 der Schwenkantriebseinheit 120, ansteuert (Fig. 14).

Beispielsweise ist die Schwenksteuerung 132 in einem Schwenkbetriebsmodus SBM betreibbar, in welchem ein Verschwenken des Schwenkelements 14 und somit auch des Kugelhalses 10 zwischen den Endstellungen, also beispielsweise der Arbeitsstellung A und der Ruhestellung R oder umgekehrt, erfolgt.

In diesem Schwenkbetriebsmodus SBM wird ausgehend von der momentanen Endstellung, in welcher das Schwenkelement 14 oder der Kugelhals 10 stehen, der Elektromotor 122 derart angesteuert, dass dieser das Schwenkelement 14 oder den Kugelhals 10 in die jeweils andere Endstellung verschwenkt und hierbei werden die Stellungsinformationen, beim vorliegenden Ausführungsbeispiel die Drehstellungsinformationen DSI, des Sensorsystems 130 erfasst, um einerseits festzustellen, ob das Schwenkelement 14 mit dem Kugelhals 10 die eine Endstellung, beispielsweise die Arbeitsstellung A oder die Ruhestellung R, verlässt und nach Durchlaufen des bekannten Winkelabstandes zwischen den Endstellungen die andere Endstellung, das heißt beispielsweise die Ruhestellung R oder die Arbeitsstellung A, erreicht.

Da die Schwenksteuerung 132 in der Lage ist, aus der Stellungsinformation DSI die Information zu entnehmen, wie sich das Schwenkelement 14 mit dem Kugelhals 10 um die Schwenkachse 22 bewegt, ist aus der Stellungsinformation DSI auch zu entnehmen, dass das Schwenkelement 14 mit dem Kugelhals 10 in die andere vorgesehene Endstellung einfahren und somit ist die Schwenksteuerung 132 in der Lage, beim Erreichen der anderen Endstellung den Elektromotor 122 der Schwenkantriebseinheit 120 abzuschalten, ohne dass eine Stromüberwachung des Elektromotors 122 zur Detektion des Erreichens der Endstellung erforderlich ist.

Insbesondere kann die Schwenksteuerung 132 auch aus dem Verlauf der gesamten Schwenkbewegung von der einen Endstellung in die andere Endstellung erkennen, dass das Schwenkelement 14 mit dem Kugelhals 10 auch den vorgesehenen Schwenkwinkel von der einen Endstellung zur anderen Endstellung durchlaufen hat und somit störungsfrei die andere Endstellung erreicht hat und beispielsweise auf dem Weg von der einen Endstellung zur anderen Endstellung nicht durch ein Fremdobjekt, beispielsweise ein Hindernis, blockiert wurde.

Selbst wenn im Rahmen einer zusätzlich zum Schutz des Elektromotors 122 vorgesehenen Stromüberwachung STU der Schwenksteuerung 132 das Anschlagen des Kugelhalses 10 an einem Hindernis festgestellt wird, ist die Schwenksteuerung 132 aufgrund des durch die Stromüberwachung STU festgestellten ansteigenden Stroms in der Lage, den Elektromotor 122 umzupolen und wieder in diese Endstellung zurückzufahren, aus welcher das Schwenkelement 14 mit dem Kugelhals 10 gekommen sind, wobei ebenfalls auch hier wiederum der Schwenkwinkel zwischen dem Ort der Blockierung und der Endstellung, aus der das Schwenkelement 14 und der Kugelhals 10 gekommen sind, überwacht werden kann und somit auch das Zurückfahren überwacht werden kann um festzustellen, dass die die Ausgangsstellung darstellende Endstellung von dem Schwenkelement 14 und mit dem Kugelhals 10 störungsfrei erreicht wurde.

Somit ist die Schwenksteuerung 132 in der Lage, im Schwenkbetriebsmodus SBM einerseits die störungsfreie Schwenkbewegung von einer Endstellung zur anderen Endstellung zuverlässig aufgrund der Stellungsinformation DSI zu erfassen und zu überprüfen und andererseits auch im Fall einer Störung, beispielsweise einer Blockierung der Schwenkbewegung des Schwenkelements 14 mit dem Kugelhals 10, diese Blockierung zu erfassen und somit das Schwenkelement 14 mit dem Kugelhals 10 wiederum zurück in eine für die Betriebssicherheit wesentliche Endstellung zu überführen.

Darüber hinaus ist die Schwenksteuerung 132 vorzugsweise mit einer Drehzahlsteuerung DZS für die Ansteuerung des Elektromotors 122 versehen, wobei die Drehzahlsteuerung DZS es in Verbindung mit den Stellungsinformationen DSI des Sensorsystems 130 erlaubt, den Schwenkvorgang von der einen Endstellung zur anderen Endstellung zu optimieren oder an externe Vorgaben anzupassen.

So besteht beispielsweise mit der Drehzahlsteuerung DZS der Schwenksteuerung 132 die Möglichkeit, insbesondere über einen Betrieb des Elektromotors 122 mit einem pulsweitenmodulierten Strom, die Geschwindigkeit der Schwenkbewegung zu optimieren.

Eine Möglichkeit ist dabei, die Geschwindigkeit der Schwenkbewegung durch die Anpassung des pulsmodulierten Stroms unter Berücksichtigung der Stellungsinformation DSI konstant zu halten, so dass beispielsweise die aufgrund der Schwerkraft beschleunigte Bewegung des Kugelhalses 10 beim Verlassen einer der Endstellungen nicht zu einer relativ schnellen Schwenkbewegung führt, während das Einfahren in die jeweils nächstfolgende Endstellung aufgrund des erforderlichen Anhebens des Kugelhalses bis zu dieser jeweiligen Endstellung mit geringerer Geschwindigkeit erfolgt.

Eine andere Möglichkeit der Ansteuerung des Elektromotors 122 sieht vor, dass beispielsweise die Schwenkbewegung beim Verlassen einer Endstellung bis kurz vor das Erreichen der nächsten Endstellung mit möglichst großer Geschwindigkeit erfolgt, dann jedoch das Einfahren in die nächstfolgende Endstellung mit geringerer Geschwindigkeit erfolgt, um diese Endstellung mit einem möglichst geringen mechanischen Anschlagen zu erreichen.

Die Schwenksteuerung 132 ist aber darüber hinaus noch in einem Haltebetriebsmodus HBM betreibbar, in welchem diese die Schwenkantriebseinheit 120 so ansteuert, dass diese die jeweilige Endstellung aufrechterhält.

In dem Haltebetriebsmodus HBM erfolgt dabei eine ständige Überwachung der Stellungsinformation DSI, die von dem Sensorsystem 130 zur Verfügung gestellt wird, so dass die Schwenksteuerung 132 in dem Haltebetriebsmodus HBM in der Lage ist, zu erkennen, ob das Schwenkelement 14 mit dem Kugelhals 10 die jeweilige Endstellung, beispielsweise die Arbeitsstellung, zu verlassen beginnt.

Wird somit, beispielsweise bei noch nicht wirksamer Schwenkblockiereinrichtung 50, festgestellt, dass das Schwenkelement 14 mit dem Kugelhals 10 bereits geringfügig die jeweilige Endstellung verlassen hat, so erfolgt beispielsweise ein Ansteuern der Schwenkantriebseinheit 120 dergestalt, dass das Schwenkelement 14 mit dem Kugelhals 10 wieder in diese Endstellung zurückverschwenkt wird, wobei erst bei Erreichen dieser Endstellung wieder ein Abschalten des Elektromotors 122 erfolgt.

Die Schwenksteuerung 132 ist aber auch in der Lage die Blockierantriebseinheit 110 anzusteuern, mit welcher die Schwenkblockiereinrichtung 50 von der Blockierstellung in die Freilaufstellung oder umgekehrt überführt wird (Fig. 14).

Die Ansteuerung der Blockierantriebseinheit 110 durch die Schwenksteuerung 132 erfolgt dabei im Schwenkbetriebsmodus SBM der Schwenksteuerung dergestalt, dass bei einem Schwenkvorgang von einer Endstellung in die andere Endstellung zunächst die Blockierantriebseinheit 110 so angesteuert wird, dass die Schwenkblockiereinrichtung 50 in die Freilaufstellung übergeht.

In dieser Freilaufstellung erfolgt nun - wie bereits beschrieben - gesteuert durch die Schwenksteuerung 132 das Verschwenken des Schwenkelements 14 mit dem Kugelhals 10 und während dieses Verschwenkens hält die Schwenksteuerung 132 die Schwenkblockiereinrichtung 50 in der Freilaufstellung.

Das Überwachen der Schwenkbewegung des Schwenkelements 14 mit dem Kugelhals 10 erfolgt durch Überprüfen der von dem Sensorsystem 130 gelieferten Stellungsinformationen DSI.

Wird dann die nächstfolgende Endstellung erreicht, so erkennt dies die Schwenksteuerung 132 aufgrund der dieser Endstellung entsprechenden Stellungsinformation DSI und bewirkt ein Überführen der Schwenkblockiereinrichtung 50 in die Blockierstellung, so dass in dieser Blockierstellung dann wiederum das Schwenkelement 14 mit dem Kugelhals 10 hinsichtlich ihrer Schwenkbewegung blockiert sind.

Die Schwenksteuerung 132 überwacht in dem Haltebetriebsmodus HBM mittels der Stellungsinformation DSI die jeweilige Endstellung und steuert dann, wenn aufgrund der Stellungsinformation DSI erkennbar ist, dass das Schwenkelement 14 mit dem Kugelhals 10 die Endstellung verlassen hat, die Blockierantriebseinheit 110 im Sinne einer Bewegung der Schwenkblockiereinrichtung 50 in die Blockierstellung an, um ein gegebenenfalls eingetretenes Spiel der Schwenkblockiereinrichtung 50, welches für das Verlassen der Endstellung verantwortlich sein könnte, auf einen Wert möglichst nahe Null zu reduzieren und somit wiederum die Schwenkblockiereinrichtung 50 in ihrer Blockierstellung möglichst spielfrei zu halten.

Die Überwachung der Endstellung im Hinblick auf ein eingetretenes Spiel der Schwenkblockiereinrichtung 50 kann im einfachsten Fall durch einen festgelegten Grenzwert für die Abweichung der ermittelten Drehstellungsinformationen DSI von der Drehstellungsinformation DSI für die jeweilige Endstellung erfolgen.

Die Präzision der Erfassung des Spiels kann noch verbessert werden, wenn die insbesondere im Fahrbetrieb über der Zeitachse auftretenden Variationen der ermittelten Drehstellungsinformationen erfasst und über eine Variationsmusteranalyse ausgewertet werden.

Beispielsweise wird hierzu basierend auf diesen Variationen eine Schwankungsbandbreite ermittelt und mit einem Referenzwert für die Schwankungsbandbreite verglichen, da die Schwankungsbandbreite in der Endstellung im spielfreien Zustand geringer ist als in einem Spielbehafteten Zustand.

Der Betrieb der Schwenksteuerung 132 wird vorzugsweise durch eine übergeordnete Ablaufsteuerung 140 gesteuert, welche die Schwenksteuerung 132 in den jeweiligen Modi betreibt und ebenfalls über die Stellungsinformation DSI des Sensorsystems 130 jederzeit in der Lage ist, die Drehstellung des Schwenkelements 14 mit dem Kugelhals 10 zu ermitteln (Fig. 14).

Wie beispielsweise in Fig. 14 dargestellt, ist es bei diesem Ausführungsbeispiel vorteilhafterweise möglich, die Stellungsinformationen dahingehend auszuwerten, dass eine Visualisierung der Lage des Kugelhalses 10 relativ zur Schwenklagereinheit 20 mittels einer Visualisierungseinheit 136 erfolgen kann, so dass eine Bedienungsperson die Bewegungen des Kugelhalses von der Arbeitsstellung A in die Ruhestellung R oder umgekehrt verfolgen kann.

Außerdem können auf der Visualisierungseinheit vorteilhafterweise auch Betriebsmodi und/oder Betriebszustände und/oder Störungen der Ablaufsteuerung 140 und/oder der Schwenksteuerung 132, und/oder der Schwenkantriebseinheit, und/oder der Blockierantriebseinheit 110, sowie der Schwenkblockiereinrichtung 50 angezeigt werden.

Dies ist insbesondere auch dann vorteilhaft, wenn Störungen in dem Bewegungsablauf auftreten, so dass eine Bedienungsperson die Art der Störung erfassen kann.

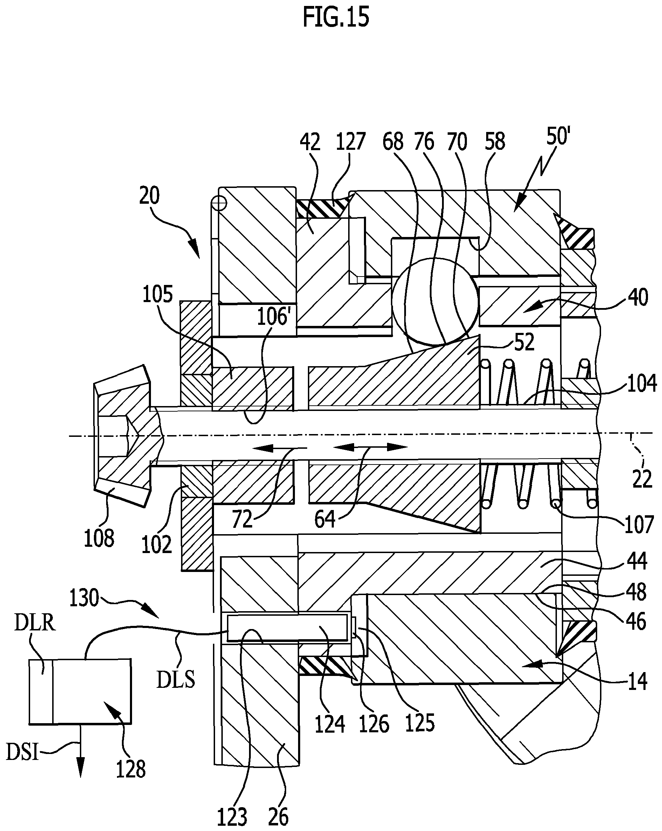

Ein zweites Ausführungsbeispiel einer erfindungsgemäßen Anhängekupplung, dargestellt in Fig. 15 bis Fig. 17, stellt eine Variante des ersten Ausführungsbeispiels dar, so dass diejenigen Elemente, die mit denen des ersten Ausführungsbeispiels identisch sind, dieselben Bezugszeichen aufweisen und hinsichtlich der Beschreibung derselben vollinhaltlich auf das erste Ausführungsbeispiel verwiesen werden kann.

Im Gegensatz zum ersten Ausführungsbeispiel ist der Betätigungskörper 52 nicht mit dem Innengewinde 106 versehen, sondern relativ zur Gewindespindel 100 frei bewegbar auf dieser geführt.

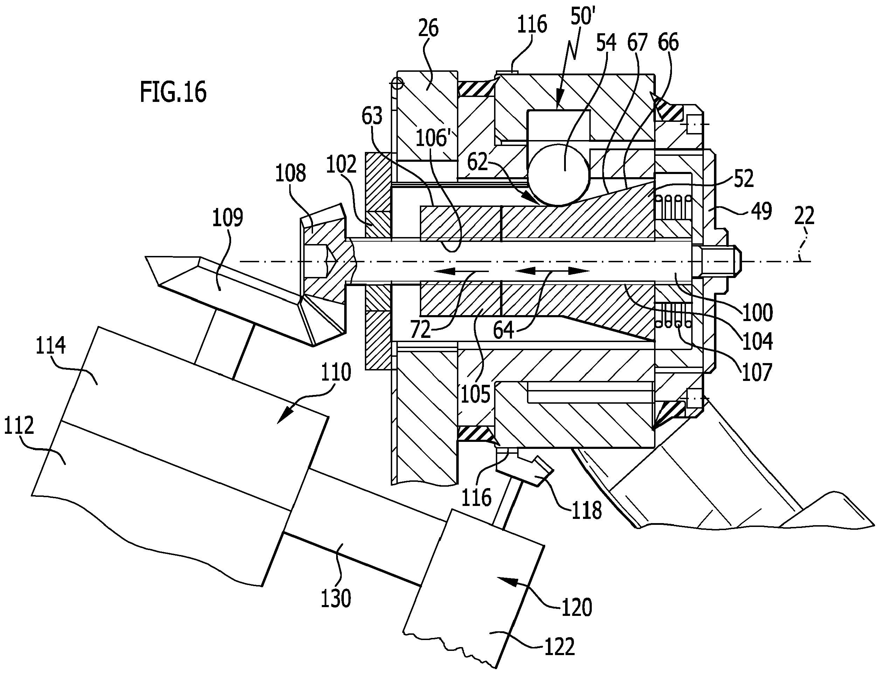

Allerdings sitzt auf der Gewindespindel 100 ein Entblockierelement 105, beispielsweise eine relativ zur Führungshülse 44 drehgesicherte, jedoch in der Richtung 64 verstellbare Spindelmutter 105, die mit dem Innengewinde 106' versehen und somit durch ein Drehen der Gewindespindel 100 bewegbar ist und die dazu dient, den Betätigungskörper 52 von seiner blockieraktiven Stellung, dargestellt in Fig. 15, in die blockierinaktive Stellung, dargestellt in Fig. 16 gegen die Kraft einer Druckfeder 107 zu bewegen, welche sich beispielsweise über den Anschlussdeckel 49 relativ zur Führungshülse 44 abstützt und auf den Betätigungskörper 52 einwirkt, um diesen in Richtung der blockieraktiven Stellung zu bewegen und in der blockieraktiven Stellung, das heißt der Blockierstellung der Schwenkblockiereinrichtung 50', mit einer Druckkraft zu beaufschlagen, die bewirkt, dass die Drehblockierkörper 54a, 54b, 54c kraftbeaufschlagt sind und mit einer Spannkraft in die Aufnahmen 58a, 58b, 58c gedrückt werden, um eine spielfreie Blockierung des Schwenkelements 14 in der Blockierstellung der Schwenkblockiereinrichtung 50' zu erreichen.

Um der Beaufschlagung des Betätigungskörpers 52 mit der Druckfeder 107 in der blockieraktiven Stellung des Betätigungskörpers 52 nicht entgegenzuwirken, steht die Spindelmutter 105 dann, wenn die blockieraktive Stellung des Betätigungskörpers 52, das heißt die Blockierstellung der Schwenkblockiereinrichtung 50', vorliegen soll, in einer in Fig. 15 dargestellten Ausgangsstellung, in welcher kein Zusammenwirken mit dem Betätigungskörper 52 erfolgt, so dass dieser ausschließlich der in der Richtung 72 wirkenden Kraft der Druckfeder 107 ausgesetzt ist und von dieser kraftbeaufschlagt in der blockieraktiven Stellung gehalten wird.

Erst wenn eine Bewegung des Betätigungskörpers 52 in die blockierinaktive Stellung erfolgen soll, wird die Spindelmutter 105 durch Antreiben der Gewindespindel 100 mittels der Blockierantriebseinheit 110 entgegengesetzt zu der Richtung 72 aus der Ausgangsstellung herausbewegt, wirkt dann auf den Betätigungskörper 52 und bewegt diesen gegen die Kraft der Druckfeder 107 in die blockierinaktive Stellung, in welcher die Freilaufstellung der Schwenkblockiereinrichtung 50' vorliegt.

Die Spindelmutter 105 hält dann den Betätigungskörper 52 so lange in der blockierinaktiven Stellung bis das Schwenkelement 14 die Arbeitsstellung oder die Ruhestellung verlassen hat und in Richtung der jeweils anderen Stellung verschwenkt wird.

Vor Erreichen der jeweils anderen Stellung wird dann die Spindelmutter 105 durch die Gewindespindel 100 und die Blockierantriebseinheit 110 in ihre Ausgangsstellung bewegt, so dass die Schwenkblockiereinrichtung 50' so lange in einer Blockierbereitschaftsstellung steht.

Dadurch dass die Drehblockierkörper 54a, 54b, 54c erst bei Erreichen der jeweils anderen Endstellung in die Aufnahmen 58a, 58b, 58c eingreifen können, verbleibt der Betätigungskörper 52 trotz Beaufschlagung durch die Druckfeder 107 in der blockierinaktiven Stellung und somit die Schwenkblockiereinrichtung 50' in der Blockierbereitschaftsstellung so lange, bis die jeweilige andere Endstellung erreicht ist und geht dann, aufgrund der Einwirkung der Druckfeder 107 in die blockieraktive Stellung über und somit geht die Schwenkblockiereinrichtung 50' in die Blockierstellung über, und wird in dieser dann weiterhin durch die Druckfeder 107 gehalten.

Im Gegensatz zum ersten Ausführungsbeispiel ist ein Haltebetriebsmodus HBM der Schwenksteuerung 132' nicht erforderlich, da die Druckfeder 107 den Betätigungskörper 52 in der Blockierstellung der Schwenkblockiereinrichtung 50' stets mit Kraft beaufschlagt.

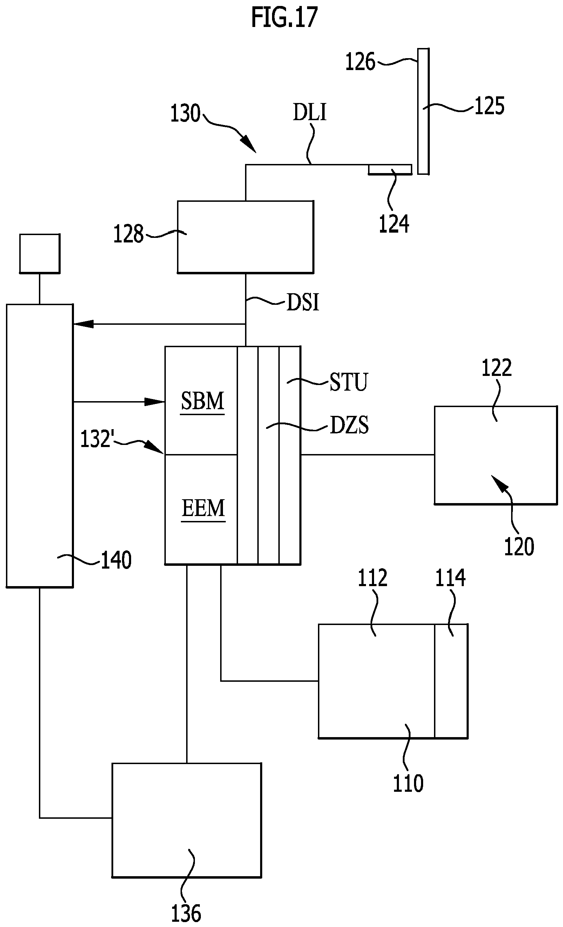

Allerdings ist die in Fig. 17 dargestellt Schwenksteuerung 132' so ausgebildet, dass sie in einem Endstellungserfassungsmodus EEM aufgrund der Stellungsinformationen DSI erkennt, dass das Erreichen der jeweils anderen Endstellung bevorsteht und dann bereits die Blockierantriebseinheit 110 im Sinne einer Bewegung der Spindelmutter 105 in die Ausgangsstellung ansteuert, so dass diese die Ausgangsstellung vor Erreichen der jeweils anderen Endstellung einnimmt und folglich bei Erreichen der Endstellung der Betätigungskörper 52 nur durch die Einwirkung der Druckfeder 107 auf diesen in die blockieraktive Stellung übergeht und in dieser gehalten wird, bis wieder ein Lösen der Schwenkblockiereinrichtung 50' durch einen Übergang derselben in die Freilaufstellung erfolgen soll.

Wie beispielhaft in Fig. 17 dargestellt, ist es bei diesem Ausführungsbeispiel vorteilhafterweise möglich, die Stellungsinformationen DSI dahingehend auszuwerten, dass eine Visualisierung der Lage des Kugelhalses 10 relativ zur Schwenklagereinheit 20 mittels einer Visualisierungseinheit 136 erfolgen kann, so dass eine Bedienungsperson die Bewegungen des Kugelhalses von der Arbeitsstellung A in die Ruhestellung R oder umgekehrt verfolgen kann.

Außerdem können auf der Visualisierungseinheit 136 vorteilhafterweise auch Betriebsmodi und/oder Betriebszustände und/oder Störungen der Ablaufsteuerung 140 und/oder der Schwenksteuerung 132', und/oder der Schwenkantriebseinheit 120, und/oder der Blockierantriebseinheit 110, sowie der Schwenkblockiereinrichtung 50 angezeigt werden.

Dies ist insbesondere auch dann vorteilhaft, wenn Störungen in dem Bewegungsablauf auftreten, so dass eine Bedienungsperson die Art der Störung auf der Visualisierungseinheit 136 erfassen kann.

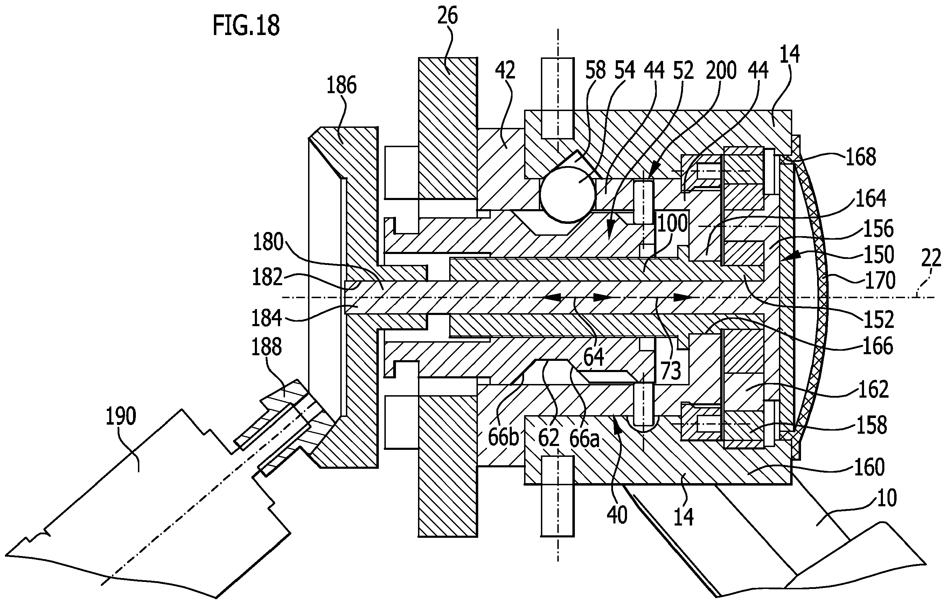

Bei einem dritten Ausführungsbeispiel einer erfindungsgemäßen Anhängekupplung, dargestellt in Fig. 18, sind diejenigen Merkmale, die mit denen des ersten und zweiten Ausführungsbeispiels identisch sind, mit denselben Bezugszeichen versehen, so dass auf die Beschreibung derselben vollinhaltlich Bezug genommen werden kann.

Im Gegensatz zum ersten und zweiten Ausführungsbeispiel ist bei dem dritten Ausführungsbeispiel der Betätigungskörper 52 beiderseits der Rückzugaufnahme 62 mit sich radial zur Schwenkachse 22 beispielsweise konisch nach außen erweiternden Druckflächen 66a und 66b versehen, mit denen die Drehblockierkörper 54 radial nach außen bewegbar sind. Somit sind durch die Rückzugsaufnahme 62 eine Freilaufstellung, durch die Druckflächen 66a eine erste Drehblockierstellung und durch die Druckflächen 66b eine zweite Drehblockierstellung realisierbar.

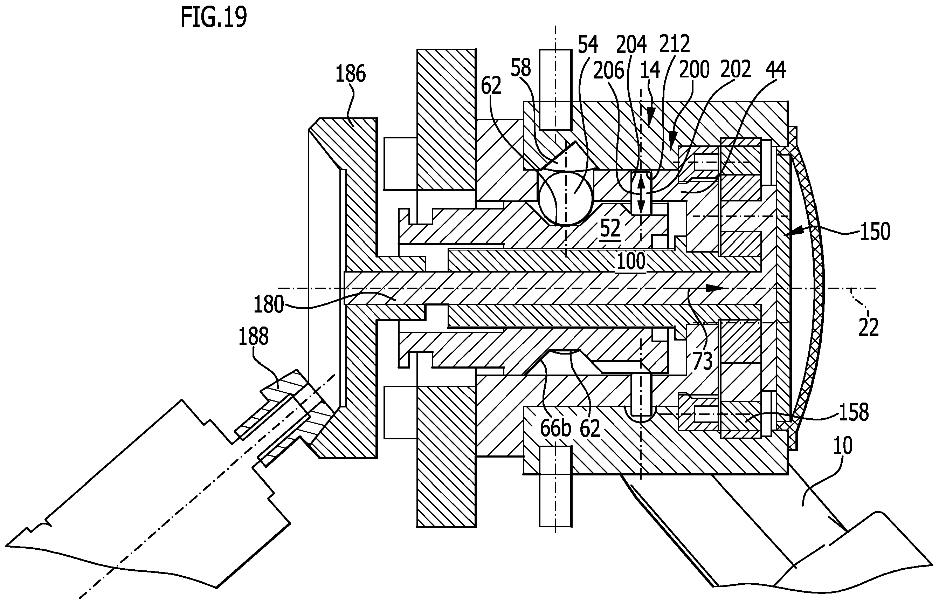

Es besteht die Möglichkeit, ausgehend von der ersten Drehblockierstellung, dargestellt in Fig. 18, in welcher die Drehblockierkörper 54 durch die Druckflächen 66 radial nach außen in die Aufnahmen 58 gedrückt sind, durch Verschieben des Betätigungskörpers 52 in der axialen Richtung 64, und zwar in einer Richtung 73 von der Tragplatte 26 weg, den durch die erste Drehblockierstellung verriegelten Zustand des Schwenkelements 14 zu lösen, nämlich dadurch, dass, wie in Fig. 19 dargestellt, die Drehblockierkörper 54 die Möglichkeit haben, in die Rückzugsaufnahmen 62 und somit in die Freilaufstellung überzugehen, in der sie sich so weit in die Führungshülse 44 hineinbewegen, dass das Schwenkelement 14 frei auf der Führungshülse 44 drehbar ist.

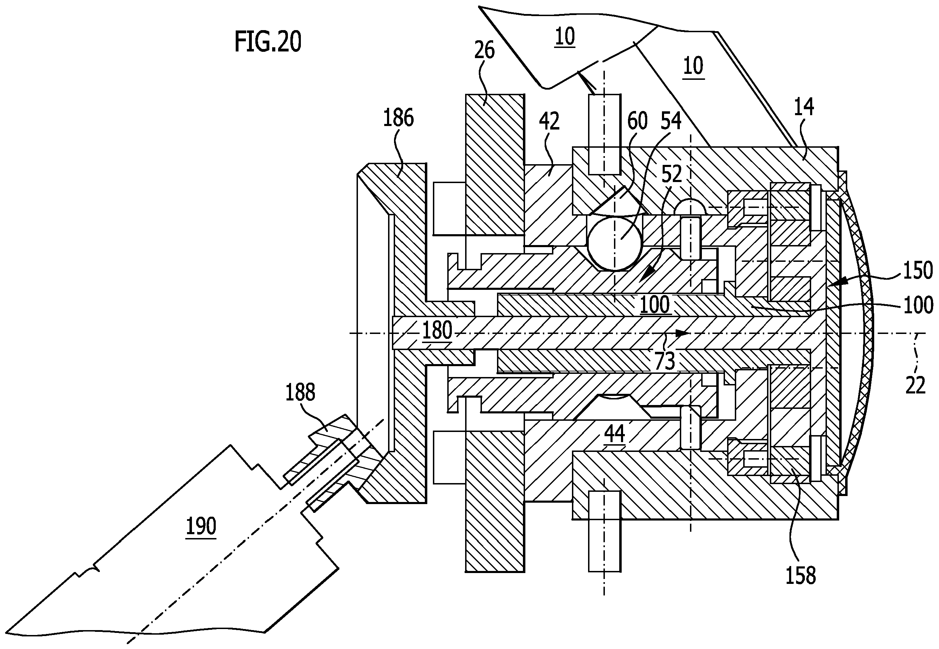

In dieser entriegelnden Stellung des Schwenkelements 14 kann dieses frei um die Schwenkachse 22 verschwenkt werden und es besteht die Möglichkeit, beispielsweise den Kugelhals 10 von der Arbeitsstellung A, dargestellt in Fig. 18 in die Ruhestellung R zu überführen, in welcher der Kugelhals 10 sich ungefähr auf einer der Arbeitsstellung A gegenüberliegenden Seite der Schwenkachse 22 erstreckt, wie dies in Fig. 20 dargestellt ist.

In dieser Ruhestellung R stehen dann die Aufnahmen 60 wiederum den Drehblockierkörpern 54 gegenüber und es besteht die Möglichkeit, durch weiteres Verschieben des Betätigungskörpers 52 in der Richtung 73 mittels der Druckflächen 66b die Drehblockierkörper 54 wiederum radial nach außen, in die Aufnahmen 60 hineinzubewegen und somit wiederum die bereits beschriebene, formschlüssige Verriegelung des Schwenkelements 14 zur Führungshülse 40 durch Erreichen der zweiten Drehblockierstellung zu erhalten.

Im Gegensatz zum ersten und zweiten Ausführungsbeispiel erfolgt der Antrieb der Gewindespindel 100 nicht direkt über die Blockierantriebseinheit 110, sondern durch Antreiben eines Planetengetriebes 150, welches auf einer der Tragplatte 26 abgewandten Seite des Betätigungskörpers 52 angeordnet ist.

Das Planetengetriebe 150 umfasst ein Sonnenrad 152, welches drehfest mit der Gewindespindel 100 verbunden ist, vorzugsweise einstückig an diese angeformt ist.

Das Sonnenrad 152 wird dabei angetrieben durch Planetenräder 154, die an einem Planetenradträger 156 drehbar gelagert sind.

Die Planetenräder 154 kämmen auf ihrer radial innen liegenden Seite mit dem Sonnenrad 152 und auf ihrer radial außen liegenden Seite mit einem Hohlrad 158, das drehfest mit dem Schwenkelement 14 verbunden ist.

Vorzugsweise erstreckt sich hierzu das Schwenkelement 14 mit seiner der Tragplatte 26 abgewandten Seite über die Führungshülse 44 hinaus mit einem hülsenähnlichen Abschnitt 160, welcher einen Innenraum 162 umschließt, in welchem das Planetengetriebe 150 angeordnet ist.

Dabei sitzt das Hohlrad 158 des Planetengetriebes 150 unmittelbar auf einer Innenseite des hülsenähnlichen Abschnitts 160 des Schwenkelements 14 und ist drehfest mit diesem verbunden.

Der Innenraum 162 ist ferner in Richtung der Tragplatte 26 begrenzt durch eine Abschlusswand 164 des Führungskörpers 44, welche ein Axial- und Radiallager 166 zur Lagerung der Gewindespindel 100 trägt und andererseits begrenzt durch einen eine äußere Öffnung 168 des hülsenähnlichen Abschnitts 160 des Schwenkelements 14 verschließenden Deckel 170 der den Innenraum 162 auf einer der Abschlusswand 164 gegenüberliegenden Seite des Planetengetriebes 150 abschließt.

Ein Antreiben des Planetengetriebes 150 erfolgt durch ein Antreiben des Planetenradträgers 156, der einstückig mit einer Antriebswelle 180 verbunden ist, die von dem Planetenradträger 156 durch eine zentrale Bohrung 182 der Gewindespindel 100 und somit koaxial durch diese hindurchgeführt ist, und dabei von dem Innenraum 162 durch die Gewindespindel 100 und somit auch zentral durch den Betätigungskörper 52 bis zu einer dem Betätigungskörper 52 gegenüberliegenden Seite der Tragplatte 26 geführt ist und an ihrem auf der dem Betätigungskörper 52 gegenüberliegenden Seite der Tragplatte angeordneten Ende 184 ein Antriebsrad 186 trägt, welches mit einem Abtriebsrad 188 einer Gesamtantriebseinheit 190 kämmt, die einen Elektromotor 192 und ein Untersetzungsgetriebe 194 umfasst.

Das Planetengetriebe 150 erlaubt nun einen Wechsel zwischen einem Antreiben des Schwenkelements 14 durch das einen Abtrieb des Planentengetriebes 150 darstellenden Hohlrads 158 und einen Antrieb der Gewindespindel 100 durch das einen Abtrieb des Planetengetriebes 150 darstellenden Sonnenrades 152 seitens der Planetenräder 154, die durch Drehen des Planetenradträgers 156 mittels der Gesamtantriebseinheit 190 um die Schwenkachse 22 umlaufend bewegbar angetrieben sind.

Der Wechsel zwischen einem Antreiben der Gewindespindel 100 und einem Antrieb des Hohlrades 158 erfolgt dabei - wie bei einem Planetengetriebe üblich - abhängig davon, ob eine Drehbewegung des einen Abtrieb darstellenden Hohlrades 158 oder eine Drehbewegung des den anderen Abtrieb darstellenden Sonnenrades 152 blockiert ist.

In der verriegelten Stellung des Schwenkelements 14, dargestellt in Fig. 18, ist das Hohlrad 158 in hinsichtlich einer Drehbewegung um die Schwenkachse 22 blockiert, da das drehfest mit dem Hohlrad 158 verbundene Schwenkelement 14 auf dem Führungskörper 40 durch die Drehblockierkörper 54 drehfest festgelegt ist, die auf den Druckflächen 66a des in seiner ersten Drehblockierstellung stehenden Betätigungskörpers 52 aufsitzen.

Aus diesem Grund bewirkt ein Antreiben des Planetenradträgers 156 durch die Gesamtantriebseinheit 190 eine Drehbewegung des Sonnenrades 152 mit der für ein Planetengetriebe üblichen Untersetzung, so dass dadurch die Gewindespindel 100 derart angetrieben ist, dass diese den Betätigungskörper 52 in der Richtung 73 bewegt, und zwar so lange, bis, wie in Fig. 20 dargestellt, in der Freilaufstellung des Betätigungskörpers 52 die Drehblockierkörper 54 auf der Rückzugsaufnahme 62 aufliegen. Damit geben die Drehblockierkörper 54 die Drehbewegung des Schwenkelements 14 relativ zum Führungskörper 40 frei, und dieses ist nun in der Lage, sich um die Schwenkachse 22 zu drehen, was zur Konsequenz hat, dass auch das Hohlrad 158 nicht mehr drehfest stehen bleibt, sondern die Möglichkeit hat, sich ebenfalls zu drehen.

Um eine definierte Schwenkbewegung des Schwenkelements 14 in dieser Freilaufstellung des Betätigungskörpers 52 und der Drehblockierkörper 54 durchführen zu können, ist vorzugsweise noch eine als Ganzes mit 200 bezeichnete erste Hemmvorrichtung vorgesehen.

Die erste Hemmvorrichtung 200 umfasst, wie in Fig. 18 bis 25 dargestellt, einen Hemmkörper 202, welcher in einer Führungsaufnahme 204 der Führungshülse 44 in einer Führungsrichtung 206, die vorzugsweise radial zur Schwenkachse 22 verläuft, bewegbar ist und mit einer inneren Kulissenbahn 210, die am Betätigungskörper 52 vorgesehen ist, sowie einer äußeren Kulissenbahn 212, die am Schwenkelement 14 angeordnet ist, zusammenwirkt.

Die innere Kulissenbahn 210, vorgesehen in einem radial außen liegenden Bereich des Betätigungskörpers 52 ist zum Teil als radiale Ausnehmung im Betätigungskörper 52 ausgebildet und umfasst eine am Ausnehmungsgrund parallel zur axialen Richtung 64 verlaufende innen liegende Gleitfläche 220, eine schräg zur innen liegenden Gleitfläche radial zunehmend nach außen verlaufende Hemmfläche 222 und eine sich an die Hemmfläche 222 anschließende außen liegende Gleitfläche 224, die im einfachsten Fall durch einen Mantelbereich des Betätigungskörpers 52 gebildet ist.

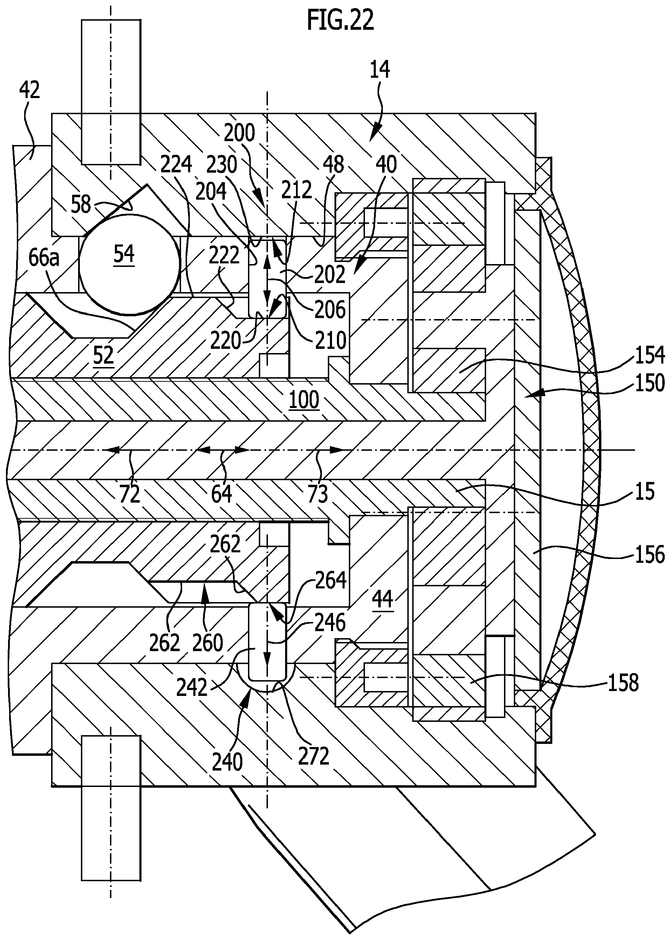

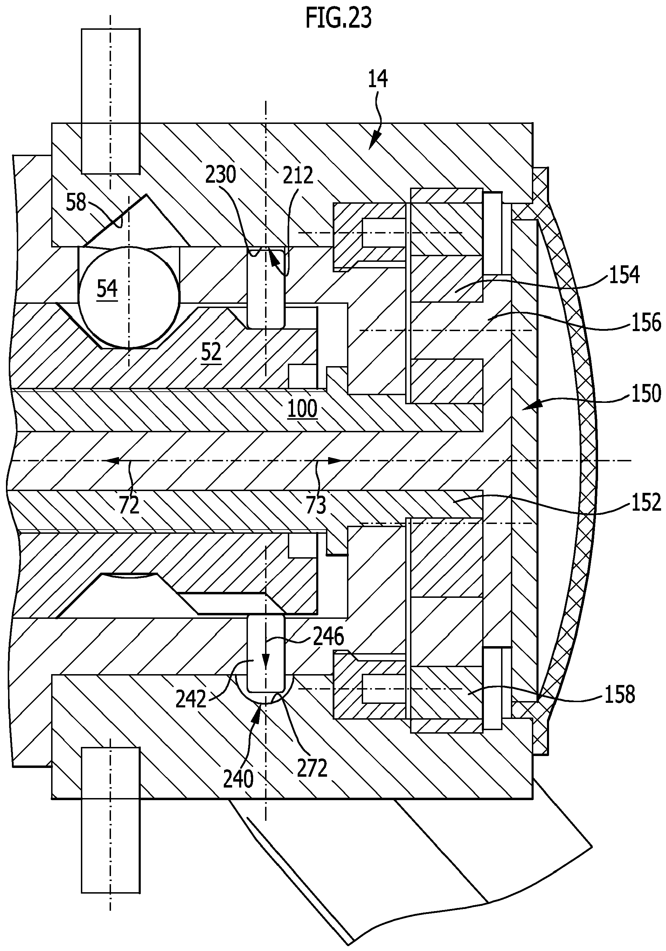

Die äußere Kulissenbahn 212 umfasst eine durch einen Teilbereich der Innenfläche 48 des Schwenkelements 14 gebildete Gleitfläche 230, dargestellt in Fig. 22 und 23 und eine sich an die Gleitfläche 230 anschließende radial zur Schwenkachse 22 nach außen verlaufende Vertiefung 232, die dem Hemmkörper 202 nur dann gegenüberliegend angeordnet ist, wenn der Schwenkelement 14 in einer definierten Schwenkstellung, beispielsweise in der Ruhestellung, steht.

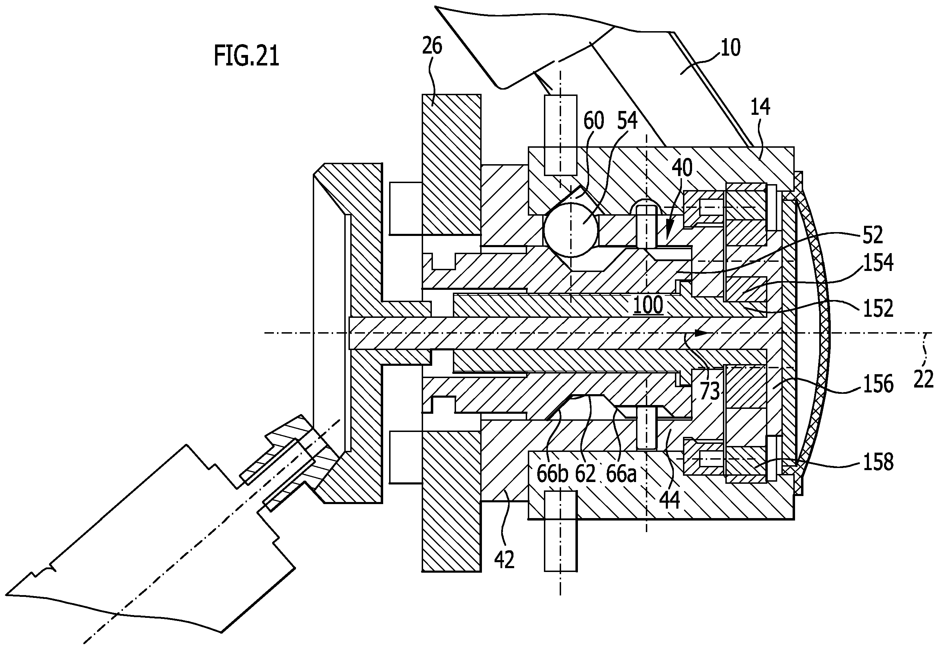

Die erste Hemmvorrichtung 200 funktioniert nun, wie in den Fig. 21 bis 25, welche den Fig. 18 bis 21 entsprechen, dargestellt, so, dass der Hemmkörper 202 in der ersten Drehblockierstellung zwischen der innen liegenden Gleitfläche 220 der inneren Kulissenbahn 210 und der Gleitfläche 230 der äußeren Kulissenbahn 212 mit geringem Spiel angeordnet ist.

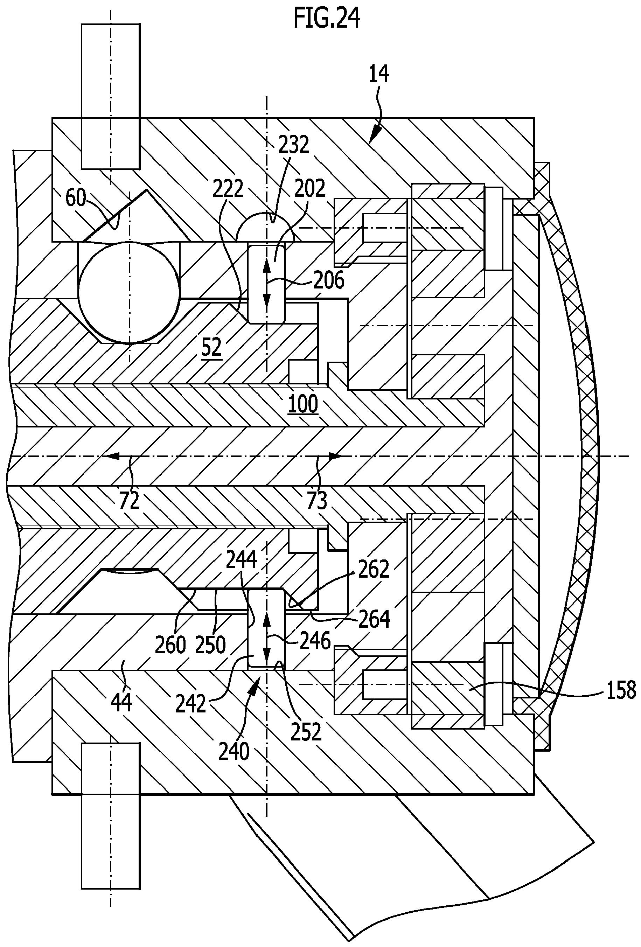

Die innen liegende Gleitfläche 220 hat nun eine derartige Länge, dass der Betätigungskörper 52 von der ersten Drehblockierstellung, dargestellt in Fig. 22, in die Freilaufstellung, dargestellt in Fig. 23 und Fig. 24 bewegbar ist, ohne dass der Hemmkörper 202 die Hemmfläche 222 der inneren Kulissenbahn 210 erreicht.

Der Hemmkörper 202 berührt, wie in Fig. 23 und Fig. 24 dargestellt, die Hemmfläche 222 der inneren Kulissenbahn 210 dann, wenn der Betätigungskörper 52 in der Freilaufstellung steht, wie in Fig. 23 und Fig. 24 dargestellt.

In der Freilaufstellung kommt die Hemmfläche 222 an dem Hemmkörper 202 zur Anlage und eine weitere Verschiebung des Betätigungskörpers 52 in der Richtung 73 über die Freilaufstellung hinaus in Richtung der zweiten Drehblockierstellung würde es erforderlich machen, dass der Hemmkörper 202 aufgrund der Wechselwirkung mit der Hemmfläche 222 die Möglichkeit haben müsste, sich in seiner Führungsrichtung 206 radial zur Schwenkachse 22 nach außen zu bewegen. Diese Bewegung des Hemmkörpers 202 ist jedoch durch die Gleitfläche 230 der äußeren Kulissenbahn 212 so lange blockiert, bis das Schwenkelement 14 so weit um die Schwenkachse 22 verschwenkt ist, dass dem Hemmkörper 202 die Vertiefung 232 der äußeren Kulissenbahn 212 gegenübersteht.

Solange dies jedoch nicht der Fall ist, hemmt der Hemmkörper 202 durch Zusammenwirken mit der Hemmfläche 222 beim Verschieben des Betätigungskörpers 52 von der ersten Drehblockierstellung in die Freilaufstellung in dieser Freilaufstellung, wie in Fig. 23 dargestellt, eine weitere Verschiebebewegung des Betätigungskörpers 52 in der Richtung 73 und dadurch erfolgt eine Blockade der Drehbewegung der Gewindespindel 100 und somit der Drehbewegung des Sonnenrads 152.

Bei weiterem Antrieb des Planetengetriebes 150 durch die Gesamtantriebseinheit 190 erfolgt aufgrund der Blockierung des Sonnenrads 152 ein Drehantrieb des Hohlrades 158 durch die umlaufenden Planetenräder 154 und eine derartige Drehbewegung des Hohlrades 158 ist dadurch möglich, dass der Betätigungskörper 52 und somit auch die Drehblockierkörper 54 in der Freilaufstellung stehen und die Drehbewegung des Schwenkelements 14 freigeben.

Somit bewirkt die weiterlaufende Gesamtantriebseinheit 190 bei Erreichen der Freilaufstellung ausschließlich eine Schwenkbewegung des Schwenkelements 14, beispielsweise von der Arbeitsstellung A in die Ruhestellung R, und in dieser Ruhestellung liegt dann, wie in Fig. 24 dargestellt, die Vertiefung 232 der äußeren Kulissenbahn 212 gegenüber.

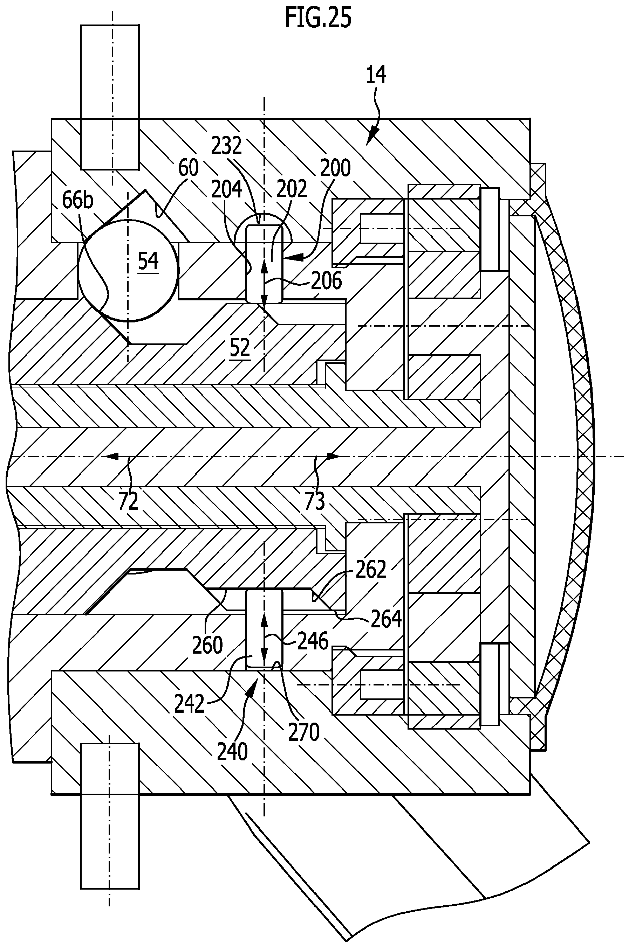

In diesem Moment wird die Hemmwirkung des mit der Hemmfläche 222 der innen liegenden Kulissenbahn 210 zusammenwirkenden Hemmkörpers aufgehoben, da sich der Hemmkörper 202 in seiner Führungsrichtung 206 radial nach außen durch Entlanggleiten auf der Hemmfläche 222 bewegen und die außen liegende Gleitfläche 224 erreichen kann. Dies erlaubt, wie in Fig. 24 und 25 dargestellt, ein weiteres Verschieben des Betätigungskörpers 52 in der Richtung 73, so dass der Betätigungskörper 52 von der Freilaufstellung in die zweite Drehblockierstellung übergehen kann, in welcher die Druckflächen 66b die Drehblockierkörper 54 in die Aufnahmen 60 hineinbewegen und dadurch das Schwenkelement 14 drehfest verriegeln.

Die erste Hemmvorrichtung 200 hat somit die Aufgabe, die Verschiebebewegung des Betätigungskörpers 52 beim Übergang von der ersten Drehblockierstellung in die Freilaufstellung in der Freilaufstellung so lange zu hemmen, bis eine Schwenkbewegung des Schwenkelements 14 von der Arbeitsstellung A in die Ruhestellung R erfolgt ist und erst dann wieder eine Fortsetzung der Verschiebebewegung des Betätigungskörpers 52 in der Richtung 73 zuzulassen, wenn die Schwenkbewegung des Schwenkelements 14 von der Arbeitsstellung A in die Ruhestellung R beendet ist.

Soll nun in der Ruhestellung R wiederum die Verriegelung des Schwenkelements 14 gelöst und das Schwenkelement von der Ruhestellung R in die Arbeitsstellung A zurückgedreht und in der Arbeitsstellung A verriegelt werden, so erfolgt ein Umschalten der Drehrichtung der Gesamtantriebseinheit 190 und eine Verschiebung des Betätigungskörpers 52 in der Richtung 72. In diesem Fall wird ausgehend von der zweiten Drehblockierstellung, die das Schwenkelement 14 in der Ruhestellung R verriegelt, zunächst die in Fig. 24 dargestellte Freilaufstellung erreicht, in welcher die Verriegelung des Schwenkelements 14 gelöst ist.

Um nun in dieser Stellung zu verhindern, dass die Gewindespindel 100 den Betätigungskörper 52 in Richtung der ersten Drehblockierstellung weiter in Richtung 72 verschiebt, ist eine zweite Hemmvorrichtung 240 vorgesehen, die ebenfalls einen Hemmkörper 242 aufweist, welcher in einer Führungsaufnahme 244 in der Führungshülse 44 geführt ist und in einer Führungsrichtung 246 radial zur Schwenkachse bewegbar ist.

Auch die zweite Hemmvorrichtung umfasst eine innere Kulissenbahn 250 und eine äußere Kulissenbahn 252, wobei die innere Kulissenbahn 250 analog zur ersten Hemmvorrichtung eine innen liegende Gleitfläche 260, eine Hemmfläche 262 und eine außen liegenden Gleitfläche 264 aufweist, die ebenfalls in einem radial außen liegenden Bereich des Betätigungskörpers 52 vorgesehen sind, welcher beispielsweise in einem Winkelabstand von der ersten Hemmvorrichtung 200, vorzugsweise dieser gegenüberliegend, am Betätigungskörper 52 angeordnet ist.

Ferner weist die äußere Kulissenbahn 252 der zweiten Hemmvorrichtung 240 eine Gleitfläche 270 und eine Vertiefung 272 auf, wobei die Vertiefung 272 nur dann dem Hemmkörper 242 gegenüberliegend angeordnet ist, wenn das Schwenkelement 14 in seiner Arbeitsstellung steht und ansonsten die Gleitfläche 270 wirksam ist.

Bei einer Bewegung des Betätigungskörpers 52 in der Richtung 72 wird nun die zweite Hemmvorrichtung 240 in analoger Weise wirksam wie die erste Hemmvorrichtung 200, es erfolgt nämlich nach Bewegen des Betätigungskörpers 52 von der zweiten Drehblockierstellung in die Freigabestellung eine Hemmung einer weiteren Bewegung des Betätigungskörpers 52 in dieser Richtung, somit eine Hemmung der Drehbewegung der Gewindespindel 100 und des Sonnenrades 152, so dass die weiter durch die Gesamtantriebseinheit 190 angetriebenen Planetenräder 154 aufgrund des in der Freilaufstellung nicht mehr verriegelten Schwenkelement 14, wie in Fig. 24 dargestellt, das Hohlrad 158 antreiben und damit das Schwenkelement 14 von der Ruhestellung R in die Arbeitsstellung A verschwenken.

Bei Erreichen der Arbeitsstellung A des Schwenkelements 14 steht die Vertiefung 272 dem Hemmkörper 242 gegenüber, so dass dieser nun unter Einwirkung der Hemmfläche 262 die Möglichkeit hat, in seiner Führungsrichtung 246 radial zur Schwenkachse 22 nach außen auszuweichen, wie dies in Fig. 23 dargestellt ist.

Damit wird die Hemmung der Bewegung des Betätigungskörpers 52 in der Richtung 72 aufgehoben und das Planetengetriebe 150 treibt wieder über das Sonnenrad 152 die Gewindespindel 100 an, so dass diese den Betätigungskörper 52 in der Richtung 72 weiter in Richtung seiner ersten Drehblockierstellung verschieben kann, in welcher die Drehblockierkörper 54 wieder in die Drehblockierstellung übergehen und in die Aufnahmen 58 eingreifen, um das Schwenkelement 14 in der Arbeitsstellung A zu verriegeln.

Ferner verlässt bei der Schwenkbewegung des Schwenkelements 14 von der Ruhestellung R in die Arbeitsstellung A der erste Hemmkörper 202 der ersten Hemmvorrichtung 200 die Vertiefung 232 und gleitet wieder längs der Gleitfläche 230 der äußeren Kulissenbahn 212.

Die Hemmkörper 202 und 242 der Hemmvorrichtungen 200 und 240 können in unterschiedlichster Art und Weise ausgebildet sein. Beispielsweise können die Hemmkörper 202 und 242, wie in den Fig. 22 bis 24 dargestellt, zylindrische Stifte sein. Es ist aber auch denkbar, die Hemmkörper 202 und 242 ähnlich den Drehblockierkörpern 54 als Kugeln auszubilden und die inneren Kulissenbahnen 210 und 250 sowie die äußeren Kulissenbahnen 212 und 252 in ihrer Form und ihrem Verlauf entsprechend anzupassen.

Die erfindungsgemäße Lösung gemäß dem dritten Ausführungsbeispiel erlaubt es somit, eine Gesamtantriebeinheit 190 zu verwenden und mit der Gesamtantriebseinheit durch Antreiben des Planetengetriebes 150 in einer einzigen Drehrichtung zunächst die Verriegelung des Schwenkelements 14 gegenüber dem Führungskörper 40 zu lösen, das Schwenkelement 14 von einer Drehstellung, beispielsweise der Arbeitsstellung A oder der Ruhestellung R in die jeweils andere Drehstellung, beispielsweise die Ruhestellung R oder die Arbeitsstellung A, zu verschwenken und in dieser jeweils anderen Drehstellung wiederum das Schwenkelement 14 relativ zum Führungskörper 40 zu verriegeln.

Durch einen einfachen Wechsel der Drehrichtung der Gesamtantriebseinheit ist es dann wiederum möglich, in der anderen Drehstellung, beispielsweise der Ruhestellung R oder der Arbeitsstellung A, die Verriegelung des Schwenkelements 14 relativ zum Führungskörper 40 zu lösen, das Schwenkelement 14 von der anderen Drehstellung in die eine Drehstellung, beispielsweise die Arbeitsstellung A oder die Ruhestellung R, zurückzuverschwenken und in dieser jeweils einen Drehstellung wiederum das Schwenkelement 14 relativ zum Führungskörper 40 zu verriegeln.

Die einzige schaltungstechnische Maßnahme bei einem derartigen Ausführungsbeispiel der erfindungsgemäßen Lösung ist somit das Bestromen der Gesamtantriebseinheit 190 in der jeweils erforderlichen Drehrichtung, wobei die beim Einschalten der Gesamtantriebseinheit 190 zu wählende Drehrichtung eindeutig mit der jeweiligen Drehstellung, in der das Schwenkelement 14 steht und verriegelt ist, korreliert ist.

Vorzugsweise sind bei dem dritten Ausführungsbeispiel die Aufnahmen 58 und 60 als kegelförmige Aufnahmen ausgebildet, so dass, wie in Fig. 22 und 24 erkennbar in diese Aufnahmen eindringende Drehblockierkörper 54 durch Zusammenwirken mit der kegelförmigen Aufnahme 58 oder 60 eine Kraft auf das Schwenkelement 14 erzeugt, die in Richtung des Flansches 42 wirkt und dieses somit kraftbeaufschlagt an dem Flansch 42 anlegt.

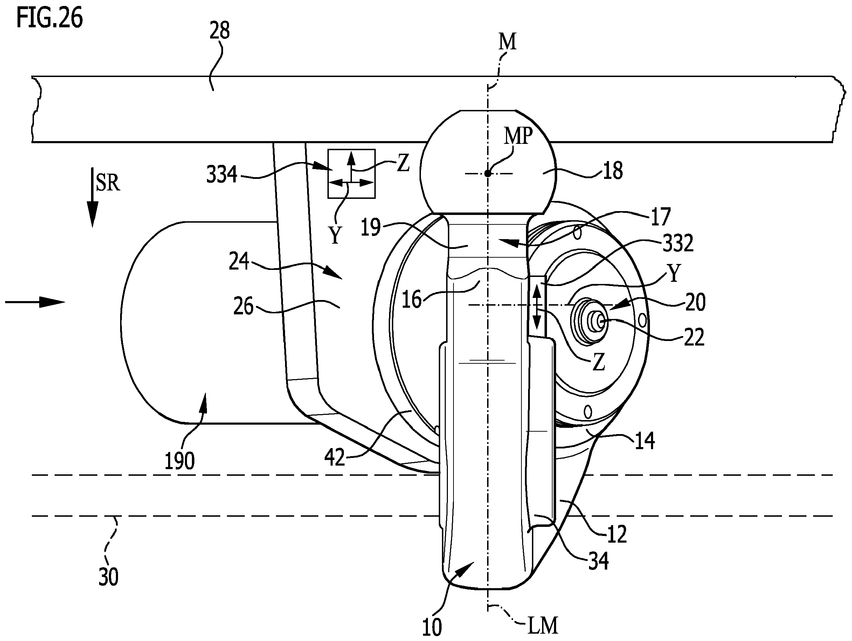

Bei dem dritten Ausführungsbeispiel ist, wie in den Fig. 26 bis 29 dargestellt, ein Sensorsystem 330 vorgesehen, welches einen ersten Sensor 332 und in einem zweiten Sensor 334 umfasst, wobei der erste Sensor 332 am Kugelhals 10 angeordnet ist und somit um die Schwenkachse 22 bewegbar ist, während der zweite Sensor 334 stationär, relativ zu der Schwenklagereinheit 20 angeordnet ist.

Der erste Sensor 332 und der zweite Sensor 334 sind vorzugsweise in MEMS-Technologie aufgebaute Mikroelektromechanische Systeme, die beispielsweise sowohl als Beschleunigungssensor als auch als Neigungssensor eingesetzt werden können.

Wie in den Fig. 26 bis 28 dargestellt, ist jeder dieser Sensoren 332, 334 als ungefähr quaderförmiger Block ausgebildet und in der Lage, in einer Raumrichtung X, Y oder Z und/oder in zwei Raumrichtungen und/oder in drei Raumrichtungen, beispielsweise den Raumrichtungen X, Y, Z Beschleunigungen zu messen und darüber hinaus in der Lage, in der YZ-Ebene Neigungen um die X-Achse als Drehachse und in der X-Z-Ebene Neigungen um die Y-Achse als Drehachse zu erfassen, wenn man davon ausgeht, dass das Koordinatensystem so ausgerichtet ist, dass die Z-Achse den kleinsten Winkel mit einer Schwerkraftrichtung SR einschließt, also ungefähr parallel zu dieser verläuft.

Vorzugsweise sind in dem in den Fig. 26 bis 28 dargestellten dritten Ausführungsbeispiel die Sensoren 332 und 334 so ausgerichtet, dass bei dem ersten Sensor 332 die Z-Achse in der Arbeitsstellung A des Kugelhalses 10 im Wesentlichen parallel zu der Schwerkraftrichtung SR oder in einem kleinen spitzen Winkel zu dieser verläuft und auch in der Ruhestellung, allerdings in invertierter Richtung ebenfalls im Wesentlichen parallel zur Schwerkraftrichtung SR oder in einem spitzen Winkel zu dieser verläuft.

Ferner ist der zweite Sensor 334 gemäß den Fig. 26 bis 28 so ausgerichtet, dass dessen Z-Richtung bei üblicher Montage der Anhängekupplung AK an einem Kraftfahrzeug F und einer Anordnung des Kraftfahrzeugs F auf einer horizontalen Fläche ebenfalls im Wesentlichen parallel oder in einem kleinen spitzen Winkel zur Schwerkraftrichtung SR verläuft.

Unter der Angabe "im Wesentlichen parallel" sind Abweichungen von einer exakt parallelen Ausrichtung von bis zu 5° (Winkelgrad) zu verstehen und unter "in einem kleinen spitzen Winkel zur Schwerkraftrichtung SR" sind Winkel von bis zu 30° zu verstehen.

Ferner ist der Sensor 332 in der Arbeitsstellung 332A so angeordnet, dass dessen Y-Richtung parallel zu einer senkrecht zur Schwenkachse 22 verlaufenden Schwenkebene SE verläuft und dessen X-Richtung senkrecht zu einer senkrecht zur Schwenkachse 22 verlaufenden Schwenkebene SE, also parallel zur Schwenkachse 22, verläuft und in der Ruhestellung 332R so angeordnet, dass die Y-Richtung ebenfalls parallel zu der senkrecht zur Schwenkachse 22 verlaufenden Schwenkebene SE verläuft und die X-Richtung näherungsweise senkrecht zu der senkrecht zur Schwenkachse 22 verlaufenden Schwenkebene SE verläuft.

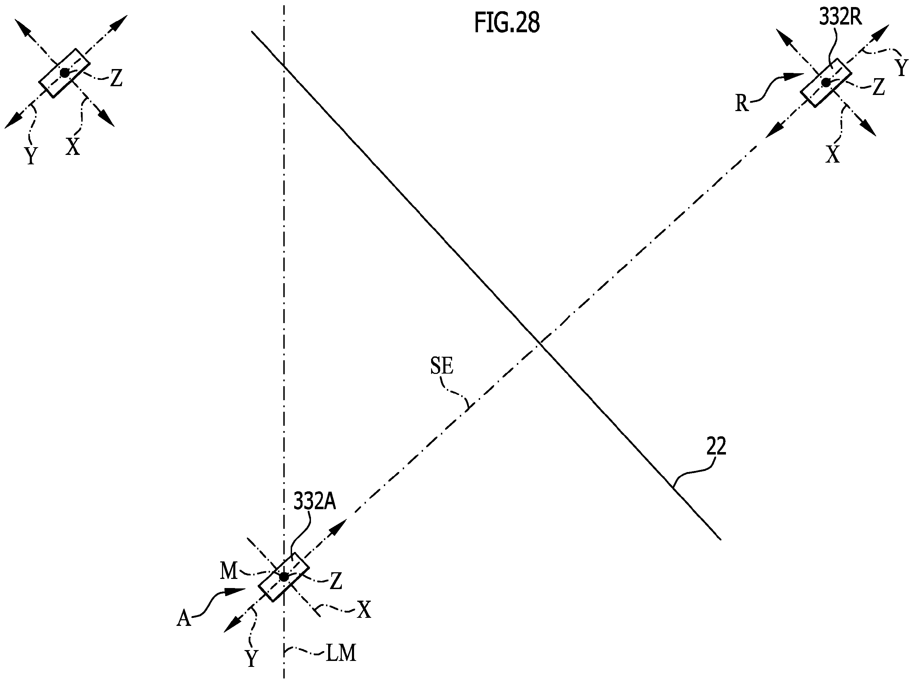

Ferner ist, wie in Fig. 28 dargestellt, der zweite Sensor 334 so angeordnet, dass dessen Y-Richtung parallel zu der senkrecht zur Schwenkachse 22 verlaufenden Schwenkebene SE verläuft und dessen X-Richtung senkrecht einer senkrecht zur Schwenkachse 22 verlaufenden Schwenkebene SE, also parallel zur Schwenkachse 22, verläuft.

Es ist aber in gleicher Weise denkbar, den zweiten Sensor 334 so anzuordnen, dass dessen X-Richtung parallel zur vertikalen Längsmittelebene LM der Anhängekupplung AK verläuft und dessen Y-Richtung quer, vorzugsweise senkrecht zur vertikalen Längsmittelebene LM der Anhängekupplung AK verläuft, in diesem Fall ist dann eine Umrechnung der Messwerte des zweiten Sensors 334 in dessen Koordinatensystem auf die Ausrichtung des Koordinatensystems des ersten Sensors 332 erforderlich, um eine Neigungsdifferenz zu ermitteln.

Die beiden Sensoren 332 und 334 sind mit einer Auswerteeinheit 338 verbunden, welche aufgrund folgender Auswertung der Signale der Sensoren 332 und 334 die Stellungsinformationen DSI liefert.

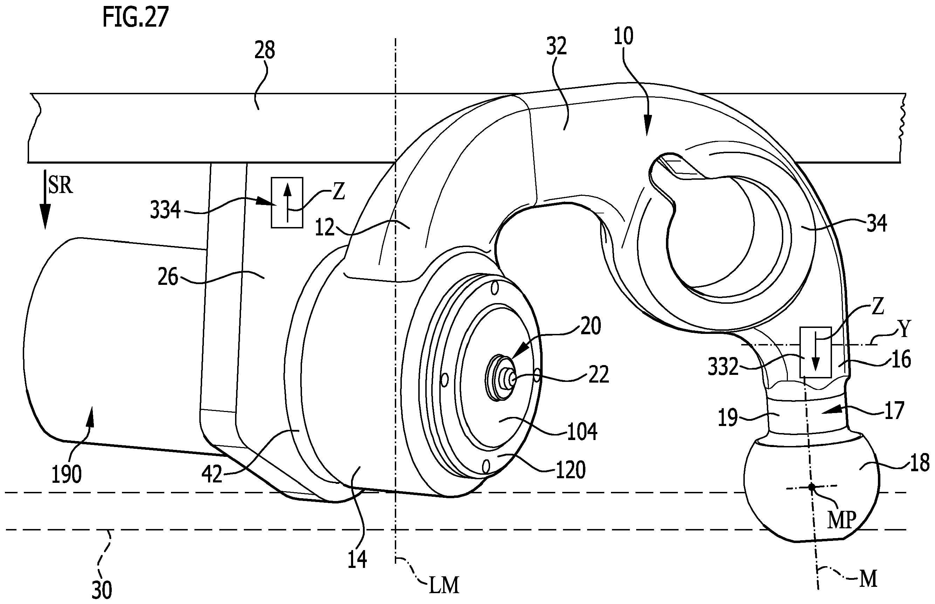

Wie sich aus den Fig. 26 bis 28 ergibt, führt ein Verschwenken des Schwenkelements 14 mitsamt dem Kugelhals 10 von der in Fig. 26 dargestellten Arbeitsstellung A in die in Fig. 27 dargestellte Ruhestellung R dazu, dass der erste Sensor 332 eine Veränderung der Neigung seiner Z-Achse relativ zur Schwerkraftrichtung SR um die X-Achse als Neigungsachse in der zur Schwenkebene SE parallelen YZ-Ebene detektiert und über einen Zustand, in welchem die Z-Richtung ungefähr senkrecht zur Schwerkraftrichtung SR verläuft, mit bezogen auf die Arbeitsstellung A zunehmender Neigung in der YZ-Ebene in die Ruhestellung R mit invertierter Ausrichtung übergeht, wobei beispielsweise in der Ruhestellung R die Z-Richtung relativ zur Z-Richtung in der Arbeitsstellung A um beispielsweise ungefähr 180° gedreht und somit invertiert ist.

Bereits diese Inversion der Z-Richtung beim Übergang von der Arbeitsstellung A in die Ruhestellung R würde für eine grobe Erkennung der Arbeitsstellung A und der Ruhestellung R ausreichend sein, insbesondere wenn die zwischen diesen Inversionen der Z-Richtung liegenden variierenden Neigungen der Z-Richtung in der YZ-Ebene von der Auswerteeinheit 338 mit berücksichtigt werden.

Eine Verbesserung der Auswertung der Neigung der Z-Richtung in der YZ-Ebene beim Übergang von der Arbeitsstellung A in die Ruhestellung R oder umgekehrt, ist dann noch erreichbar, wenn die Signale des Sensors 332 in Relation zur Ausrichtung des zweiten Sensors 334 gebracht werden, welcher einen Referenzsensor für die Ausrichtung der Anhängekupplung im Raum darstellt und somit aufgrund der, beispielsweise in einer der Endstellungen, insbesondere in der Arbeitsstellung A oder der Ruhestellung R, bekannten, beispielsweise parallelen, Ausrichtung der Z-Achsen eine Differenzmessung ermöglicht, die somit auch bei einer Schrägstellung des Kraftfahrzeugs F in jeder beliebigen Richtung einen zuverlässigen Referenzwert für die Lage der Z-Richtung des ersten Sensors 332 in einer der Endstellungen, insbesondere in der Arbeitsstellung A oder der Ruhestellung R, relativ zu der Ausrichtung der Z-Richtung des zweiten Sensors 334 im Raum ergibt.

Vorzugsweise ist die Auswerteeinheit 338 noch mit einem Referenzwertspeicher RWS versehen, in welchem für die relativen Ausrichtungen der Z-Achse des ersten Sensors 332 bezogen auf die Ausrichtung der Z-Achse des zweiten Sensors 334 Referenzwerte abgelegt sind, die mit Winkelangaben des Drehwinkels um die Schwenkachse 22 verknüpft sind, so dass aus der Neigung der Z-Achse des ersten Sensors 332 in Relation zur Ausrichtung der Z-Achse des zweiten Sensors 334 auf den Drehwinkel bezogen auf die Schwenkachse 22 und den Winkelabstand von den jeweiligen Endstellungen, das heißt der Arbeitsstellung A und der Ruhestellung R, geschlossen werden kann.

Die von dem Sensorsystem 330 generierte Stellungsinformation DSI, die vom Grundprinzip her derselben Stellungsinformation DSI entspricht, die durch das Sensorsystem 130 generiert wird, wird bei dem dritten Ausführungsbeispiel einer Schwenksteuerung 342 übermittelt, welche die Antriebseinheit 190 ansteuert.

Bei dem dritten Ausführungsbeispiel wirkt die Schwenksteuerung 342 noch zusätzlich mit einem Drehbewegungssensor 344 des Elektromotors 192 der Antriebseinheit 190 zusammen, welcher in der Lage ist, ein Drehbewegungssignal DBS des Elektromotors 192 zu generieren, so dass die Schwenksteuerung 342 einerseits mittels der Stellungsinformationen DSI Informationen über die Lage des Schwenkelements 14 mit dem Kugelhals 10 relativ zur Schwenkachse 22 vorliegen hat und außerdem über das Drehbewegungssignal DBS erkennen kann, wie viele Umdrehungen der Elektromotor 192 durchgeführt hat, und daraus eine Bewegungsrelation ermittelt. Arbeitet die Schwenksteuerung 342 im Schwenkbetriebsmodus SBM, so wird ausgehend von einer der Endstellungen, beispielsweise der Arbeitsstellung seitens der Schwenksteuerung 342 die Antriebseinheit 190 so angesteuert, dass sie sich mit einer Drehrichtung bewegt, in welcher zunächst ein Lösen der Blockierstellung der Schwenkblockiereinrichtung 50 erfolgt, wobei die Schwenksteuerung 342 einerseits durch die Stellungsinformation DSI erkennen kann, dass sich das Schwenkelement 14 mit dem Kugelhals 10 noch nicht um die Schwenkachse drehen, andererseits durch das Drehbewegungssignal DBS des Drehbewegungssensors 344 erkennen kann, dass der Antriebsmotor 192 aktiv ist und die Schwenkblockiereinrichtung 50 im Sinne eines Lösens eines Überführens derselben von der Blockierstellung in die Freilaufstellung antreibt.

Sobald die Freilaufstellung erreicht ist, erfolgt ein Schwenken des Schwenkelements 14 mit dem Kugelhals 10 um die Schwenkachse und dies ist für die Schwenksteuerung 342 anhand der Stellungsinformation DSI, erzeugt durch das Sensorsystem 330 erkennbar, wobei aus der dabei beispielsweise konstant bleibenden Bewegungsrelation erkennbar ist, dass nur ein Antreiben der Schwenkbewegung erfolgt und kein Antreiben der Schwenkblockiereinrichtung 50.

Ferner ist aus der Drehstellungsinformation DSI erkennbar, dass das Schwenkelement 14 mit dem Kugelhals 10 die eine Endstellung, also beispielsweise die Arbeitsstellung, verlässt und sich in Richtung der zweiten Endstellung, beispielsweise in der Ruhestellung R bewegt, und außerdem ist über die Stellungsinformation DSI erkennbar, ob eine Schwenkbewegung über einen Schwenkwinkel durchgeführt wurde, der dem Schwenkwinkel zwischen der einen Endstellung und der anderen Endstellung entspricht, so dass über die Stellungsinformation DSI seitens der Schwenksteuerung 342 erkennbar ist, dass die andere Endstellung erreicht wurde.

Nach Erreichen der Endstellung ist noch kein Abschalten des Elektromotors 192 gegeben, da die Schwenkblockiereinrichtung 50 von der Freilaufstellung in die Blockierstellung zu überführen ist.

Hierzu wird seitens der Antriebseinheit 190 das Planetengetriebe 150 weiter angetrieben, bis die Schwenkblockiereinrichtung 50 in der Blockierstellung steht und somit das Schwenkelement 14 in der jeweiligen Endstellung blockiert ist.

Dieser Blockiervorgang ist für die Schwenksteuerung 342 durch das Drehbewegungssignal des Elektromotors 192 erkennbar, so dass erst nach einer ausreichenden Zahl von Umdrehungen und einer Blockierung weiterer Umdrehungen des Elektromotors 192, erkannt über das Drehbewegungssignal DBS ein Abschalten des Elektromotors 192 erfolgt.

In gleicher Weise wird im Schwenkbewegungsmodus SBM der umgekehrte Schwenkvorgang von der erreichten und durch die Blockierstellung blockierten Endstellung in die jeweils andere Endstellung durchgeführt.

Die Schwenksteuerung 342 kann jedoch nicht nur im Schwenkbetriebsmodus SBM sondern auch in einem Haltebetriebsmodus HBM betrieben werden.

In diesem Haltebetriebsmodus HBM detektiert die Schwenksteuerung 342 ständig über die Stellungsinformation DSI des Sensorsystems 330 ob das Schwenkelement 14 mit dem Kugelhals 10 im Begriff ist, die jeweilige Endstellung zu verlassen.

Wird eine geringfügige Bewegung über die Stellungsinformation DSI erkannt, so steuert die Schwenksteuerung 342 den Elektromotor 192 der Antriebseinheit 190 derart an, dass dieser wiederum die Schwenkblockiereinrichtung 50 in Richtung ihrer Blockierstellung antreibt und somit das durch Spiel der Schwenkblockiereinrichtung 50 mögliche Herausbewegen des Schwenkelements 14 mit dem Kugelhals 10 unterbunden und diesem Spiel entgegengewirkt wird.

Dabei ist die Winkelauflösung der Stellungsinformation DSI so groß, dass auch eine geringfügige Bewegung des Schwenkelements 14 mit dem Kugelhals 10 zurück in die jeweilige Endstellung erkannt wird und außerdem über das Drehbewegungssignal DBS seitens der Schwenksteuerung 342 erkannt wird, dass der Elektromotor 192 mit mehreren Umdrehungen seinerseits die Schwenkblockiereinrichtung 50 angetrieben hat, um diese wiederum in eine im Wesentlichen spielfreie Blockierstellung zu überführen, so dass das Schwenkelement 14 mit dem Kugelhals 10 wiederum die jeweilige Endstellung erreicht und in dieser spielfrei verbleibt.

Die Überwachung einer der Endstellungen durch die Auswerteeinheit 338 oder die Schwenksteuerung 342 im Hinblick auf ein eingetretenes Spiel kann im einfachsten Fall durch einen festgelegten Grenzwert für die Abweichung der ermittelten Stellungsinformationen DSI in der jeweiligen Endstellung erfolgen.

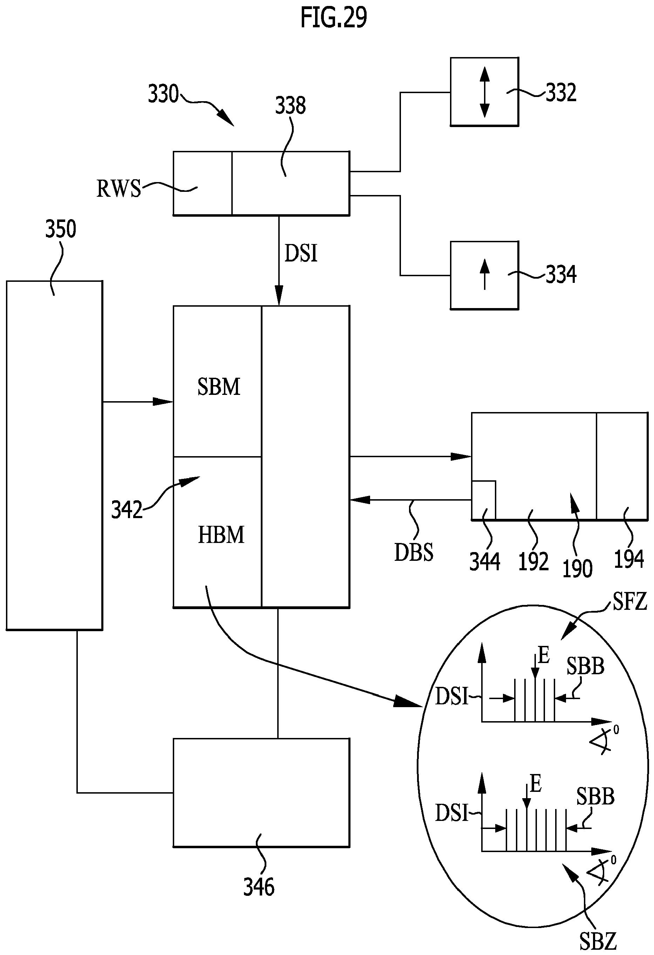

Die Präzision der Erfassung des Spiels in einer der Endstellungen E kann noch verbessert werden, wenn die insbesondere im Fahrbetrieb über der Zeitachse auftretenden Variationen der ermittelten Stellungsinformationen DSI erfasst und über eine Variationsmusteranalyse ausgewertet werden (Fig. 29).

Beispielsweise wird hierzu basierend auf diesen Variationen relativ zu dem exakten Wert E der jeweiligen Endstellung eine Schwankungsbandbreite SBB ermittelt und die Lage der Schwankungsbandbreite SBB relativ zu dem exakten Wert E analysiert und/oder die Ausdehnung der Schwankungsbandbreite SBB mit einem Referenzwert verglichen, da die Lage der Schwankungsbandbreite in der Endstellung im spielfreien Zustand SFZ ungefähr symmetrisch zum Wert E ist und deren Ausdehnung im spielfreien Zustand SFZ geringer ist als in einem spielbehafteten Zustand SBZ, in dem außerdem noch die Lage der Schwankungsbandbreite SBB asymmetrisch zum Wert E ist.

Insbesondere lässt sich eine Variationsmusteranalyse auch durch einen Vergleich mit einem als Referenz gespeicherten Variationsmuster durchführen.

Bei dem dritten Ausführungsbeispiel sind insbesondere dann, wenn der erste Sensor 332 einen möglichst großen Abstand von der Schwenkachse 22 aufweist, insbesondere nahe des Kugelansatzes 17 angeordnet ist, aufgrund der Elastizität des Kugelhalses 10, die Variationen der Stellungsinformationen signifikanter, so dass die Variationsmusteranalyse in der Lage ist, bereits ein geringes Spiel zu erkennen.

Der erste Sensor 332 des dritten Ausführungsbeispiels kann aber auch als Beschleunigungssensor eingesetzt werden, da dieser bei einer Schwenkbewegung um die Schwenkachse 22 Beschleunigungen in seiner XZ-Ebene detektiert, und die dabei entstehenden Beschleunigungssignale können allein oder ergänzend zu der Neigungssignalen des ersten Sensors 332 zur Bestimmung der Stellungsinformationen durch die Auswerteeinheit 338 eingesetzt werden.

Ferner kann der zweite Sensor 334 zur Erfassung von Längsbeschleunigungen in der X-Richtung des Fahrzeugs und Querbeschleunigungen in der Y-Richtung des Fahrzeugs sowie von Vertikalbeschleunigungen in der Z-Richtung des Fahrzeugs eingesetzt werden, um beispielsweise im Fahrbetrieb Fahrdynamikinformationen zu erhalten.

Wie beispielhaft in Fig. 29 dargestellt, ist es bei diesem Ausführungsbeispiel vorteilhafterweise möglich, die Stellungsinformationen DSI dahingehend auszuwerten, dass eine Visualisierung der Lage des Kugelhalses 10 relativ zur Schwenklagereinheit 20 mittels einer Visualisierungseinheit 346 erfolgen kann, so dass eine Bedienungsperson die Bewegungen des Kugelhalses von der Arbeitsstellung A in die Ruhestellung R oder umgekehrt verfolgen kann.

Außerdem können auf der Visualisierungseinheit 346 vorteilhafterweise auch Betriebsmodi und/oder Betriebszustände und/oder Störungen der Ablaufsteuerung 350 und/oder der Schwenksteuerung 342, und/oder der Gesamtantriebseinheit 190, sowie der Schwenkblockiereinrichtung 50 angezeigt werden.

Dies ist insbesondere auch dann vorteilhaft, wenn Störungen in dem Bewegungsablauf auftreten, so dass eine Bedienungsperson die Art der Störung erfassen kann.

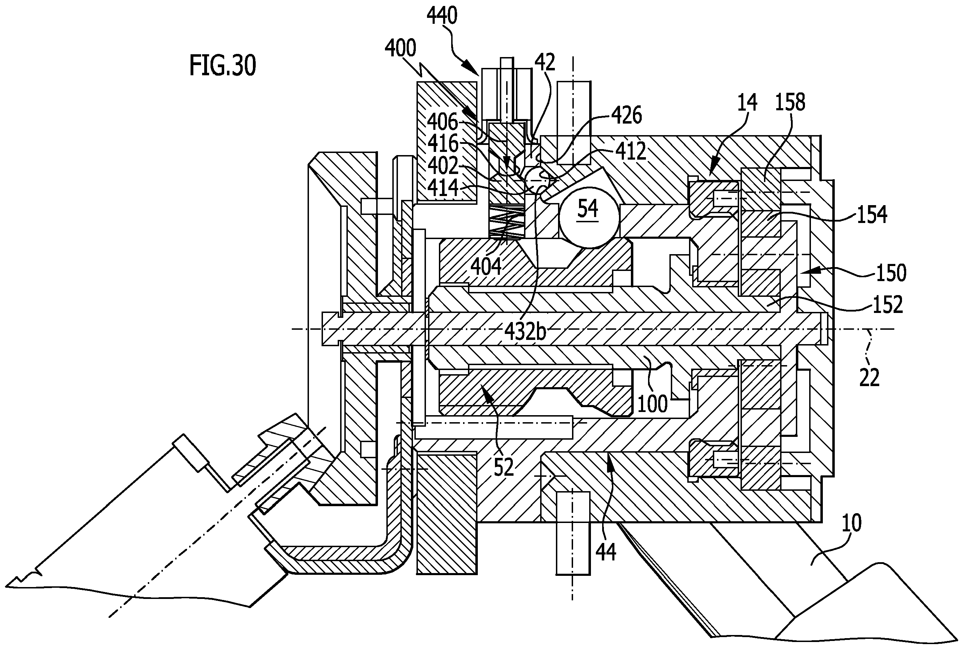

Bei einem vierten Ausführungsbeispiel, dargestellt in den Fig. 30 bis 34 sind diejenigen Teile, die mit denen der voranstehenden Ausführungsbeispiele identisch sind, mit denselben Bezugszeichen versehen, so dass hinsichtlich der Beschreibung derselben vollinhaltlich auf die Ausführungen zu diesen Ausführungsbeispielen Bezug genommen wird.

Im Gegensatz zum dritten Ausführungsbeispiel ist bei dem vierten Ausführungsbeispiel eine einzige Hemmvorrichtung 400 vorgesehen, die die Funktion der ersten Hemmvorrichtung 200 und der zweiten Hemmvorrichtung 240 ersetzt.

Die Hemmvorrichtung 400 umfasst dabei einen Betätigungskörper 402, welcher in einer Führungsaufnahme 404 der Führungshülse 44, in diesem Fall des Flansches 42 der Führungshülse 44, in einer Führungsrichtung 406, die vorzugsweise ebenfalls radial zur Schwenkachse 22 verläuft, bewegbar ist und mit einer äußeren Kulissenbahn 412, die am Schwenkelement 14 angeordnet ist, unter Vermittlung eines Blockierkörpers 414 zusammenwirkt, welcher mittels einer Hilfskulisse 416 an dem Betätigungskörper 402 bewegbar ist.

Die äußere Kulissenbahn 412 ist an einer dem Flansch 42 zugewandten Stirnfläche 426 des Schwenkelements 14 vorgesehen und umfasst eine durch die Stirnfläche 426 gebildete Gleitfläche 430 sowie in Azimutalrichtung beiderseits dieser Gleitfläche 430 liegende und vom Flansch 42 weg, sich in den Schwenkelement hinein erstreckende Vertiefungen 432a und 432b.

Der Betätigungskörper 402 ist durch eine Hemmantriebseinheit 440, beispielsweise umfassend einen Betätigungsmagnet und ein diesem entgegenwirkendes federelastisches Element 444, bewegbar und zwar in eine in Fig. 30 dargestellte Blockierstellung, in welcher der Blockierkörper 414 durch die Hilfskulisse am Betätigungskörper 402 in Eingriff mit einer der Vertiefungen 432a, 432b steht und eine Schwenkbewegung des Schwenkelements 14 um die Schwenkachse 22 blockiert, wobei die Blockierstellung durch eine den Betätigungskörper 402 beaufschlagendes federelastisches Element 444 aufrechterhalten wird.

Eine Ansteuerung des Betätigungsmagneten 422 bewegt den Betätigungskörper 402 und somit auch den Blockierkörper 414 in die Lösestellung in welcher die Hemmvorrichtung 400 eine Schwenkbewegung um die Schwenkachse zulässt.

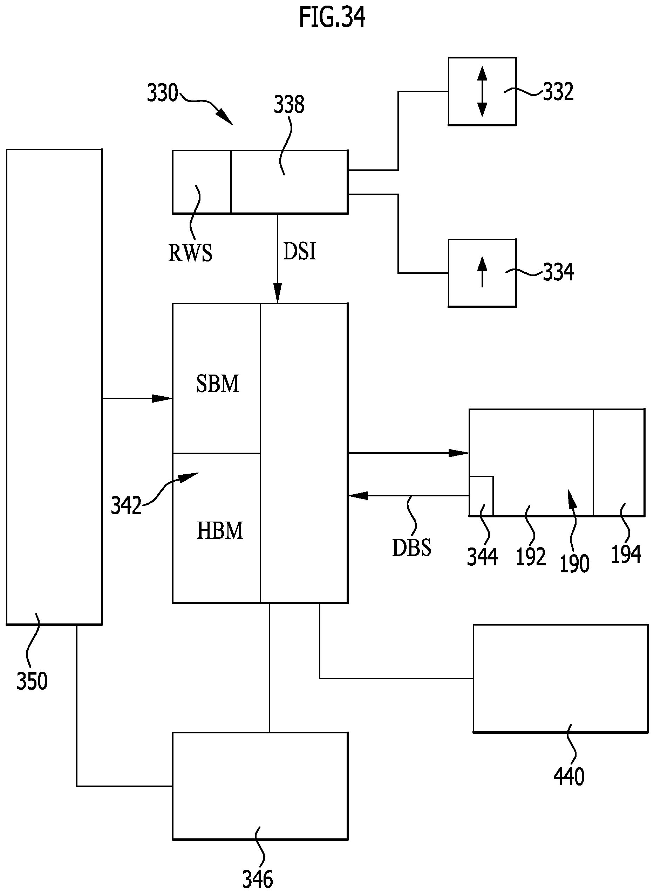

Auch das vierte Ausführungsbeispiel umfasst das im Zusammenhang mit dem dritten Ausführungsbeispiel beschriebene Sensorsystem 330 und die Schwenksteuerung 342 zur Steuerung der Gesamtantriebseinheit 190, mit der Ablaufsteuerung 350, wie in Fig. 34 dargestellt, wobei die Schwenksteuerung 342 noch zusätzlich in der Lage ist die Hemmantriebseinheit 440 anzusteuern.

Die Hemmvorrichtung 400 funktioniert nun, wie in den Fig. 30 bis 33 dargestellt, so, dass bei in Arbeitsstellung stehendem Kugelhals 10 der Betätigungskörper 402 in der ersten Schwenkblockierstellung des Betätigungskörpers 52 durch das federelastische Element 444 in der Blockierstellung steht, und in dieser Stellung bewirkt die Hilfskulisse 416, dass der Blockierkörper 414 in die Vertiefung 432b der äußeren Kulissenbahn 412 eintaucht und somit eine Schwenkbewegung des Schwenkelements 14 blockiert (Fig. 30).

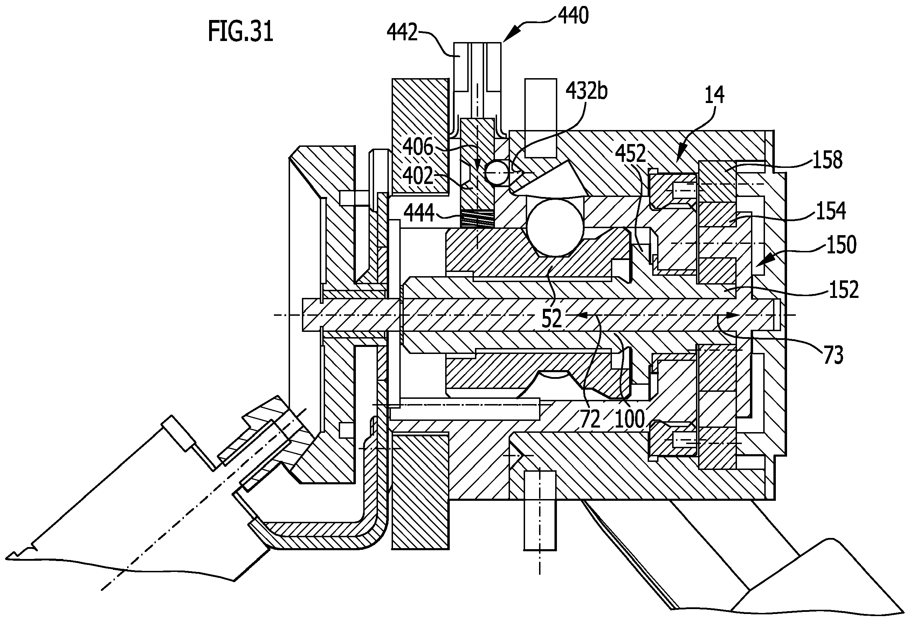

Wird nun, gesteuert durch die Schwenksteuerung 342 und angetrieben durch die Gesamtantriebseinheit 190, der Betätigungskörper 52 in die Freilaufstellung bewegt, wie in Fig. 31 dargestellt, so wird von der Schwenksteuerung 342 die Hemmantriebseinheit 440 so angesteuert, dass der Betätigungskörper 402 in die Lösestellung übergeht und somit durch die Hilfskulisse 416 und den Blockierkörper 414 eine Freigabe des Schwenkelements 14 erfolgt.

In dieser Stellung hat nun das Schwenkelement 14 die Möglichkeit, sich um die Schwenkachse 22 zu drehen, da weder die Drehblockierkörper 54 noch der Blockierkörper 414 die Drehbewegung behindern.

Durch einen Anschlagflansch 452 wird in der Freilaufstellung des Betätigungskörpers 52 dessen weitere Bewegung in Richtung 73 gehemmt, was dazu führt, dass eine Hemmung der Drehbewegung der Gewindespindel 100 eintritt und somit eine Hemmung der Drehbewegung des Sonnenrads 152, so dass dadurch das Planetengetriebe 150, weiter angetrieben durch die Gesamtantriebseinheit 190, aufgrund der Hemmung des Sonnenrads 152 einen Drehantrieb des Hohlrades 158 durch die umlaufenden Planetenräder 154 bewirkt. Ein Verschwenken des Schwenkelements 14 hat nun zur Folge, dass sich die Vertiefung 432b von ihrer dem Blockierkörper 414 gegenüberliegenden Position wegbewegt und nunmehr dem Blockierkörper 414 die Gleitfläche 430 gegenüberliegt, so dass der Blockierkörper 414 seinerseits mit der Hilfskulisse 416 zusammenwirkt und dadurch eine Bewegung des Betätigungskörpers 402 in Richtung von dem Betätigungskörper 52 weg blockiert.

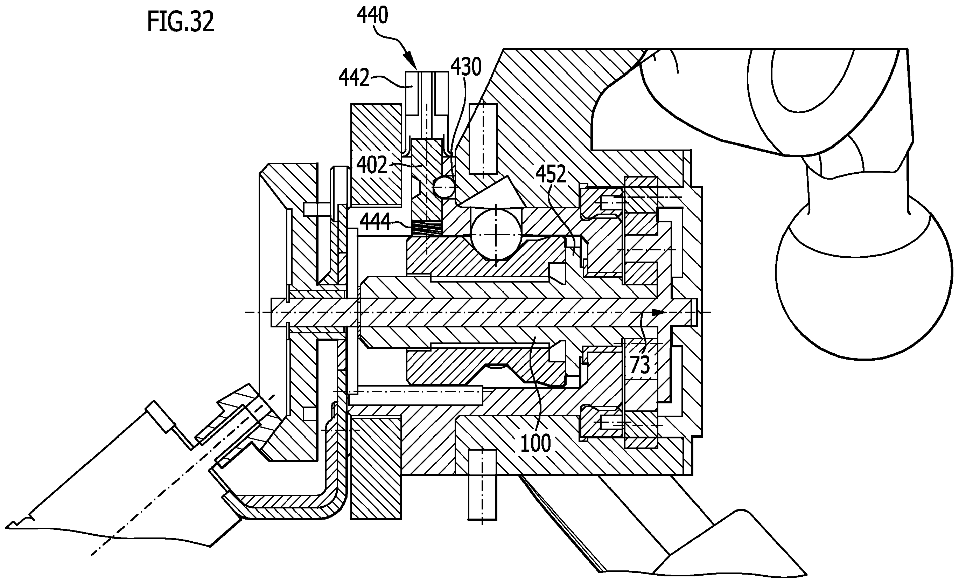

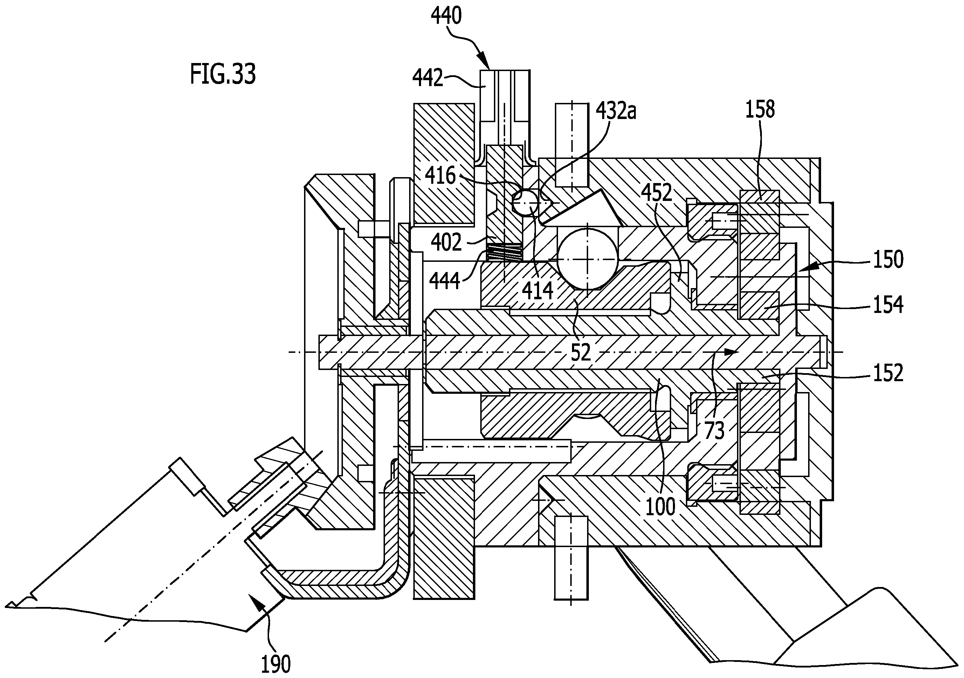

Dieser Zustand des Betätigungskörpers 402, dargestellt in Fig. 32, wird so lange aufrecht erhalten, bis die Ruhestellung R erreicht wird, in welcher dem Blockierkörper 414 der Vertiefung 432a gegenüberliegt (Fig. 33) und durch die Wirkung des federelastischen Elements 444 in die Vertiefung 432a eingreift und die Schwenkbewegung blockiert.

Ferner wird die Schwenkbewegung des Schwenkelements 14 in der Ruhestellung durch einen zeichnerisch nicht dargestellten Anschlag beendet.

Bei diesem vierten Ausführungsbeispiel ist es möglich, das Schwenkelement 14 nur mittels des Blockierkörpers 414 in der Ruhestellung R festzulegen und für eine Schwenkbewegung von der Ruhestellung R in die Arbeitsstellung A die Blockierung der Schwenkbewegung durch Ansteuern der Hemmantriebseinheit 440 aufzuheben, und dann mittels der Gesamtantriebs 190 das Schwenkelement 14 in Richtung der Arbeitsstellung A zu verschwenken.

Alternativ dazu besteht auch die Möglichkeit, das Schwenkelement in der Ruhestellung R durch Bewegen des Betätigungskörpers 52 in die erste Drehblockierstellung durch Umkehr der Drehrichtung der Gesamtantriebseinheit 190 mit den Drehblockierkörpern 54 festzulegen.

Auch beim vierten Ausführungsbeispiel wird die jeweilige Lage des Schwenkelements 14 und des Kugelhalses 10 durch das Sensorsystem 330 erfasst und zusätzlich lässt sich noch über das Drehbewegungssignal des Elektromotors 192 der Gesamtantriebseinheit 190 erfassen, inwieweit in der jeweiligen Endstellung ein Antreiben der Schwenkblockiereinrichtung 50 erfolgt.

Wie beispielhaft in Fig. 34 dargestellt ist es bei diesem vierten Ausführungsbeispiel vorteilhafterweise möglich, die Stellungsinformationen dahingehend auszuwerten, dass eine Visualisierung der Lage des Kugelhalses 10 relativ zur Schwenklagereinheit 20 mittels einer Visualisierungseinheit 346 erfolgen kann, so dass eine Bedienungsperson die Bewegung des Kugelhalses von der Arbeitsstellung A in die Ruhestellung R oder umgekehrt verfolgen kann.

Außerdem können auf der Visualisierungseinheit 346 vorteilhafterweise auch Betriebsmodi und/oder Betriebszustände und/oder Störungen der Ablaufsteuerung 140 und/oder der Schwenksteuerung 350, und/oder der Gesamtantriebseinheit 190, und/oder der Hemmantriebseinheit 440, sowie der Schwenkblockiereinrichtung 50 angezeigt werden.

Dies ist insbesondere auch dann vorteilhaft, wenn Störungen in dem Bewegungsablauf auftreten, so dass eine Bedienungsperson die Art der Störung erfassen kann.

## Patentansprüche

1. Anhängekupplung (AK) umfassend eine fahrzeugfest an einem Heckbereich einer Fahrzeugkarosserie montierbare Schwenklagereinheit (20) und ein an der Schwenklagereinheit (20) um mindestens eine Schwenkachse (22) verschwenkbar gelagertes Schwenkelement (14), mit welchem ein eine Kupplungskugel (18) tragender Kugelhals (10) fest verbunden ist, der durch das Verschwenken des Schwenkelements (14) um die mindestens eine Schwenkachse (22) relativ zur Schwenklagereinheit (20) zwischen zwei Endstellungen verschwenkbar ist, von denen eine eine Arbeitsstellung (A) ist, in welcher der Kugelhals (10) sich im Wesentlichen in einer vertikalen Längsmittelebene (LM) der Anhängekupplung (AK) erstreckt, die insbesondere im an der Fahrzeugkarosserie montierten Zustand mit der vertikalen Längsmittelebene (LM) der Fahrzeugkarosserie zusammenfällt, und von denen eine andere eine Ruhestellung (R) ist, in welcher sich der Kugelhals (10) quer zu der vertikalen Längsmittelebene (LM) erstreckt, **dadurch gekennzeichnet, dass** zur Erfassung mindestens einer Lage des Schwenkelements (14) relativ zur Schwenklagereinheit (20) bezüglich der mindestens einen Schwenkachse (22) ein Sensorsystem (130, 330) vorgesehen ist, welches die Lagen des Schwenkelements (14) relativ zu der fahrzeugfesten Schwenklagereinheit (20) erfasst und eine für die jeweilige Lage des Schwenkelements (14) repräsentative Stellungsinformation (DSI) erzeugt.

2. Anhängekupplung nach Anspruch 1, **dadurch gekennzeichnet, dass** das Sensorsystem (130, 330) eine Auswerteeinheit (128, 138) umfasst, welche die von der Sensoreinheit (130, 330) erfassten Lagen des Schwenkelements (14) mit Referenzlagen vergleicht und daraus die Stellungsinformationen (DSI) für das Schwenkelement (14) ermittelt, dass insbesondere die Auswerteeinheit (128, 138) die die Arbeitsstellung (A) und die Ruhestellung (R) des Schwenkelements (14) eindeutig anzeigenden Stellungsinformationen (DSI) erzeugt, und dass insbesondere die Auswerteeinheit (128, 138) die die zwischen den Endstellungen liegenden Zwischenstellungen des Schwenkelements (14) eindeutig anzeigenden Stellungsinformationen (DSI) erzeugt.

3. Anhängekupplung nach einem der voranstehenden Ansprüche, **dadurch gekennzeichnet, dass** die Anhängekupplung (AK) mindestens eine motorische Antriebseinheit (110, 190) für die Ausführung der Schwenkbewegung und eine mit der Auswerteeinheit (128, 138) zusammenwirkende und die Stellungsinformation (DSI) heranziehende Schwenksteuerung (132, 342) zum Ansteuern der mindestens einen Antriebseinheit (110, 190) umfasst und dass die Schwenksteuerung (128, 138) unter Berücksichtigung der Stellungsinformationen (DSI) die Antriebseinheit (110, 190) steuert, dass insbesondere die Schwenksteuerung (132, 342) einen Schwenkbetriebsmodus (SBM) aufweist, in welchem ein Verschwenken des Schwenkelements (14) von einer der Endstellungen zur anderen der Endstellungen erfolgt, dass insbesondere die Schwenksteuerung (132, 342) im Schwenkbetriebsmodus (SBM) einen die Schwenkbewegung antreibenden Antriebsmotor (122) der mindestens einen Antriebseinheit (120) bei Erreichen der jeweiligen Endstellung als Abschluss eines Einfahrvorgangs in diese Endstellung abschaltet.

4. Anhängekupplung nach einem der voranstehenden Ansprüche, **dadurch gekennzeichnet, dass** die Schwenksteuerung (342) durch Vergleich der Stellungsinformationen (DSI) des Schwenkelements (14) mit einem Drehbewegungssignal (DBS) des Antriebsmotors (192) der mindestens einen Antriebseinheit (190) die Schwenkbewegung und/oder eine Blockierung oder Deblockierung der Schwenkbewegung überwacht, dass insbesondere die Schwenksteuerung (342) durch Vergleich der Stellungsinformationen (DSI) des Schwenkelements (14) mit dem Drehbewegungssignal (DBS) des Antriebsmotors (192) eine Bewegungsrelation ermittelt und mit abgespeicherten Referenzwerten für die Bewegungsrelation vergleicht, dass insbesondere die Schwenksteuerung (342) bei einem Abweichen von der ermittelten Bewegungsrelation von der vorgegebenen Bewegungsrelation ein Störungssignal erzeugt.

5. Anhängekupplung nach Anspruch 3 oder 4, **dadurch gekennzeichnet, dass** die Schwenksteuerung (132, 342) in einem Haltebetriebsmodus (HBM) betreibbar ist, in welchem die jeweilige Endstellung, insbesondere die Arbeitsstellung (A) oder die Ruhestellung (R), des Schwenkelements (14) aufrechterhalten mittels der Schwenksteuerung (132, 342) wird, dass insbesondere die Schwenksteuerung (132) bei Erhalt der Stellungsinformation (DSI), dass die jeweilige Endstellung verlassen wurde, die Antriebseinheit (190) im Sinne eines Verschwenkens in die jeweilige soeben verlassene Endstellung ansteuert.

6. Anhängekupplung nach einem der voranstehenden Ansprüche, **dadurch gekennzeichnet, dass** die Anhängekupplung (AK) eine Schwenkblockiereinrichtung (50) umfasst, dass die Schwenkblockiereinrichtung (50) durch eine Antriebseinheit (110) von einer Blockierstellung in eine Freilaufstellung und umgekehrt bewegbar ist und dass die mit der Auswerteeinheit (128, 338) zusammenwirkende und die Stellungsinformationen (DSI) heranziehende Schwenksteuerung (132, 342) zur Ansteuerung der Antriebseinheit (110, 190) unter Berücksichtigung der Stellungsinformationen (DSI) vorgesehen ist, dass insbesondere die Schwenksteuerung (132, 342) in einem Schwenkbetriebsmodus (SBM) die Antriebseinheit (110, 190) so ansteuert, dass die Schwenkblockiereinrichtung (50) von der Freilaufstellung in die Blockierstellung dann übergeht, wenn die jeweilige Endstellung als Abschluss eines Einfahrvorgangs in diese Endstellung erreicht wird.

7. Anhängekupplung nach einem der voranstehenden Ansprüche, **dadurch gekennzeichnet, dass** die Schwenksteuerung (132, 342) in einem Schwenkbetriebsmodus (SBM) die Schwenkblockiereinrichtung (50) so lange in der Freilaufstellung hält, bis das Schwenkelement (14) eine der Endstellungen erreicht hat.

8. Anhängekupplung nach Anspruch 6 oder 7, **dadurch gekennzeichnet, dass** die Schwenksteuerung (132, 342) in einem Haltebetriebsmodus (HBM) bei Erhalt der Stellungsinformation (DSI), dass in der jeweiligen Endstellung ein Spiel vorliegt, die Antriebseinheit (110, 190) für die Schwenkblockiereinrichtung (50) derart ansteuert, dass die Schwenkblockiereinrichtung (50) in Richtung ihrer Blockierstellung in der jeweiligen Endstellung angetrieben wird.

9. Anhängekupplung nach einem der Ansprüche 1 bis 6, **dadurch gekennzeichnet, dass** die Anhängekupplung eine Schwenkblockiereinrichtung (50') zur Fixierung des Kugelhalses (10) in den Endstellungen (A, R) umfasst und dass die Schwenkblockiereinrichtung (50') durch eine Antriebseinheit (110) von einer Blockierstellung in eine Freigabestellung und von der Freigabestellung in eine Blockierbereitschaftsstellung überführbar ist und dass die mit der Auswerteeinheit (338) zusammenwirkende und die Stellungsinformationen (SI) heranziehende Schwenksteuerung (132) zur Ansteuerung der Antriebseinheit (110) unter Berücksichtigung der Stellungsinformationen (SI) vorgesehen ist, dass insbesondere die Schwenksteuerung (342) in einem Bewegungsbetriebsmodus während der Bewegung des Kugelhalses (10) zwischen den Endstellungen (A, R) die Schwenkblockiereinrichtung (50') in die Blockierbereitschaftsstellung bewegt, aus welcher die Schwenkblockiereinrichtung (50) selbsttätig in die Blockierstellung übergeht.

10. Anhängekupplung nach einem der voranstehenden Ansprüche, **dadurch gekennzeichnet, dass** die Schwenksteuerung (342) eine Hemmvorrichtung (400) der Schwenkblockiereinrichtung (50) ansteuert.

11. Anhängekupplung nach einem der voranstehenden Ansprüche, **dadurch gekennzeichnet, dass** das Sensorsystem (130) einen an der Schwenklagereinheit (20) gehaltenen oder mit dem Schwenkelement (14) oder dem Kugelhals (10) mitverschwenkbaren Sensorkopf (124) aufweist, der eine mit dem Schwenkelement (14) oder dem Kugelhals (10) mitschwenkbare beziehungsweise an der Schwenklagereinheit (20) fest angeordnete Positionsstruktur (126) abtastet, dass insbesondere die Positionsstruktur (126) sich längs eines um die mindestens eine Schwenkachse (22) verlaufenden Kreisbogensegments erstreckt, dass insbesondere die Positionsstruktur (126) eine lokal begrenzte Struktur ist, dass insbesondere die Positionsstruktur (126) eine fortlaufende Struktur ist, dass insbesondere die fortlaufende Struktur (126) von dem Sensorkopf (124) bei der Bewegung des Schwenkelements (14) von der einen Endstellung bis zur anderen Endstellung erfasst wird, dass insbesondere die Positionsstruktur (126) als magnetfeldbeeinflussende Struktur ausgebildet ist, und der Sensorkopf (124) Veränderungen eines magnetischen Feldes detektiert.

12. Anhängekupplung nach einem der Ansprüche 1 bis 10, **dadurch gekennzeichnet, dass** das Sensorsystem (330) einen mit dem Schwenkelement (14) oder dem Kugelhals (10) mitschwenkbar angeordneten ersten Sensor (332) und eine mit dem ersten Sensor (332) verbundene Auswerteeinheit (338) umfasst, welche zur Bestimmung der Lage des Schwenkelements (14) oder des Kugelhalses (10) Sensorsignale des ersten Sensors (332) mit der jeweiligen Lage zugeordneten Referenzwerten vergleicht und dadurch die Stellungsinformationen (DSI) für das Schwenkelement (14) erzeugt.

13. Anhängekupplung nach einem der Ansprüche 1 bis 10, **dadurch gekennzeichnet, dass** das Sensorsystem (330) einen ersten, mit dem Schwenkelement (14) oder dem Kugelhals (10) mitschwenkbar angeordneten Sensor (332) und einen zweiten an der Schwenklagereinheit (20) fest angeordneten Sensor (334) umfasst und dass das Sensorsystem (330) eine mit dem ersten Sensor (332) und dem zweiten Sensor (334) verbundene Auswerteeinheit (338) umfasst, die Differenzwerte der Sensoren (332, 334) erfasst und zur Bestimmung der Lage des Schwenkelements (14) mit abgespeicherten, der jeweiligen Lage zugeordneten Referenzwerten für die Differenzwerte vergleicht und dadurch die Stellungsinformation (DSI) für das Schwenkelement (14) erzeugt.

14. Anhängekupplung nach Anspruch 12 oder 13, **dadurch gekennzeichnet, dass** der erste Sensor (332) und der zweite Sensor (334) Neigungssensoren sind, dass insbesondere der erste Sensor (332) und der zweite Sensor (334) als Neigungssensoren betreibbare, Bewegungen im Raum detektierende Sensoren, beispielsweise Beschleunigungssensoren, sind, dass insbesondere der erste und/oder der zweite Sensor (332, 334) Neigungen um mindestens eine Neigungsachse erfassen, dass insbesondere die Sensoren (332, 334) Neigungswerte (N1, N2) in Bezug auf eine Schwerkraftrichtung (SR) als Referenz erfassen.

15. Anhängekupplung nach einem der Ansprüche 12 bis 14, **dadurch gekennzeichnet, dass** die Auswerteeinheit (338) zur Bestimmung der Stellungsinformationen des Schwenkelements (14) Neigungsdifferenzwerte (D) erfasst, die aus Neigungswerten (N1, N2) als Messwerte der Sensoren (332, 334) gebildet sind, dass insbesondere die Auswerteeinheit (338) in mindestens einer der Endstellungen eine Neigungsdifferenz zwischen einer Neigung des ersten Sensors (332) und einer Neigung des zweiten Sensors (334) erfasst, dass insbesondere zur Bestimmung der Stellungsinformationen (DSF) des Schwenkelements (14) basierend auf der ermittelten Neigungsdifferenz der Verlauf der Neigungswerte des ersten Sensors (332) bei einer Schwenkbewegung von einer Endstellung zur anderen Endstellung ermittelt wird.

16. Anhängekupplung nach einem der Ansprüche 12 bis 15, **dadurch gekennzeichnet, dass** bei dem ersten Sensor (332) seine für die Neigungserfassung relevante Z-Achse (Z) und seine weitere Achse (Y) seines kartesischen Koordinatensystems in einer senkrecht zur Schwenkachse (22) verlaufenden Schwenkebene (SE) liegen, dass insbesondere bei dem zweiten Sensor (334) seine für die Neigungserfassung relevante Z-Achse (Z) und seine dem ersten Sensor entsprechende weitere Achse (Y) seines kartesischen Koordinatensystems parallel zur Schwenkebene (SE) ausgerichtet sind.

17. Anhängekupplung nach einem der voranstehenden Ansprüche 12 bis 16, **dadurch gekennzeichnet, dass** die Auswerteeinheit (338) mit mindestens einem der Sensoren (332, 334), insbesondere mit dem ersten Sensor (332), Beschleunigungen erfasst, dass insbesondere die Auswerteeinheit (338) mit beiden Sensoren (332, 334) Beschleunigungen erfasst, dass insbesondere die Auswerteeinheit (338) mit dem ersten Sensor (332) Beschleunigungen in einer zur Schwenkachse (22) senkrechten Schwenkebene (SE) erfasst.

18. Anhängekupplung nach einem der Ansprüche 3 bis 17, **dadurch gekennzeichnet, dass** der Schwenksteuerung (132, 342) eine Visualisierungseinheit (136, 346) zur Anzeige von Betriebsmodi und/oder Betriebszuständen und/oder Störungen zugeordnet ist.
